# EUROPEAN PATENT SPECIFICATION

(11) **EP 2 348 423 B1**
(45) Date of publication and mention of the grant of the patent: **09.05.2018**
(21) Application number: 10185457.8
(22) Date of filing: 28.08.2001
(51) Int. Cl.: G06F 17/30, H04L 29/08, H04M 1/725, H04W 4/02, G01S 5/02, H04W 4/20

(54) **USER TERMINAL CAPABLE OF PROCESSING GEOGRAPHICAL LOCATION DATA**
BENUTHERENDGERÄT ZUR VERARBEITUNG VON GEOGRAFISCHEN STANDORTDATEN
TERMINAL UTILISATEUR CAPABLE DE TRAITER DES DONNÉES DE LOCALISATION GÉOGRAPHIQUE

(30) Priority: 25.08.2000 GB 0021067
(43) Date of publication of application: 27.07.2011
(62) Divisional of application: 01963149.8
(73) Proprietor: Qualcomm Incorporated, San Diego, CA 92121 (US)
(72) Inventor: Spaargaren, Jerome, London, Greater London WC1V 6HU (GB); Hermele, Daniel Stephen, Welwyn Garden City, Herts AL7 1HQ (GB)
(74) Representative: McCann, Heather Alison

(56) References cited:
- EP-A- 1 009 137
- WO-A1-00/41090
- DE-A1- 4 435 903
- NL-C2- 1 008 850
- US-A- 6 081 803

## Description

### Field of the Present Invention

The present invention relates to the management and use of geographical location data in data processing devices, in particular telecommunications devices, and the dissemination of geographical location data and the provision of geographical location-based services in data communications networks.

### Background

Conventionally, a user of the Internet with a personal computer (PC) accesses an Internet site by establishing a connection to an Internet Service Provider (ISP) using a browser application running on the PC and by entering or selecting a network resource identifier for the required site. Generally, the network resource identifier is provided in the form of a Uniform Resource Locator (URL) comprising a domain name. The domain name is translated into an Internet Protocol (IP) address for the site by the browser using the domain name service (DNS). Some domain names are translated into different IP addresses corresponding, for example, to different servers on the basis of the identity of the ISP or IP subnet address. Mirror sites are known which provide the same or a similar service to users accessing the Internet through different ISPs or subnets. For example, multiple servers may be provided for a site from which users may download a new software release, each server being responsible for serving users accessing through ISPs in different continents. The user may be accessing the Internet from a notebook PC by connecting to his or her home ISP whilst travelling anywhere in the world, but the server to which his browser will connect will depend on the identity of the home ISP or subnet address.

Recently, users have been provided with access to sites using mobile data processing devices such as wireless application protocol (WAP) -enabled mobile phones, personal digital assistants (PDAs) and pocket PCs. Currently, WAP services and sites are fairly basic since the bandwidth to mobile devices is extremely limited. However, new wireless communications technologies will soon be provided such as the General Packet Radio Service (GPRS) for second generation mobile devices and third generation wireless communication technologies such as the Universal Mobile Telecommunications System (UMTS). These technologies and further generations of wireless communications technologies will provide sufficient bandwidth to make access to the Internet using wireless mobile devices feasible and practical.

The provision of location-based services delivered over the Internet is known. For example, Scoot™ offers a business directory service in which a user specifies search criteria in the form of a business service category or type and a geographical location using one or more Web forms presented on a browser application and submits the criteria as a query to a Web server. In response, the Web server provides a page listing businesses meeting the criteria in terms of business type and geographical location. Contact details such as postal address and telephone numbers are given as well as distances from a point representing the geographical location specified. A map may be displayed of the area in which a selected business is located based on the post code information in the postal addresses. Also, telephone numbers may be transmitted to mobile phones using SMS.

Another example of location-based service provision is the mapping service offered by multimap.com. Multimap.com operate Web and WAP servers that can supply maps and other localised information in response to user queries specifying a geographical location as a post code, well known place name or grid reference. Maps can be embedded into Web pages or WAP cards of third parties for download by users accessing the third party's site. Universal Resource Locator (URL) links can also be embedded into third party's Web pages or WAP cards. The embedded URLs may be downloaded by users accessing the third party's site and selected as hyperlinks. The URLs generally use postal code or place name data to identify the location of the map required.

Microsoft™ Address Book provides a facility for obtaining a map on the basis of postal address information. On activating a button, the map is automatically requested from a predetermined remote Web server which is hardcoded in the application and unalterable by the user. A similar facility is provided in the arrangement described in US-A-5946687, assigned to Lucent Technologies, Inc. In this arrangement, a personal information manager (PIM) program, which stores personal and business contacts, is geo-enabled. The PIM provides a display for selecting a contact from a list of stored contacts and a number of buttons for requesting different geographic services, including a map service, a directions service, a weather service, and a yellow pages service. When the user clicks on one of the buttons, the PIM formats a request, including geographic information from the contacts list in the form of a postal address, a town name or a postal (ZIP) code, to be sent to a geographic information server. The information server retrieves geographic information appropriate to that location, and sends it to the PIM for display.

A drawback of this prior art is that postal address data, town name, and postal code data, particularly in the form entered by a user into a contacts database, is often incomplete and insufficient to correctly resolve to a unique location and, in any case, requires a relatively large amount of databased information and processing resources to resolve. The case is even further complicated when the user wishes to access information relating to locations in different countries, perhaps even from various countries around the world, because of the different postal addressing and coding schemes used in each individual country. Also, the arrangements cannot deal with locations which are not identified by postal addresses.

The provision of location-based services delivered over cellular networks using the Short Message Service (SMS) or Wireless Application Protocol (WAP) is known. For example, the Finnish cellular network operator Sonera™ have a service offering called Sonera Zed™ in which cellular subscribers may obtain location-based content and services using their mobile phones. For example, a cellular subscriber may use his or her mobile phone to view an event guide for a selected category, such as film, and receive details on which local cinemas are screening a selected film at which times, as well as book tickets and pay for them. Another service offered by Sonera is Zed Finder™, a directory service that allows subscribers to find personal or business contact details, such as telephone numbers and postal addresses, via SMS or WAP. A subscriber enters identifying information into his mobile phone, such as name and well-known geographical location name, and submits a search request. In response, an SMS entity or WAP proxy server returns the required contact detail to the mobile phone as an SMS or WAP card.

Mobile phones with built-in GPS receivers are known. Garmin's™ NavTalk™ product, for example, combines an analog cellular phone conforming to the Advanced Mobile Phone Service (AMPS) with a GPS receiver. It is able to obtain positional data via the GPS system to an accuracy of 1-5 metres and velocity accuracy is about 0.1 knots. It is able to transmit the terminal's current location over the cellular network to other Navtalk™ devices using Dual Tone Multiple Frequency (DTMF) codes. The Benefon Locus™, now renamed Track™ is able to transmit its current location using the Short Message Service (SMS) in the format of the Mobile Phone Telematics Protocol (MPTP). Both the Navtalk™ and Benefon Track™ display the location of the sending terminal on a map stored in the memory of the recipient terminal. A problem with both of these types of devices is that they require a similar device, employing the same location-based protocol used for message transmission, for message receipt at the recipient device in order to allow the recipient device to access the location data.

Another example of a location-based service, called TomTom™, is offered by PalmTop Software Ltd. The service is said to allow users of smartphones or PCs to access travel services, such as maps and local services directory information, specific to a current location or a location selected from a favourites list or a history list of locations stored at a Web or WAP server operated by TomTom on behalf of a registered user. According to information made available on their website www.tomtom.com on 25 August 2000, the Web or WAP server may operate a number of modules including modules that keep track of favourite locations and recently visited locations for a user, and can find favourite and recently visited places in any particular area and near any particular location. User settings, favourite locations and other user-dependent information can be managed both from the phone and on the PC, providing the user with one central service that can be accessed wherever the user happens to be, on the move or at home. However, this is an example of a "walled garden" where all the service data and content is provided by a centralised service.

Information relating to the current location of a mobile device may be provided by the mobile network to the subscriber or to third parties. The Global System for Mobile Communications (GSM) and UMTS, for example, will offer location services as described in the European Telecommunications Standards Institute (ETSI) technical specification ETSI TS 122 071, incorporated herein by reference. A similar proposition is provided in the Ericsson Mobile Positioning System (MPS). Location information concerning a mobile device is generally private to the subscriber except for emergency services and various legally required or sanctioned purposes. Access to current location information concerning mobile devices by third parties, such as value added service providers, is generally controlled according to subscription profiles, or privacy settings, and maintained by the network.

Mark-up Languages for describing location related information are known. The Point of Interest Exchange (POIX) language and Navigation Mark-up Language (NVML) are two such languages. A specification of the POIX language is available from the World Wide Web Consortium's website at http://www.w3.or-/TR/poix/. A specification of the NVML language is available from the World Wide Web Consortium's website at http://www.w3.org/TR/NVML. POIX is a language, written in XML, for describing location-related information that is suitable for exchanging it over the Internet, e.g. via e-mail or by embedding in other documents. It is capable to describe not only specific location information, such as latitude and longitude, but also various supplemental information about the target location such as route to the target location and contact information for the target location. The proposal also allows specification of format information such as geodetic datum and angle unit.

NVML is a markup language for describing the navigation information for a variety of mobile information appliances, such as smart phones, PDAs equipped with GPS, and car navigation systems. It is written in XML, and has the capability to describe several types of navigation information such as a route from the current point to a destination point, a way to a shop from the nearest station, transportation courses, sightseeing courses, and tour schedules. This language is able to describe location information as latitude, longitude, address and various additional items. It also has the capability to describe a route to a target location as a list of locations and additional explanations.

A further known markup language for describing location related information is the Geographic Markup Language (GML) as developed by the Open Geographical Information Systems (OpenGIS) Consortium. GML is also written in XML.

EP 1009137 A discloses a method of accessing data that contains location information using a software agent. A request for the determination of data is transmitted from a terminal to a computer of a data communications network. NL1008850C C2 discloses a system having a network of servers and terminals, in which terminal user's identity and location data are used by a service provider to obtain data from a content server. It is an object of the invention to provide a number of improvements in relation to user terminals and systems capable of processing geographic location data and to overcome drawbacks of these known devices and systems.

### Summary of the Invention

Aspects of the invention are set out in the appended claims.

Features and advantages of the various aspects of the present invention include functionality allowing items of location data, in particular but not exclusively spatial coordinate data, to be readily disseminated and used in manners convenient to users of devices and systems arranged in accordance with the invention. Use of spatial coordinate data allows locations to be specified and recognised in a unique and reliable manner, whilst such data can be used to specify and recognise a location on substantially any point of the earth's surface or even locations remote from the earth's surface. Aspects of the invention furthermore allow privacy of location data associated with a user to be maintained in manners convenient to users. Aspects of the invention furthermore allow openness in the use and dissemination of location data. Namely, locations provided by a wide range of different sources may be utilised by wide ranges of users to obtain wide ranges of location-based services. Embodiments of the invention provide "location-smart" data processing devices, including user terminals, capable of providing advanced features and functions relating to the processing of geographic location data.

Further features and advantages of the present invention will become apparent from the following description, given by way of example only, of embodiments of the present invention, made with reference to the accompanying drawings wherein:
Figures 1, 35, 37 and 45 are schematic illustrations of data processing systems arranged in accordance with embodiments of the present invention;
Figure 2 is a schematic diagram of elements of a user terminal arranged in accordance with embodiments of the present invention;
Figure 3 shows spatial coordinate data representations used in embodiments of the invention;
Figures 4 and 5 show user input screens for inputting a location;
Figures 6 and 39 illustrate location data stored used in embodiments of the invention;
Figures 7 to 23 and 34 illustrate features of a graphical user interface provided by a hypermedia browser application arranged in accordance with embodiments of the present invention;
Figures 24 to 26 illustrate features of a graphical user interface provided by an e-mail application arranged in accordance with embodiments of the present invention;
Figures 27 to 31 illustrate features of a graphical user interface provided by a cellular telephone terminal arranged in accordance with embodiments of the present invention;

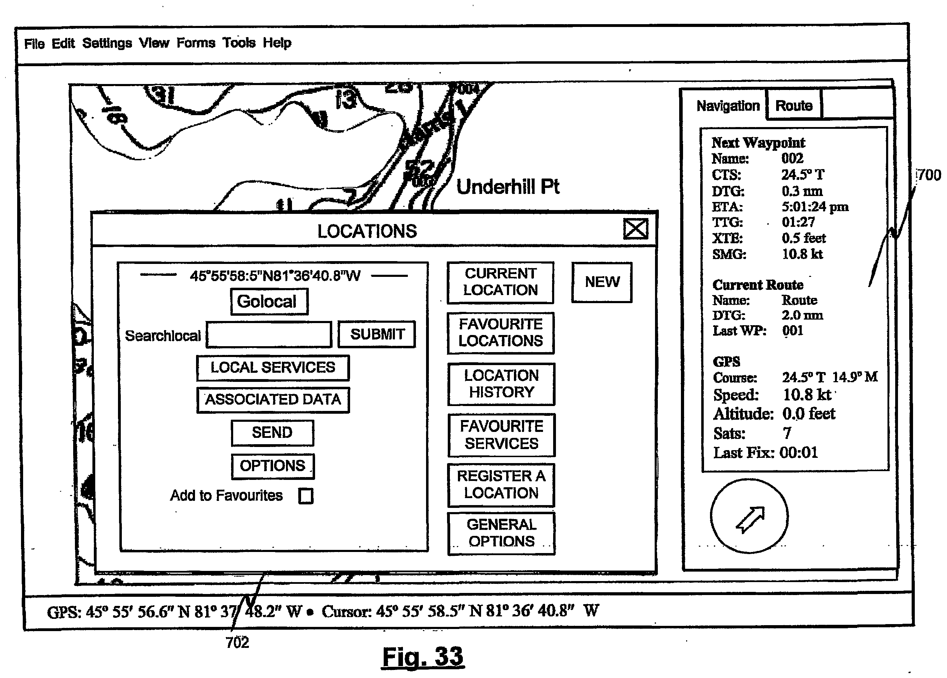

Figures 32 and 33 illustrate features of a graphical user interface provided by a terminal-based navigation application arranged in accordance with embodiments of the present invention;
Figures 36, 38, 40, 41, 42 and 43 illustrate hypermedia content, as displayed on a conventional hypermedia browser application, provided by network services arranged in accordance with embodiments of the present invention; and
Figure 44 is a flow diagram illustrating procedures carried out by data processing devices in accordance with different embodiments of the invention.

### Detailed Description

### Network Access Arrangements

In embodiments of the present invention, users may make use of location and associated data with both "location-smart" user terminals, arranged to manage and process location and associated data in accordance with the present invention, and conventional or "location-dumb" user terminals. "Location-smart" user terminals may be data processing devices of any type, such as fixed PCs, notebooks or laptop computers, handheld computers, PDAs, fixed telephones, mobile phones, fax machines, broadcast/cable/satellite televisions and radios etc. The terminal applications that run on the user terminals may be peer-to-peer, client or server applications and may be capable of communicating in any of a number of communication application modes, such as telephony, video, e-mail, IRQ, SMS, Web or WAP, or transfer modes such as HTTP, WAP, Telnet, Rlogin, FTP etc. Similarly, "location dumb" user terminals may be of any such type and run terminal applications of any such type.

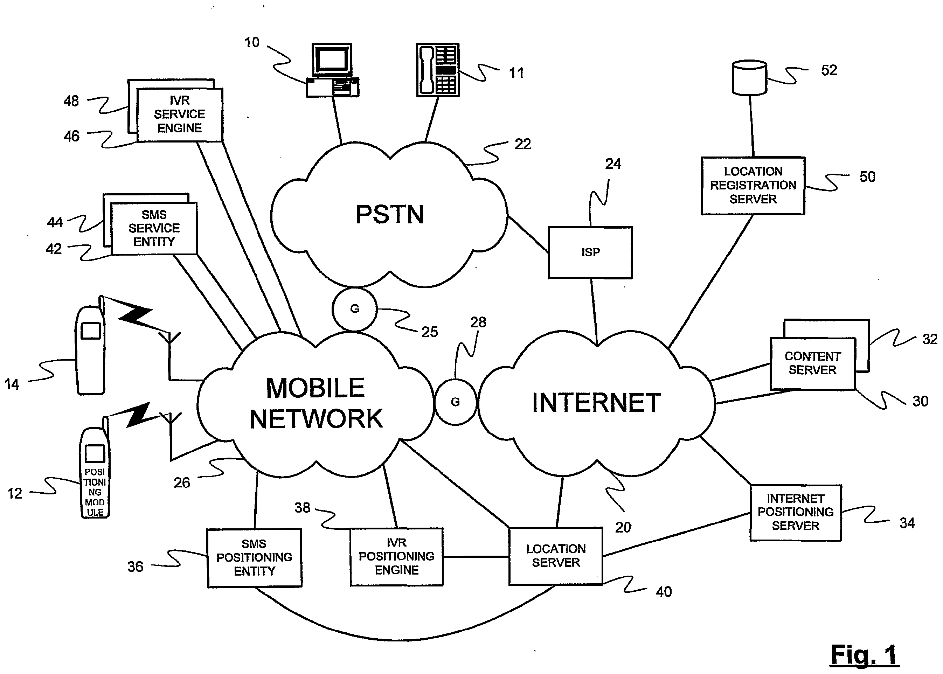

"Location smart" user terminals may store location and associated data in a local data store and utilise geographical location and associated data by means of terminal-side applications as will be described in detail below. Figure 1 schematically illustrates possible arrangements of such user terminals with network access to various service resources and other user terminals. Four exemplary "location-smart" user terminals are shown - a fixed terminal 10, such as a PC or digital television with networking capability, a fixed telephone 11, a mobile terminal 12 able to determine its geographical location with equipment or programs, such as a notebook PC, PDA or mobile phone with an internal or co-located positioning module such as a GPS receiver or on-board triangulation-based location calculation equipment, and a mobile terminal 14, such as a notebook PC, PDA or mobile phone, without internal or co-located locating equipment, but having a positioning software application capable of receiving and processing data received from the mobile network indicating its current position. Fixed terminal 10 is connected to the Internet 20 through a PSTN 22 and ISP 24. Fixed telephone 11 is connected by a voice circuit link and PSTN 22 to other telephones and IVR engines in the various interconnected telecommunications networks. PSTN 22 is connected to a mobile network 26 via a gateway 25. Mobile terminals 12 and 14 are connected to the Internet through mobile network 26 and a gateway 28. Mobile network 26 may be any cellular network such as a GSM or UMTS network. Mobile terminals 12, 14 may be in the form of hand-held devices, or other devices carried by a user. Alternatively, mobile terminals 12, 14 may form part of an on-board vehicle navigational system.

Many methods of geographically locating mobile devices are known or proposed and have varying levels of accuracy. For example, cellular mobile networks maintain a record of the current cell in which a mobile terminal is located, although cells can often be several square miles in area. Location can be determined more accurately using other well-known methods. One such method is to use a global positioning system (GPS) transceiver at the mobile device. Other methods are to use measurements such as signal strength or timing advance in respect of communications between the mobile device and three (or more) base stations (BTSs) of the mobile network to triangulate (or better) the position of the mobile device. The location calculation may be performed either at the mobile station itself or at a node of the network. The location of a mobile device may be determined in three-dimensional as well as two-dimensional coordinates and accuracy levels are estimated to be as good as within 5 or 10 metres in horizontal and vertical axes.

Mobile terminal 12 is able to determine and communicate its location to servers 30 or 32 without assistance from mobile network 26 since it has location-determining capabilities itself. Mobile terminal 14 does not have location-determining capabilities itself. However, mobile network 26 is able to locate mobile terminal 14 using cell registration or triangulation methods such as those described above. Location data is made available via any of the positioning services illustrated, namely in an Internet positioning server 34, Short Message Service (SMS) positioning entity 36 or Interactive Voice Response (IVR) positioning engine 38, which are all authorised location clients of location server 40 of mobile network 26 such that these service provision nodes are capable of obtaining the geographic location of a mobile terminal 14 from location server 40 by providing the server 40 with a suitable identifier for the terminal, such as its directory number or an allotted IP address. Alternatively, location data may be requested and provided to mobile device 14 via other signalling channels available in mobile network 26.

Internet positioning server 34 is capable of taking a mobile terminal identity received in a service request, for example an HTTP GET request, querying location server 40, and transmitting an HTTP response containing the requested location data. SMS positioning entity 36 is capable of the same type of interaction via SMS messages. IVR positioning engine 38 is capable of handling a call received from mobile terminal 14, querying location server using the CLI received in-call, and transmitting the mobile terminal's current location by means of in-call signalling (e.g. DTMF tones) to the mobile terminal 14. Mobile terminal 14 is capable of recognising responses received from these positioning entities as location data and of storing the data as its current position.

Fixed terminals 10 and 11, and indeed mobile terminals 12 and 14, may also obtain location data from Internet positioning server 34 or IVR positioning engine 38 without using the location server 40. The user may, through suitable interactions, specify a location (eg as a postcode or geographical place name) to the positioning entity, and receive the appropriate location data (e.g. global location coordinates) in return once the location has been suitably specified. In the case of IVR positioning engine 38, this interaction may take the form of a DTMF and/or voice interactions, whilst in the case of Internet positioning server 34, client-server request/response interactions such as to be described below may be used.

Embodiments of the invention also include service provision nodes capable of generating location-dependent responses to service request messages received from user terminals. These service provision nodes are automated. Thus, location-based services may be obtained from Internet content servers 30 and 32 (via client-server service request response messaging), SMS service entities 42 (via SMS messaging), 44 and/or IVR service engines 46, 48 (via in-call signalling messager, such as via DTMF tones and/or voice messages) for use in processing user requests. Each of the respective service entities is capable of processing the geographic location data sent by the user terminals and proving a location-based service response. IVR service engines 46 and 48 may be connected directly to PSTN 22 for direct access by user terminals 10 and 11. Geographical location data sent by a user terminal to a service provisioning node may identify the current or fixed location of the user terminal, or other locations stored in the user terminal in the form of location data.

User terminals 10, 12 and 14 may access content and services available at servers 30 and 32 by using suitable hypermedia browser terminal applications and specifying network resource identifiers addresses corresponding to particular content available at servers 30 and 32. For example, servers 30 and 32 may be Web or WAP servers and user terminals 10, 12 and 14 may run Web browser or WAP micro-browser terminal application programs. A Web or WAP server may respond to a terminal request, sent for example in an HTTP or WTP GET request message containing location data and functional data indicating that the service requested is a pizza delivery service, for example, by transmitting a Web page or WAP card or deck containing details of a pizza delivery service local to the location specified in the terminal request.

Similarly, SMS service entities 42, 44 may respond to a terminal request, sent for example in an SMS message containing location data and functional data indicating that the service requested is a taxi finder service, for example, by transmitting an SMS message containing a local taxi firm phone number. Similarly, IVR service engines 46, 48, may provide location-based services, such as local weather reports, in response to receiving DTMF location data generated by the terminal. The particular service which is requested by the user may depend on the number called by the user terminal, and/or in-call selections made by the user, by DTMF tones or voiced indications.

Fixed terminal 10 may also communicate its fixed location, or other stored locations, to servers 30 and 32 when accessing content or services. Furthermore, fixed telephone 11 may communicate its location, or other stored locations, to IVR engines 46, 48 by DTMF signalling during a voice call. The fixed telephone may for example have a button or a menu option for initiating the transmission of a stored location via DTMF.

Thus, all four user terminals may readily obtain automated location-based services or content based on their fixed or current location or based on other locations from one or more of the service provision nodes.

Also connected to the communications system is a location registration server 50, for registering unique location names or location-dependent names, as will be described in further detail below. Server 50 includes a geographical location name store 52 for storing the registration details for the names.

### Terminal Applications for Utilising Location and Associated Data

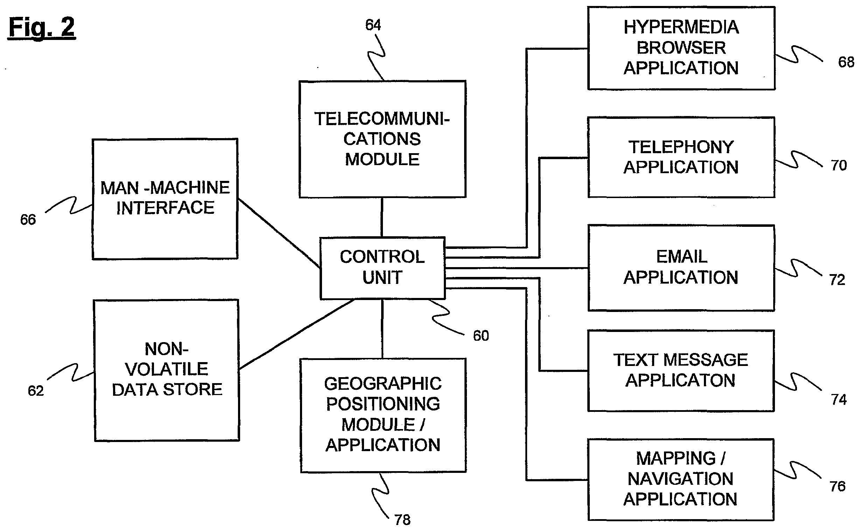

Components of an exemplary user terminal are schematically illustrated in Figure 2. The terminal comprises a control unit 60 coupled to one or more non-volatile data stores, for example flash memory, at least one telecommunications module 64 (in the case of a mobile terminal a radio module for communication with radio base stations in cellular networks), and one or more man-machine interface components 66 (such as a screen or touch screen, a speaker, a keypad, a microphone, a camera). One or more terminal application programs 68-76, are stored in memory on the terminal and will be run upon switching the terminal on. The terminal applications comprise one or more of a hypermedia browser application 68, a telephony application 70, an e-mail application 72, a text message application 74 and/or a mapping/navigation application 76. Each of these types of application is generally well-known and will not be described in detail herein. The applications present information and receive instructions from the user via the man-machine interface 66. Information concerning the status and functions available to the user are presented on the screen (for example, menu options) or through the speaker (for example, ringing tones or keypad presses). Instructions from the user may be given via the touchscreen, keypad or microphone (i.e. voice commands). Based on the instructions received, the terminal may perform internal processes, such as changing the data or settings stored in memory 62, or it may transmit data to and/or receive data from a remote data processing device via the telecommunications module. The remote data processing device may be a service processing node or a terminal device such as a mobile telephone or a fixed telephone.

According to one embodiment of the present invention, conventional terminal applications are adapted to provide extra user functionality. This may be achieved by means of replacing the conventional application software entirely or by means of a plug-in software module which interoperates with the conventional software. Alternatively, the software module may be independent of other applications software running on the user terminal but capable of interoperating with one or more such applications. In overview, the extra functionality provided by the present invention relates to functions that may be performed in respect of location data.

### Geographical Location Data

According to the present invention, geographical location data, and associated data, may be used by data processing devices to perform location-based functions or provide location-based services or content. The data processing devices may be user terminal devices used by users or automated servers, for example. These data processing devices will in general need to store location and associated data and communicate location and associated data with other data processing devices.

A geographical location may be represented in the form of data in many ways. Herein the terms "geographical location" and "location" are intended to encompass all of these, although preferred embodiments exclude various of the possibilities.

Geographical location in different embodiments of the invention may be represented by spatial coordinate data, which are preferably constructed using a global location reference standard, i.e. a standard whereby substantially any location on the surface of the earth may be specified to a selected degree of accuracy. In particular, in preferred embodiments, the location data is derived from a global position reference system and is represented in a form in which a location is specified by at least two coordinates which, together with appropriate zone or datum data, specify a globally unique position on the earth's surface. Three-dimensional geographical location may be represented by combining a two-dimensional data representation and a representation of altitude or height above sea level data (expressed in a standard distance unit such as metres). Spatial coordinate data may include one or more of 1) latitude and longitude co-ordinates; 2) polar or geodetic coordinates; 3) grid references, such as Ordnance Survey (TM) grid references, 4) grid zone references; 5) Universal Transverse Mercator references.

In other embodiments of the invention, geographical location data may include one or more of 6) well-known geographical regional names or codes, such as a country name or codes (e.g., "US", "GB", etc.) or metropolitan and/or country region names (e.g. "Paris, Texas"); 7) postal codes generated by known naming conventions, like post codes or zip codes; and 8) a registered unique geographical location name, in accordance with an embodiment as will be described below.

In one embodiment of the present invention, geographical location is represented by data in the form of a predetermined modification of conventional latitude and longitude co-ordinates, represented in decimal degree format. In this modification, the coordinates are optimised for representation by as few as possible numerical digits (0-9) only (i.e. without negative values and without decimal points), whilst maintaining global uniqueness and a desired amount of accuracy. Thus, terminal applications which receive coordinates from a terminal positioning module, such as a GPS receiver, or a user terminal positioning service provided by a network, in digital degree format, convert the received data to the predetermined modified format before use. The coordinates are preferably normalised and incremented by a predetermined amount. Conventional latitude ranges from -90.0000... to +90.0000, whilst conventional longitude ranges from -180.0000... to +180.0000. For conventional latitude (Lat) and longitude (Long), the following conversion to a modified decimal format (Lat+, Long+) is used:
Lat+=(Lat+90)/180; the "0." is omitted.
Long+=(Long+180)/360; the "0." is omitted.

This format thus provides globally-unique decimal codes which identify geographical locations to a desired degree of accuracy by number strings only. These codes may then be communicated in a large variety of media, e.g. in text (e.g. X=537029809&Y=90997666), data coding (e.g. binary coding), DTMF tones (e.g. ***83698629***73629384***), bar codes, etc. The fact that the codes are optimised and communicable in all these media means increases their value as a means of disseminating location information. In particular, the codes may be readily ported between various different modes of communication, such as e-mail, hypertext, SMS, etc., as will be exemplified below.

In a further embodiment, a geographical location is represented by a single code capable of specifying global location coordinates. The code, referred to herein as a Placecode™, includes latitude and longitude components, and is a variant of the decimal codes described above. Namely, the code is made up of alphanumeric characters, thus allowing a more compact coding. In a preferred embodiment, 35 characters in all, including all 26 standard keyboard letters and numbers 1 to 9 (0 being omitted in order to avoid confusion with the letter 0), and each coordinate component is created by coding the above-described decimal code using the 35 character base. Four characters may be used to specify each coordinate of a location anywhere on the earth's surface to within approximately 8.5 metre accuracy (suitable for the large majority of location-based applications) and the code itself may consist of only 8 characters in total. The latitude component may be placed before the longitude component to create the full code. Alternatively, characters from each component may be placed one after the other, beginning with the most significant characters, such that locations within the same vicinity are readily recognisable by their prefixes. E.g. Placecode G83HL3E1 represents a location in the vicinity of G83HL3MN. In this format, each two character combination represents a square zone on the earth's surface, namely G8 is a square zone of a set of high-level zones (each representing approximately 1/35x1/35 of the earth's surface), 3H a zone within that, L3 a zone within that, and E1 and MN zones (representing a location to an accuracy of approximately 8.5 metres) at the lowest levels.

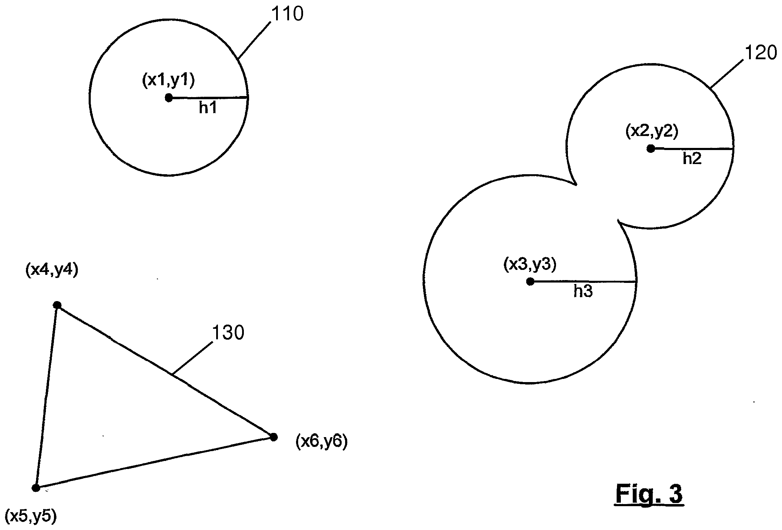

With location coordinate data representations which define points or small zones (such as latitude, longitude co-ordinates; polar or geodetic coordinates; and grid references etc.) it is preferable, but optional, to include range data such as horizontal and vertical range radii (expressed in a standard distance units such as metres). Using latitude and longitude co-ordinates, together with horizontal range radii, (and, optionally, altitude and vertical range radii) it is possible to define a circular (or vertical cylindrical) region describing a spatial extent of a characteristic of the location specified in the coordinates. Using multiple sets of coordinates, optionally together with a single or a corresponding multiple set of horizontal range radii (and, optionally, a single or corresponding multiple set of altitude and vertical range radii) it is possible to define more complex geographic regions. Figure 3 shows a simple two-dimensional region 110 defined by latitude and longitude co-ordinates (x1 y1) and horizontal range (h1), a more complex two-dimensional region 120 defined by two latitude and longitude co-ordinates (x2, y2) and (x3, y3) and a two horizontal range radius h2, h3 and a further complex two-dimensional region 130 defined by three latitude and longitude co-ordinates (x4, y4), (x5, y5) and (x6, y6) but no corresponding horizontal range radii. Figure 3 shows how multiple point, and optionally range, representations, or multiple region representations, may be grouped together to form complex regions in different ways. One approach is to logically add together the regions covered by multiple representations, as shown in the two-dimensional region 120 in Figure 3. Another approach is to treat the region enclosed by multiple point representations as the region defined, as shown in the two-dimensional region 130. To define an area in two-dimensions or a volume in three-dimensions, the latter approach requires at least three or four point representations respectively. It will be apparent that other combinations of point-defining data, range-defining data, or region defining data may be used in the present invention to define simple or complex regions.

Location data can be measured or specified to a certain level of accuracy. For example, location data provided by location servers of cellular networks will have a specified accuracy depending on the requested quality of service level and the capabilities of the network at that particular location and time. Similarly, location data obtained from a user by pointing to a map will depend on the scale of the map, and the resolution and accuracy of the pointing device. Thus, accuracy data may be associated with location data. The type of accuracy data will depend on the type of data used to represent geographical location. For longitude, latitude and altitude data, a horizontal and vertical error may be specified.

In the present invention, location data may be identified as static or dynamic. For example, the location of a house may be identified as static, at least for the period of use of the location data, whereas the location of a person or vehicle may be identified as dynamic. Static location data needs to be determined only once, whereas dynamic location data may require repeated updating. In both cases, a location or current location may be obtained automatically by querying one or more data processing devices, such as mobile data processing devices with GPS receivers or the location servers of cellular networks, described above. Alternatively, a location or current location may be obtained semi-automatically by querying one or more users of data processing devices to supply the data.

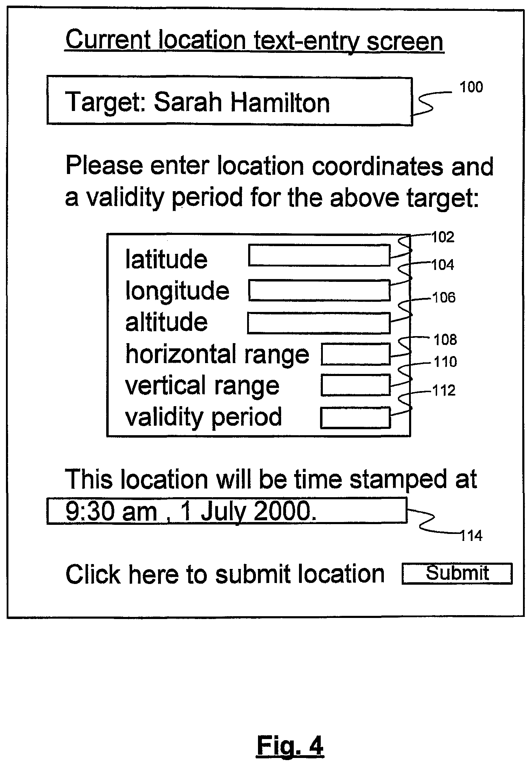

If the position of a terminal cannot be sensed using a location detection system, or if a location other than the position of the terminal is of interest, location data may be obtained at the terminal from the user in the form of user-inputted text - e.g. latitude, longitude coordinates, a registered geographical location name (as will be described in further detail below) or postal address or code etc. Other associated data relevant to dynamic location data may also be inputted by the user. Figure 4 shows an exemplary user interface for obtaining location data from a user in the form of text. The target identifier is displayed in box 100. Text-entry boxes 102-110 are provided for user input of single, or multiple, latitude, longitude and, optionally, altitude co-ordinates, horizontal and vertical range radii. A pre-filled text-entry box 112 is provided for user input of a validity period for the location data. A time-stamp to be provided with the location data is displayed in box 114.

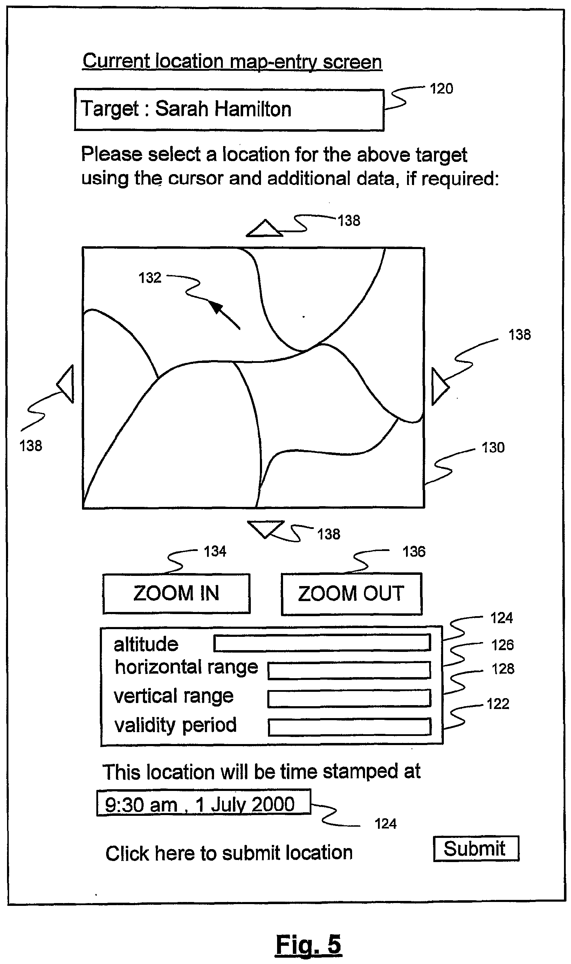

Location data may also be obtained from the user in, at least partly, a graphical form by presenting the user with a map (or a series of maps at different scales) via a graphical user interface of the data processing device and having the user point to one location (or a sequence more precise locations) or draw a region (or a sequence more precise regions) to define the location. Figure 5 shows an exemplary user interface for obtaining current location data from a user in, at least partly, a graphical form. As with Figure 3, the source identifier is displayed, in box 120. A pre-filled text-entry box 122 is provided for user input of a validity period for the location data. A time-stamp to be provided with the location data is displayed in box 124. Unlike Figure 3, a street map is displayed at box 130 and a cursor 132 provided for pointing and selecting a location. Also, buttons134 and 136 are provided for zooming in or zooming out of the map display. Furthermore, four buttons 138 are provided for scrolling the map portion displayed to the north, south east or west. The map displayed at box 130 may be any kind of map which either accurately reflects the spatial positions of object displayed, such as Ordnance Survey (TM) maps, or not such as transport connection like train connection maps, tube or metro maps etc. Maps displayed on two-dimensional screens may be used to provide three-dimensional location data by including a text-entry box for altitude. Horizontal and vertical range radii may also be entered using text entry boxes so as to define regions. Furthermore, locational regions may be identified by using a pointing device to draw the perimeter of the region or by using a pointing device to fill in a region being identified. Alternatively, regions may be defined by selecting multiple points and, optionally, single or multiple range radii as described above.

When the user has input the required location information, in either or both of the formats illustrated in Figures 4 and 5, he may submit it by clicking the "Submit" button, whereupon it will be communicated to a remote device or internal application which translates the submitted location data into a predetermined format whereby location data is communicated between devices in accordance with the present invention. The remote device may for example be a Web server, for example content server 30, which generates a hyperlink containing a URL containing the location data (as will be described in further detail below) which is then sent back in a Web page, which may contain other location-specific data, to the user terminal. In the case of an internal application, this may be a mapping application or suchlike which outputs location data in a desired format.

### Storage of Location Data in User Terminals

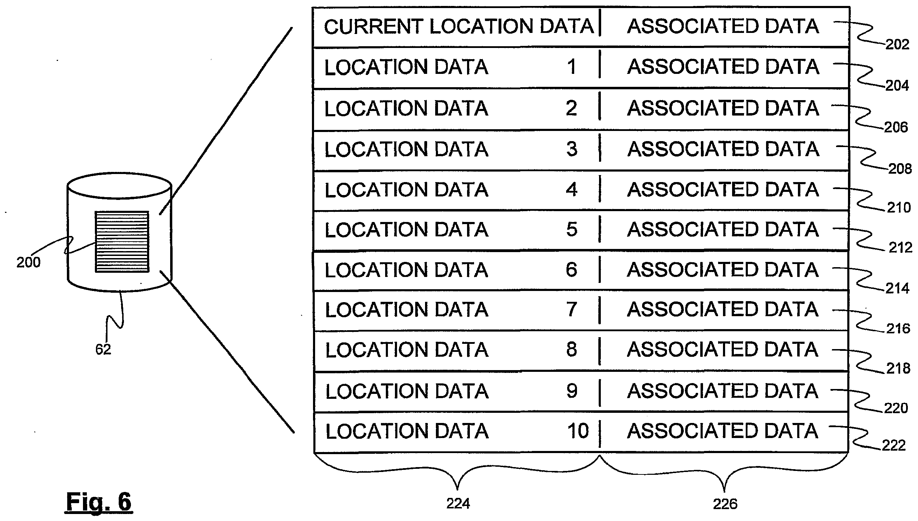

In accordance with embodiments of the invention, geographical location data is stored in, or in a local device accessible by, the user terminal, preferably in a non-volatile data storage means 62 as described, such as non-volatile memory or a magnetic or optical data carrier. Thus, each of the exemplified user terminals, include a location storage directory 200 storing geographical data in the form of a plurality of location storage records 202-222, as illustrated in Figure 6. One location storage record holds location data 224 representing a single location in the form of one or more fields of global geographical location coordinate data as described above, and one or more associated fields of data 226. Current location record 222 holds current, or at least most-recently obtained, location data for the terminal. A plurality of other location records 204-222 hold previously-stored location data, which may include previous current location data for the terminal and/or location data received from other sources, such as other terminals and content servers.

### Location-related Associated Data

Other data specifically related to a location may be stored in an associated manner with the location data. This data may be associated with the location data either by a user selecting a function for associating one or more selected items of additional data with an item of location data via user interface interactions, and/or by the user terminal automatically associating one or more items of contextual data with an item of location data, and/or by the user terminal automatically associating one or more selected items of additional data with a contextual item of location data, and/or may have been received by the user terminal in an associated manner with an item of location data. The associated data may be stored in fields of the location storage record or may be referenced by a field in the location storage record which provides a file reference to either a locally stored resource or a remotely stored resource.

For example, the following associated data may be stored in the location storage records: data representing the geographical location of a building may have data corresponding to the building associated with it, such as one or more postal addresses (preferably, broken down into street number, street name, town or city name, post or zip code and country name), e-mail addresses, fixed or mobile telephone numbers, web site addresses; a location type to indicate the type of location - e.g.. a flat, a house, a building, a street, a city, a county or state, a country, a region, a person, a vehicle; a user-allotted name, such as "London" or "My office" or "Sarah's house" or "Fred"; and a name registered in respect of a location (as will be described in further detail below). Furthermore, dynamic location data may have the following further data stored in the location storage records: a date/time-stamp at which the location was obtained (which may be expressed in a standard format such as number of seconds past 12:00 am, 1 January, 2000), a validity period within which the location data is considered to be current (which may be expressed as a number of seconds), a speed and direction of the locatable mobile device (which may together be expressed as speeds in the northerly, easterly and, optionally, vertical directions) and an acceleration and direction of the locatable mobile device (which may together be expressed as accelerations in the northerly, easterly and, optionally, vertical directions). For dynamic location data, if a previously obtained location is within its validity period (determined by comparing the current time to the time stamp associated with the previously obtained location plus the validity period) then the location data is treated as being current and updating is not needed. If not, then it is treated as being old and may need to be updated before use is made of the location data.

The following locally or remotely stored associated data may for example be referenced in the location storage records: a photographic image or video file; a map file; an audio file; a text file; a diary or calendar event; a hypermedia file; an e-mail file; a program file; a contacts record, such as a vCard; an electronic ticket (to be further described below).

Preferably, the user terminal application is arranged to detect when the location stored in the current location record 222 is sufficiently proximate to a location stored in other location records 202-222 and data associated with the proximate other location is "inherited" by the current location record 222 for use when performing functions or generating messages using the current location. In this way, the terminal application may make use of data associated with stored locations when the user terminal is proximate to the stored location without the user having to actively select the stored location. In other words, when a user is at home or at the office and has previously stored location and associated data in respect of the home or office, the terminal application will recognise that the current location is proximate to the home or office and will be able to make use of all the associated data, such as postal addresses, telephone numbers etc, without the user having to actively select the home or office location from a favourites list.

### Communication of Geographic Location Data from the User Terminals

The geographical location data stored in a user terminal may be communicated as data in messages sent to network-based service provision nodes (referred to herein as "service request data" and "service request messages" respectively) or to another terminal (referred to herein as "terminal-to-terminal messages"). The format in which the data is presented is preferably predetermined in each mode of communications which the terminal is capable of using (although different presentation formats are preferably used in different communications modes of a terminal, such as Web browsing and voice telephony connections), such that the location data may be recognised as such, and distinguished from the many other types of data which may be communicated in these different modes, and used at the receiving end of the communication.

Since location data may be communicated from a user terminal, another way in which a user terminal may receive location data is from another user terminal. Generally, this location data will not indicate a current location of the receiving user terminal, but may indicate a different location of interest. For example, a mobile telephone terminal may be used to send geographic location data, either its own current location or a different location stored in its location records, to another mobile telephone terminal or a PSTN telephone terminal by DTMF, or to a mobile telephone terminal by SMS, e-mail, or any other communications capability which the mobile terminals are each provided with. A "location-smart" terminal receiving the location data will preferably either automatically, or give the user the option to, store the location data, and any associated functional data (to be described below) received in the communication, in its location record store.

### Functional Data sent with Geographical Location Data

Data sent along with the location data in a communication is referred to herein as "functional data". Many different types of data may be sent in combination with the locational data. This functional data may have a purely informative function, or may have a different function such as specifying selected location-based functions to be performed in relation to the location data or location-based services to be provided in relation to the location data.

Any of the associated data, stored or referenced in a location record as described above, may sent along with the corresponding location data. The associated data to be sent may be determined by pre-stored settings (e.g. privacy settings) in the terminal device, user-interface interaction at the time of sending of the message and/or on the identity or kind of the service to be provided or the function to be performed. Furthermore, additional functional data not previously stored in a location record may be sent. The types and values of the additional functional data to be sent may be determined by user-interface interaction at the time of sending of the message and/or on the identity or kind of the service to be provided or the function to be performed.

Some examples of additional functional data generally useful for instructing a location-based server to provide a service are as follows: a service code (for any service which may be provided such as a map service or a taxi directory service); a user identifier (such as a user name or code); a user password; a user category of interest (which may be general categories such as food, entertainment, shopping, travel, news, weather etc., or specific categories like pizza restaurants, late-night cinemas, nightclubs, motorbike shops, plumbers, hairdressers etc.); a supplier identifier (such as a supplier name or code - e.g.. "Countrywide Cabs"); user search criteria suitable for processing by a search engine (which search criteria may be expressed in a conventional manner using search terms and instructions combined using logical operators); a user terminal type (such as fixed or mobile phone, fixed PC, notebook PC, PDA etc.); user terminal application type (such as Web or WAP browser application, E-mail application, SMS peer application, voice/video peer application etc.); user function code (such as "list"; "go"; "find"; "services"; "add"; "send"; "associate"; "option" - these functions will be described in detail below in respect the menu functions of "location-smart" terminal applications which are enabled to perform these functions in respect of location and associated data; however, they may for example be included in URL hyperlinks in Web pages to enable users of conventional or "location-dumb" terminal applications to make use of the functions too. Namely, the function may be provided in the server response, rather than via the terminal menus); various kinds of personal information specific to the user (such as user name, date of birth, postal & e-mail addresses, fixed or mobile telephone numbers, sex, age, payment instructions, debit or credit card details, bank details - preferably, for security purposes, sensitive personal information is communicated from the user's data processing device in encrypted form, or is stored at a remote data processing device referenced by an authenticated user name or code and is used as instructed by the user); personal information specific to people other than the user (such as the various kinds of personal information described above); and other service/function-specific data kinds (such as an item description, a number or quantity, a date , a time, a price, a quality of service level, a language, a currency etc.).

For the purpose of allowing recall and repetition of previous location-based functions or providing location-based service requests, one or more of the additional functional data items described above may be stored in the location storage records and presented to the user in the context of the respective locations when they are accessed in future, for example by means of a history list, or a user favourites list in a hypermedia browser.

### Representations of Location and Functional Data

For ease of explanation in this document, examples and illustrations will be given using character encoding. However, it is to be understood that, in alternate embodiments of the present invention, other data formats may be used. In all cases, when communicating location and associated data, the data must be recognisable as being location and associated data. This may be achieved by prepending a recognisable starting code signifying that the data following it is location and associated data and appending a terminating character, such as a carriage return, signifying the end of the location and associated data. Also, the various fields within location and associated data, such as latitude, or e-mail address, must be recognisable as such. This may be achieved by prepending recognisable starting codes signifying that the data following them is a particular type of location or associated data and appending a terminating character, signifying the end of the field. Furthermore, context, such as the context of a function or service code, may be provided to selected fields only by associating only those selected fields with the context-giving field. This may be achieved by nesting fields within each other using a pair of nesting characters, such as "{" and "}". Alternatively, associations between codes may be achieved by numbering the codes equally. For example, where two locations are to be given, the location coordinates may be indicated by the codes X1, Y1 and X2, Y2 respectively.

For ease of explanation in this document, examples and illustrations will be given using this approach to structuring location and associated data for storage communication purposes. However, alternate embodiments may use other data structures to represent location and associated data for communication purposes, such as mark-up languages (in particular, Extensible Mark-up Language or XML as used in NVML, GML and POIX described above), vCard format or nested attribute-value pairs.

The data type codes are preferably short alpha-numeric codes indicative of the purpose of the field. For instance, the following sets out a number of location and additional parameters of which the values are specific to location (corresponding to the associated data stored or referenced in the location records). These parameters may be represented by the following set of unique data type codes: latitude Y; longitude X; altitude A; Web site addresses WA; e-mail address E; user-allotted name N; mobile telephone number MT; fixed telephone number FT; horizontal range H; source identifier SI; vertical range V; target identifier TI; horizontal error HE; source device identifier SD; vertical error VE; target device type TD; location type LT; a date/time-stamp TS; postal addresses PA; validity period VP; street number NS; northerly speed NS; street name SS; easterly speed ES; town or city name TC; vertical speed VS; post or zip code PZ; northerly acceleration NA; country name C; easterly acceleration EA; vertical acceleration VA. A number of generally useful additional functional data parameters of which values may also be added to any locational data to specify further services and other functions to be provided. The following sets out the corresponding unique data type codes: service code S; user identifier UI; user password UP; personal name PN; supplier name or identifier SN; function code F; search criteria SC; item description I; category of interest CI; quantity NO; terminal application TA; date D; terminal type TT; time T; date of birth DB; price P; sex SX; quality of service level QS; age AG; language LN; personal identification number PI; currency CU.

Note that various examples of associated data, such as location type, postal address, street number, street name, town or city name, post or zip code, country name, e-mail address, fixed telephone number, web site addresses, user-allotted name, mobile telephone number are also usable as functional data and may have the same codes as described above.

### Message Formats for Location and Functional Data

A predetermined code or codes are used in messages constructed in accordance with the present invention in order to signify the presence of useful locational data in a message to a "location-smart" terminal application or a service provisioning entity. In preferred embodiments of the present invention the recognisable code, signifying that the data following it is location and associated data, is chosen to be an Internet Uniform Resource Locator (URL) comprising a predetermined domain name, or one of a set of predetermined domain names, stored on the user terminal. The choice of a URL serves three main purposes. Firstly, using the DNS, it identifies an IP address of a server connected to the Internet which is capable of performing, or arranging for another server to perform, location-based functions or services defined by the location and functional data which follows the domain name. Thus the domain name plus location and associated data which follows it may be used by a Web or WAP browser application to instruct a server to perform the location-based function or service. The location and associated data may be manually entered into the browser, obtained as a hyperlink from a media source such as an Internet page, e-mail, SMS etc. or automatically constructed by the terminal application on the basis of user instruction. Secondly, it provides a recognisable code so that "location-smart" terminal applications, which are able to perform functions in respect of location and associated data, may treat the parameters and other data associated with it as location and associated data and perform the functions accordingly. Thirdly, the use of conventional domain names provides backwards compatibility for communication of location and associated data through many conventional data processing media in such a way as it an be recognised as location and associated data and used as such. For instance, location and associated data may be communicated in e-mail, SMS, in-call data channels for voice or video connections, broadcast radio or TV data channels etc. For example, the location and associated data may be received via SMS, copied to a data clipboard and pasted into a WAP or Web browser for accessing a server connected to the Internet which is capable of performing, or arranging for another server to perform, location-based functions or services. This backwards compatibility extends to non data processing media such as conventional print media or the spoken word. For example, location and associated data may be printed in magazines or newspapers and typed into a WAP or Web browser for accessing a server capable of performing, or arranging for another server to perform, location-based functions or services.

More than one Internet domain name can be chosen as a recognisable code signifying that the data following it is location and associated data. Thus "location-smart" terminal applications, which are able to perform functions in respect of location and associated data, may recognise any one of the chosen domain names and treat any data following such domain names as location and associated data and perform functions accordingly. This enables more than one server, with IP addresses corresponding to the chosen domain names, to be accessed by "location-smart" terminals to perform location-based services or functions.

In accordance with an alternative embodiment of the invention, one or more top level domain name (such as .loc) may be used as a terminal-recognisable code so that all domain names within those top level domains (e.g.. buses.loc or servicestations.loc) are recognisable codes signifying that the site is location-enabled and that the user's location and associated data may be sent to the server in service request messages constructed by the terminal in the appropriate format. Furthermore, "location-smart" terminal applications may recognise any one of the chosen top level domain names and treat any data following such domain names belonging to those top level domains as location and associated data and perform functions accordingly. This enables more than one server, with IP addresses corresponding to all the domain names within the chosen top level domains, to be accessed by "location-smart" terminals to perform location-based services or functions.

Thus, in accordance with this embodiment of the invention, "location-smart" hypermedia browser applications preferably construct URLs containing location data, or append data to recognised location-aware URLs to form new URLs containing location data. These URLs are used to form service request messages to be sent via the Internet, such as Hypertext Transfer Protocol (HTTP) GET requests and Wireless Application Protocol Transfer Protocol (WTP) GET requests.

However, the location data may alternatively be included in such service requests by other message formats, for example by the terminal browser generating form data which is sent in an HTTP POST request message, or otherwise included in a service request message header, or in the message body (for example as an XML file) when the terminal detects that a request is to be sent to a predetermined network resource or domain (in the case of a cookie, this being the domain from which the cookie is received).

In addition, the data may be sent by a client software object, such as a Java™ or J2ME™ (Java for mobile terminals) applet residing on the user terminal. Applets may be used to process location data and associated data or functional data at the user terminal before a service request message is generated for transmission to a remote service provider. For example, a user may wish to access a service for ordering a taxi and may be required to specify a pick-up location, including location data, such as latitude and longitude co-ordinates, and a postal address, as well as destination location data, number of passengers and a contact telephone number for the user. This information is clearly specific to the type of location-based service being accessed and it may be preferable to capture the required information from the user using an applet downloaded from the service provider when the service is first accessed.

Applets for particular services may be stored in the user terminal for future use. Stored applets may be associated with services stored in a user-selected favourites list of services or history list of services accessed in respect of locations, both of which are described in greater detail below. Preferably, the applet is arranged to interoperate with the hypermedia browser to make use of location and associated data stored in the user terminal. Thus, the applet may present a user interface to the user for capturing the required service-specific information which is at least partly pre-filled with location and/or associated data likely to be appropriate to the user requirement. For example, fields for capturing the pick-up location may be pre-filled with location data representing the current location of the user terminal and fields for capturing the destination location may be pre-filled with location data representing the current locational context, which may of course be different to the current location. Furthermore, associated data stored or referenced in the location records of the user terminal, or other data stored by the hypermedia browser, may be used by the applet for pre-filling appropriate fields in the user interface. Thus, for example, a postal address associated with the current location and/or the current contextual location may be pre-filled in appropriate fields in the user interface. In the case of the current location, inherited associated data, as described above, may be used. Also, user-specific data, such as a contact telephone number for the user stored in the user terminal and accessible by the hypermedia browser, may be used for pre-filling the contact telephone number field in the applet.

Thus, it can be seen that service-specific applets may make use of location data, associated data and other data stored in the user terminal to assist the capturing of required service-specific information for inclusion in a service request message. Other message formats are more suitable in other communications modes, such as voice telephony (the DTMF format described above is preferably used, with for example the *** tone format functioning as the signifying codes), for service request messages, positioning responses and terminal-to-terminal messages. In the case of SMS and e-mail, and in particular for service request messages, any predetermined format may be used, such as an XML file. However, providing a suitable network resource is provided corresponding to the URL, geographical location data is also preferably sent in the form of a URL format for these communications modes. For these existing terminal-to-terminal communications the receiving terminal may not be "location-smart" and it may not be possible to determine from the sending terminal whether the receiving terminal is "location-smart". By sending a URL in these modes of communication, the information becomes compatible with any terminal, since the user may either cut and paste, or manually type in, the received URL into the address line of a hypermedia browser and get the appropriate location-specific information or service by means of a service request message sent to the network resource indicated in the URL.

### Examples of URLs containing Location and Functional Data

Some examples of structuring and formatting of URLs in accordance with the present invention will now be given to illustrate how location and associated data may be included therein. Such URLs may be generated by a "location-smart" user terminal, either in full by the user terminal or in part by the terminal on recognising inputted URLs in which location data is to be automatically included, preferably identify predetermined existing network resources, which are preset in the browser, which are adapted to recognise the URL data format constructed by the user terminal application and to provide location-specific services in their responses. The URL data formats preferably include the location data and any functional data in the form of data type codes with given data values, for example in the form of a Common Gateway Interface (CGI) query structure, with the data type codes described above being used to indicate the CGI query parameters. Any of the data type codes described above, in any combination, may be included in the generated URLs, as will be exemplified below.

Example 1. The following illustrates a URL generated using a representation of two coordinates of location to define a geographical location:
*www.golocal.to*/*?X*=*1234566&Y*=*9876543*

The network resource is a location-enabled Web server with the domain name "golocal.to", "to" being the top level domain (TLD) name (a country code TLD for Tonga in this case; it may also take a more conventional form such as the generic TLDs ".com" or ".net"). The terminal application is preset to send location service request messages, containing the URL in a header part of the message, to this network node. Correspondingly, the server has the resources to understand the CGI query part of the URL (that following the domain name) and to provide location specific responses, for example in the form of a Web page containing a map showing the location in question. It is to be understood that the domain name "golocal.to" is used herein for illustrative purposes only, and any domain name or domain name part may be used to implement the generation of URLs according to the invention, providing the corresponding server is at least location-enabled, and preferably also enabled to process the associated data fields and provide responses appropriately.

Example 2. An additional height dimension may be added:
*www.golocal.to*/*?X*=*1234566 &Y*=*9876543&A*=*340*

Example 3. Associating a user-allotted name with the location data may be achieved by the following representation:
*www.golocal.to*/*?N*=*MyHouse &X*=*123456 &Y*=*9876543*

The server may then formulate a location-specific response containing the user-allotted name for the location.

Example 4. To indicate that the location data relates to "MyHouse", nesting may be used to associate the location data with the user-allotted name:
*www.golocal.to*/*?N*=*MyHouse{X*=*123456&Y=9876543}*

Example 5. Adding a horizontal spatial extent and horizontal error may be achieved as follows:
*www.golocal.to*/*?N=MyHouse{X*=*123456&Y*=*9876543&H*=*53&HE*=*10}*

Example 6. Identifying the location type as a house may be achieved as follows:
*www.golocal.to*/*?N=MyHouse{X=123456&Y=9876543&H=53&HE=10&LT=house}*

The server may then formulate a location-specific response which is also dependent on the type of location identified.

Example 7. Adding postal address information for the house, broken down into various subfields which are nested within the postal address field may be achieved as follows:
*www.golocal.to*/*?N=MyHouse{X=123456&Y=9876543&H=53&HE=10&LT=house&PA={NS =19&SS=BurgessAvenue&TC=London&PZ=SE1 6TY&C= UK}}*

If included in a service request message, this URL may be used by the server to produce a response which includes the user's address details, and/or to pass on data to enable a service, such as a delivery, which the user orders via interaction with the server. The URL may also for example be posted as a hyperlink on a Website and all the information within it may be accessed and parsed by other "location-smart" user terminals. The URL may also be sent via an e-mail or SMS message to other "location-smart" user terminals to pass on both geographic location data and postal address data.

Example 8. Adding e-mail address, web site address, mobile telephone and fixed telephone details may be achieved in a URL as follows:
*www.golocal.to*/*?N=MyHouse{X=123456&Y=9876543&H=53&HE=10&LT=house&PA={NS =19&SS=BurgessAvenue&TC=London&PZ=SE16TY&C=UK}&E=andrew.smith@freeserve.co.uk&W A=andrewsmith.co.uk&MT=447947395345&FT=445649376}*

Example 9. Dynamic location data. Note the presence of a time stamp and validity period for the location data. The absence of any source or target information indicates that, in default, the location is available automatically and locally to the device, e.g.. from a GPS receiver.
*www.golocal.to*/*?X=345666&Y=476543&TS=16844&VP=60*

Example 10. In this example, location data for a user, identified by her mobile telephone number, and the current location of the user terminal is available in network location server "locationserver2". The user's location is dynamic:
*www.golocal.to*/*?N=Sarah{X=234566&Y=876543&SD=locationserver2&SI=535.243.65.34& TD=MS&TI=447947086456&TS=946568&VP=60}*

Example 11. An example of a URL containing dynamic location data, for example of an aircraft, including speed and acceleration information is as follows:
*www.golocal.to*/*?N=MyLeerJet{X=54316&Y=9876543&A=6836&H=52&V=65&HE=43&VE =13*&NS=5&ES=657&VS=675&NA=34&EA=54&VA=5&SD*=locationserver3&SI=735.23.635.134& TD=MS&TI=44794876859&TS=467568&VP=360}*

Now we will give some examples of cases in which additional functional data is added to the geographic location to form the URLs. In all of these examples, the kinds of data parameters and their values included in the additional functional data is selected by the user, either as a general setting or in individual cases, by means of user interface interactions.

Example 12. In this example a user has requested, via user interface interaction, the terminal to request a search for information on dolphins but not zoos around Sarah's house using a location-based search engine. The URL generated by the user terminal is as follows:
*www.golocal.to*/*?S=search{N=Sarah'sHouse{X=63474&Y=75497&SC=*"dolphin"NOT"zoo"}

This allows the server to perform a search specific to the location and to show the search results in relation to the location. In an alternative, the "search" service code may be dropped, since the presence of search criteria may be taken to imply that the service required is a location-based search.

Example 13. In this example a user has requested the terminal to request a search for cinemas around his current location. The location of the terminal is available in the network location server "locationserver1":
*www.golocal.to*/*?S=catgorysearch{CI=cinema&SD=locationserver1&SI=135.43.55.94&TD= MS&TI=44798667456&TS=8763568&VP=60}*

Example 14. A request instructed by the user on the terminal, giving her name and mobile telephone as contact details, to order a taxi for two passengers, being picked up at 9:30 am on 1 July 2000 from Sarah's house and going to David's office, giving the full postal address to assist pick-up and a fixed telephone contact number:
*www.golocal.to*/*?S=taxi{PN=SarahHamilton{MT=447947395345&J&NO=2&wD=11712000& T=09:30&N=Sarah'sHouse{X=63474&Y=75497&LT=house&PA={NS=19&5S=BurgessAvenue&TC =London&PZ=SE16TY&C=UK&FT=445649376}&N=David'sOffice{X=836774&Y=82356}}*

In this example, it has been assumed that the supply of two items of location data in the context of a taxi service - i.e. for "Sarah'sHouse" and "David'sOffice" in that order - indicates that the first location is the pick-up location and the second is the destination location. However, it is alternatively possible to explicitly specify this using further taxi-service-specific data codes such as SL= (source location) and DL= (destination location). It is to be noted, that since most, if not all, of the information is preferably stored as associated data in the user terminal, the process of generating this service request can be made relatively convenient to the user. Namely, the user interface can be adapted such that all the user would need to do is to enter the service requested (taxi), to select the pick-up and destination locations from a list of locations presented on the user interface, and to enter the time the taxi is required. This example is one which is also particularly suitable to be alternatively embodied by way of a Java™ or J2ME™ applet, as described above, since the user interface interactions may then be controlled by the applet. Example 15. A request by the user, providing a mobile telephone number as a contact number (and using the same telephone to automatically provide location data), to order two take-away Hawaiian 12 inch pizzas to be delivered to her current location and to pay for it. The request includes a current location, a validity period, for the current location fix and identifying details for the location server from which a location update can be received:
*www.golocal.to*/*?S=pizzadelivery{PN=SarahHamilton{MT=447986674&*CM*=Ms.S.Hamilton} &I=HawaiianPizza12inch&NO=2&X=334566&Y=476543&SD=locationserver1&S1=135.43.55.94&T D=MS&TI=44798667456&TS=8763568&VP=60}*

Example 16. In this case, the user has previously registered with a trusted organisation running the server corresponding to the domain name golocal.to and may have provided payment details and other personal details to that organisation in a secure manner. Thus, to provide some security to e-commerce or m-commerce transactions such as ordering pizza is to provide a user name and password in the request, and rely on the trusted organisation to arrange for payment using pre-stored payment details. An exemplary request containing these parameters is as follows:
*www.golocal.to*/*?S=pizzadelivery{UI=SarahHamilton&UP=mypassword&I=HawaianPizza12i nch&NO=2&x=334566&Y=476543&SD=locationserver4&S1=135.43.55.94&TD=MS&TI=44798667 456&TS=8763568&VP=60}*

Although more secure than sending payment details in the open, this request message contains a user name and password and this information might allow a third party to spoof Sarah's identity and make purchases using Sarah's payment details without even knowing them. Thus, whenever sensitive data is to be communicated, it is preferable to send all such data in a hidden manner using a secure connection. One suitable approach for Internet connections is the secure sockets layer (SSL) connections.

Example 18. In another example of location data associated with function/service-specific data, a user may identify a particular supplier of a service rather than a general service or category of interest. For example, Sarah may want to order pizza from a particular pizza delivery business named "Pizza2go". An exemplary request:
*www.golocal.to*/*?SN=Pizza2go{UI=SarahHamilton&UP=mypassword&I=HawaiianPizza12in ch&NO=2&x=334566&Y=476543&SD=locationserver1&S1=135.43.55.94&TD=MS&TI=447986674 56&TS=8763568&VP=60}*

Example 19. A wishing to perform a function in respect of location data, such as to add a location, given the user-allotted name "Sarah's House", and associated location-related data, such as a postal address and fixed telephone number, to his favourites list maintained at a server of the organisation owning the domain name golocal.to, may format a request as follows. Note that the user may type this URL into the address entry line of a terminal application such as a conventional Web or WAP browser, or may access URL as a hyperlink on a Web page or WAP card. By the server sending a Cookie to the user terminal, the user terminal can be identified each time a request is sent up to the golocal.to domain, and thus the favourites list can be maintained on a per-user (represented by the user terminal) basis.
*www.golocal.to*/*FC=addN=Sarah'sHouse{X=63474&Y=75497&PA={NS=19&5S=BurgessAv enue&TC=London&PZ=SE16TY&C=UK&FT=445649376}}*

While the above examples have used a predetermined URL as the means for identifying data as being location and/or associated data, it will be understood that in alternative embodiments, such as those described above, other means may be used to identify data as being locational and/or associated data. Furthermore, it will be equally apparent that many other data formats may be used for specifying location and associated data.

In accordance with alternative embodiments of the present invention, location data may be identified by prepending a predetermined protocol header, for example "GEO:", in the same manner as "HTTP:" identifies the hypertext transfer protocol. Thus, a "locations smart" user terminal, running conventional software applications such as a Web or WAP browser, e-mail application, text messaging application or other conventional communications applications, may be arranged, using well-known techniques for associating protocol headers with software modules, to launch and/or pass control over to an independent software module implementing terminal-side embodiments of the present invention. This may be performed automatically or on user activation of an item of locational data which may have been received, for example, in a Web page, WAP card, e-mail, SMS or text message or which may have been entered by the user. The locational and associated data following the protocol header is passed to the software module for use as generally described herein. Preferably, the protocol header is used in combination with a predetermined URL, as described above, so that locational data may be utilised by both "location smart" and "location dumb" user terminals as well as with non-data processing media.

In a further alternative embodiment, which also may be combined with the above described embodiments, the locational data is transmitted as a file recognised by software applications running on a user terminal by means of a predetermined and registered MIME type. Similar file extensions may be used for conventional operating systems such as Microsoft ™ Windows ™ - for example "MyOffice.loc".

In a yet further embodiment, the location data may be included in a document in the form of script, such as Javascript™ or WMLscript™ which is recognised by the user terminal as having certain functionality to be carried out by the client browser in relation to the geographical location data embedded in the script.

In general, any data code, label or format recognisable by the user application, whether terminal-side or network-side, may be used to identify location data as such and thus enable the user application to utilise the location and associated data accordingly. However, preferred embodiments use standardised codes, labels or formats, such as URLs, to achieve compatibility and interoperability.

### Terminal Application User Interfaces

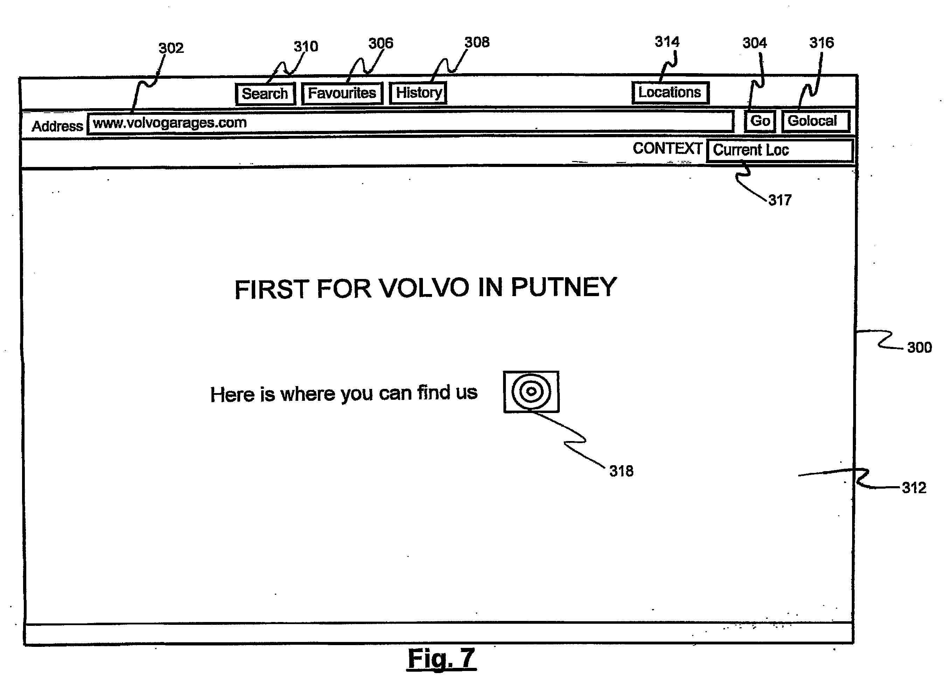

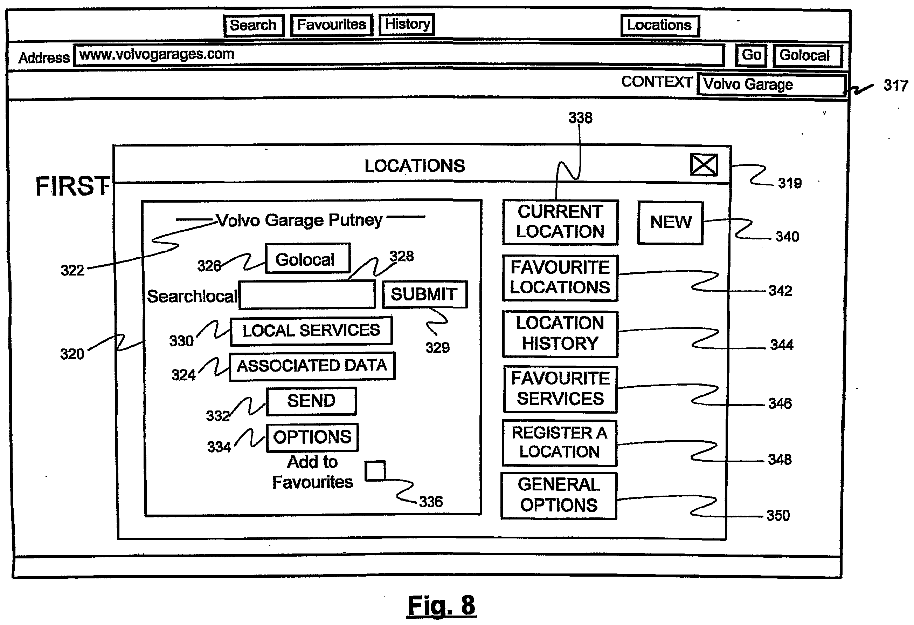

Figure 7 illustrates a graphical user interface provided on a user terminal by a hypermedia browser application 68, in accordance with one embodiment of the invention. The user interface includes various native menu options provided on conventional hypermedia browsers, such as an address entry box 302, for entering a network resource identifier (URL) which identifies a resource to be retrieved from a remote server, a "GO" button for initiating a service request message, in the form of an HTTP GET request containing the URL specified in the address entry box 302, a favourites list top bar icon 306 for displaying a selection of representations of previously stored favourite resources, a history top bar icon 308 for presenting a selection of representations of recently-accessed resources, and a conventional search top bar icon 310 for allowing a user to select a known conventional search engine from which normal key-word searches can be obtained. By native, we mean to say that this functionality is provided by the terminal application itself, rather than by hypermedia content received. Both an original terminal application and one modified by means of a software plug-in may provide such native functionality. The browser user interface also includes a hypermedia content display window 312, in which hypermedia resources retrieved from remote servers are displayed. In addition, in accordance with the present invention, the browser interface includes a native "locations" top bar icon 314. Selection of the locations icon 314, by means of a pointing device (a mouse, a trackball, etc) causes a native pop-up "locations" menu to appear on the user interface 300 similar to that illustrated in Figure 8.

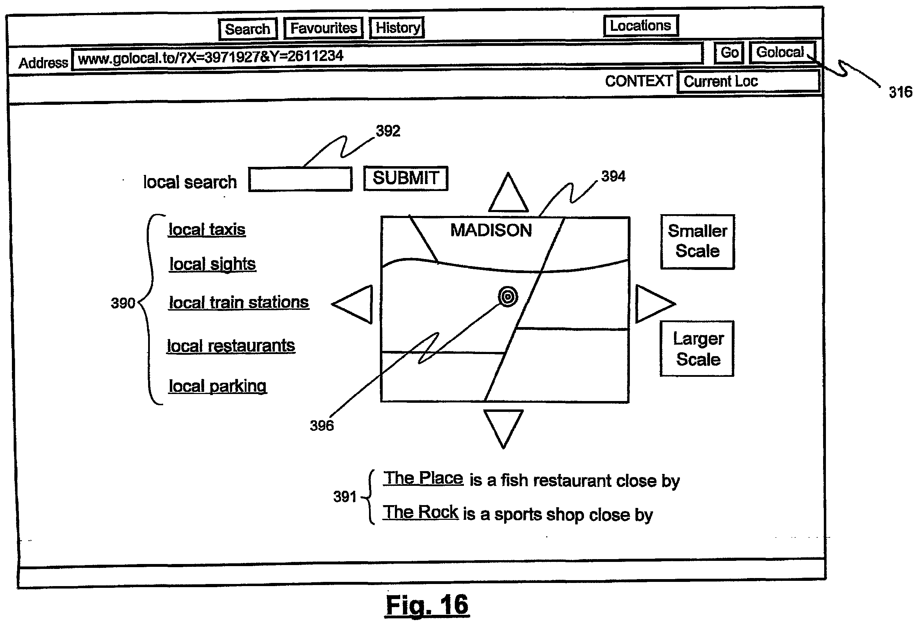

The user interface also includes a native "Golocal" button 316, a single actuation of which by means of a pointing device (i.e. a "click") causes the automatic generation of a service request message, in the form of an HTTP GET request, and the transmission of the service request message to a selected remote server such as a server identified by the domain name "golocal.to". The generated service request message contains geographical location data corresponding to a currently-selected context, which is indicated in current location context indicator box 318. The server response, in one embodiment, contains contents which are illustrated in Figure 16. In an alternative, if text is inserted into address entry box 302, and "golocal" button 316 is actuated, a service request message is generated which contains both the text, as search parameter data, and the current contextual location data, and transmitted to the remote server, the remote server can then parse the request parameters, generate location-dependent search results and send the results in a response message.

Figure 7 also illustrates an exemplary hypermedia content page in hypermedia content window 312 which contains an item of geographical location data and associated data 318. The item of geographical location data and associated data may either be viewable in content window 312, for example as a hyperlink, or hidden by means of being embedded in the hypermedia content page as has been shown in

Figure 7. In this embodiment of the present invention, items of geographical location data contained in hypermedia content received by the browser are preferably indicated in the hypermedia content window 312 by means of a characteristic representation, preferably a predetermined icon (such as that shown) indicating that the representation is specific to location data. The characteristic representation may either be embedded as a resource within the page by the content server, or the browser application on the terminal may be adapted to recognise geographical content information and, in response thereto, presents the geographical location data by means of a native characteristic representation. The browser can then select the characteristic representation, icon 318, by means of a pointing device, in order to cause the browser to display a menu specific to location data, in which functions may be performed in relation to the geographical location data represented by the icon 318. Preferably, the menu is a native pop-up menu in the same format as that generated when the locations top bar icon 314 is actuated.

Figure 8 illustrates the native locations pop-up menu according to this embodiment of the invention in further detail. The geographical location data represented by icon 318 is further represented by means of a location window 320 whereby the user can perform functions in relation to the geographical location data itself, and view any data currently associated with the item of geographical information. The associated data preferably includes at least a name for the location, indicated within window at 322. Further associated data may be accessed by selecting "associated data" button 324. This further associated data may take the form of, for example, address data, telephone data, number data, etc. All of the associated data initially accessible by the user is contained in the hypermedia contents received from the server when the resources were initially accessed (however, these were originally not presented to the user). On selection of the location representation icon 318, the current locational context is automatically updated, as indicated by context indication box 318. The current locational context is used for performing functions or generating service request messages as described above and further below.

Various functions can be performed via location window 320. One function which may be performed is a "Golocal" function, similar to that described above in relation to Golocal box 316, by means of location window Golocal box 326. A further function which may be performed is a local search, which may be initiated by the input by the user of search criteria such as one or more keywords into text input box 328, followed by the selection of associated submit button 329. This initiates the generation of a service request message containing both the geographic location data associated with the currently selected locational context and the search criteria entered by the user. The service request message is sent to a predetermined server resource, for example the "Golocal.to" server. The locational data and search parameters may be included in the service request message as a URL, automatically constructed by the browser application, in accordance with the URL generation formats described above.

A further function which may be performed via location window 320 is a local services history function, which may be accessed by the selection of local services button 330. Local services button 330 accesses a history list of services which have previously been accessed in the context of the current location.

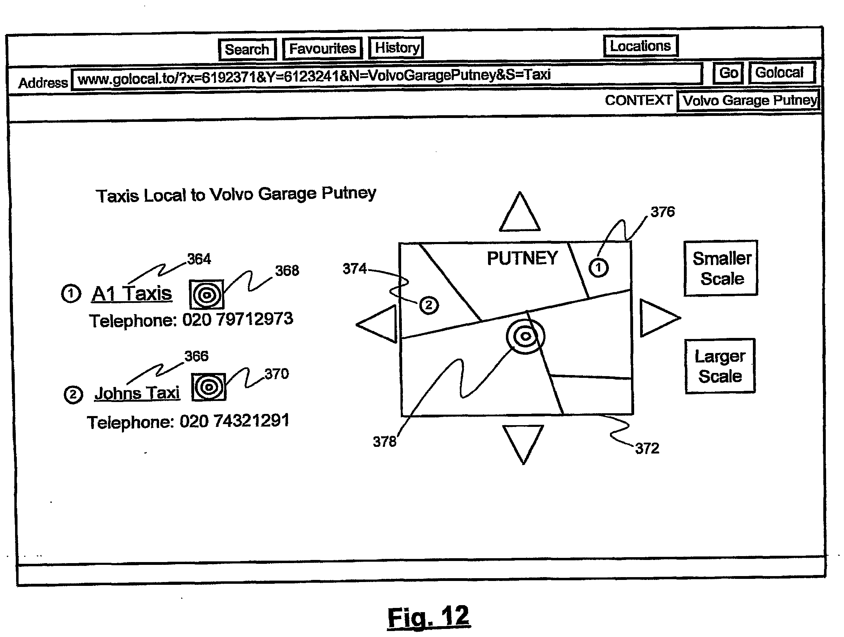

Thus, when a new location is first accessed, local services history list is empty, and actuation of the "local services" button 330 causes the immediate generation of a service request message to be sent to a predetermined network resource providing a location-based service directory service. The current contextual location information is included in the service request message. In return, the terminal receives hypermedia content containing details of local services. Preferably, the content is in the form of hyperlinks to categories of local services (such as "taxis", "hotels", etc) specific to the location indicated in the service request message. These links are preferably in the form of URLs containing both service category codes and the current location in the form of CGI script parameters as described above. Thus, actuation of one of these links causes the generation of a further service request message specific both to the current contextual location and also containing the relevant service category identifier. In response, the service directory server sends a list of suppliers within the service category identified within the service request message and local to the geographical location specified therein. The response preferably includes these individual supplier identifiers in the form of hyperlinks to either supplier-specific contents supplied by the service directory server or the supplier's own web page. An example of a service category-specific page of content is illustrated in Figure 12.

In any case, as the user then navigates through the service-specific responses generated by the service directory server, the selections made by the user are saved by the hypermedia browser application in a history list, and when the same location is accessed in future (for example, if the location is stored in a favourite locations list), the previously-accessed service categories and supplier identifiers are accessible to the user via the local services button 330. Thus, merely by navigating menu options on the user terminal, without the need for generation of service request messages, previously-accessed search directory information, and in particular services which may have previously been used by the user, are immediately accessible to the user for future occasions within the context of a selected location. For example, if a user previously accessed information relating to a particular taxi service firm in the context of a particular location and then used the firm and found the services to be to his liking, the user may wish to re-access the same information conveniently in the future. The user can do this simply by resetting the current locational context to the location in question, clicking local services menu 330, and clicking the user-friendly identifier for the particular local services firm information previously accessed, before any service request message is generated. The actual service request message generated will provide information specific to the selected service supplier. When the local services button 330 is selected, the service category and supplier identification information is preferably presented in the form of a hierarchical list, namely at a top level a service category is indicated and at a lower level the individual supplier identifiers are associated therewith.

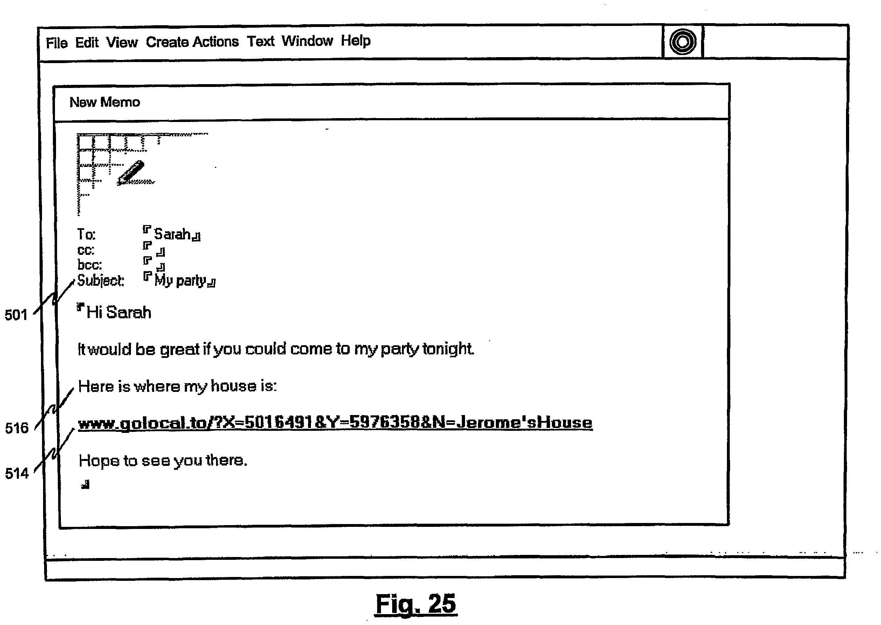

A further function which may be performed through location window 320 is a "send" function 332. Namely, the geographical location data represented by local services window 320 may be sent to another terminal. Information may be sent, for example, by e-mail or by SMS, and the user may be presented with the option of performing the function either once "send" button 332 is actuated, or after a mode of transmission has been preselected. If an e-mail transmission is selected, the user is preferably presented by the user terminal with an e-mail message construction box which contains a representation of the geographical location data, similar to that illustrated in Figure 25. The representation is preferably in the form of a URL containing both the geographical location data and any selected associated data wished to be transmitted by the user, such as:
*www.golocal.to*/*?X=6192371&Y=61233241&N=VolvoGaragePutney*

Since the geographical location data is included in the message in the form of a URL also containing the identifier of a network resource (www.golocal.to) capable of recognising the geographical location data in the format given and generating an appropriate location-based response such as one including a map with the given location indicated and named, the geographical location data is reverse-compatible. Namely, if the user terminal receiving the e-mail is "location-smart", the user terminals e-mail application may automatically recognise the location data within the URL, and allow the manipulation of the data automatically by the user, for example by the automatic presentation of a pop-up locations menu similar to that illustrated in Figure 8 on selection of the URL. On the other hand, if the user terminal is not "location-smart", the user may nevertheless access the geographical location data by clicking on the URL (if the e-mail application is HTML-enabled), or by cutting and pasting the URL into the address entry box of a hypermedia browser on the user terminal and clicking "GO", such that a service request message containing all of the geographic location data and associated data is transmitted in a service request message to a location-based network resource (which is also indicated in the URL itself), such as the "Golocal.to" server, which is able to provide the non-"location-smart" with any required information local to the indicated location.

In the above, the URL itself includes the geographical parameters, however this is not necessary. In an alternative embodiment, a hyperlink, containing the network resource identifier www.golocal.to, and the geographical location data are included as separate parts of the message in an associated manner. The geographical location data may for example be included in the form of a code such as the Placecode™ format described above, along with instructions for the user to type in the code once the network resource is accessed. On the entry Web page of golocal.to, an entry box is then provided for the input of the geographical location data by the user manually. In the above, the URL format containing the location data provides backwards compatibility, in that recipient terminals do not need to recognise the parameters accompanying the network resource identifier as geographical parameters; this is performed at the network resource end. Alternatively, the geographical location data may be included without a network resource identifier, but in a predetermined geographical data format, such as those described above, for recognition by a "location-smart" terminal. The data may for example be included in the message header or, for example as an XML file, in the message body.

If the geographical location data is to be sent via SMS, the user terminal preferably automatically presents to the user the user's phonebook containing mobile telephone directory numbers for SMS-enabled user terminals. On selection of the recipient via the user, the user terminal generates an SMS message containing auto-generated text providing the geographical location data and preferably, at least the user-friendly name allotted to the location. Again, the geographical location data itself is preferably sent in the form of a URL, or at least a portion thereof, such that, again, the geographic location data is reverse-compatible. If the receiving terminal is "location-smart", the receiving terminal can automatically recognise the location data within the SMS (since it is provided in a predetermined format, for example being the "Golocal.to" URL format), and to provide the receiving user one or more location-specific options (such as "save location") automatically. On the other hand, if the receiving terminal is not "location-smart", the user can either cut and paste or manually re-type the URL contained therein, into the address entry box of a hypermedia browser and retrieve hypermedia contents specific to the location specified in the received SMS message.

It is to be mentioned that user-selection of the associated data button 324 in the location window 320 not only allows existing associated data to be viewed by the user, but also allows the user, by means of suitable menu options, to associate further data, either by means such as a text-entry box or by associating further information currently stored on the user terminal (for example, photographs, video files, etc) with the location data via storage in the location storage records.

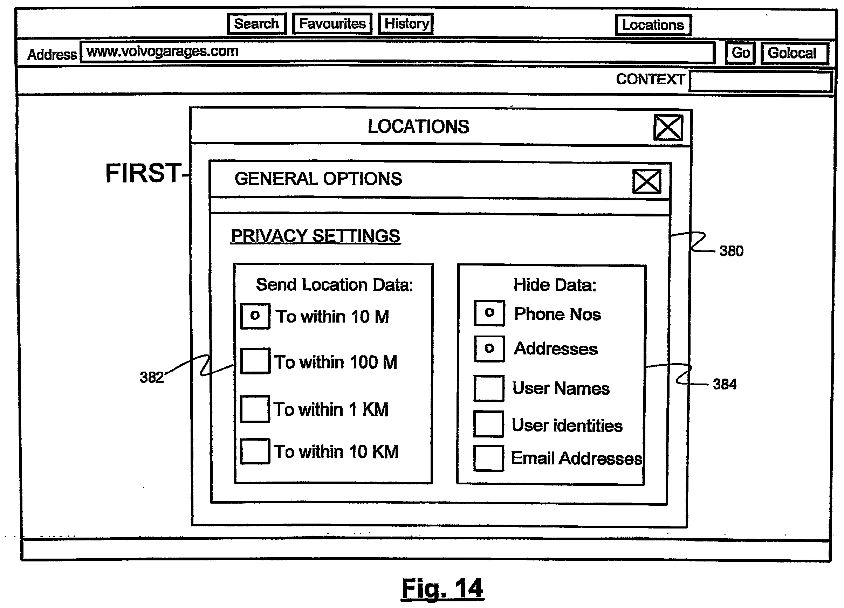

An "options" button 334 appearing in location window 320 allows various options specific to the current contextual location to be set within the user terminal, for example, a "privacy" option may be set via a menu interaction. Figure 14 below illustrates various privacy settings which in a "general options" menu which are to be applied as minimum privacy settings, for location data held within user terminal. Similarly, location-specific privacy settings corresponding to those illustrated may also be set, via options selection box 334, on a per-location basis.

Finally, in location 320, a selection box 336 is provided allowing the current contextual location to be added to the favourite locations list of the user stored on the user terminal. The box 336 is preferably in the form of a radio button, which indicates whether a displayed location is currently a member of the favourite locations list.

Locations pop-up menu 319 also includes various menu options which are not specific to the current contextual location. If the current contextual location is not the current location, a current location selection box 338 is provided, whereby data and menu options relating to the current location of the user terminal may be selected to be placed within location window 320, and to set the current locational context to the current location. New location selection button 340 provides functionality allowing a user to specify an entirely new location to the user terminal, either by local location selection procedures or location selection procedures carried out with the help of a remote server. These location selection procedures, presented to the user on selection of new location selection box 340, may be similar to that described above in relation to Figures 4 and 5.

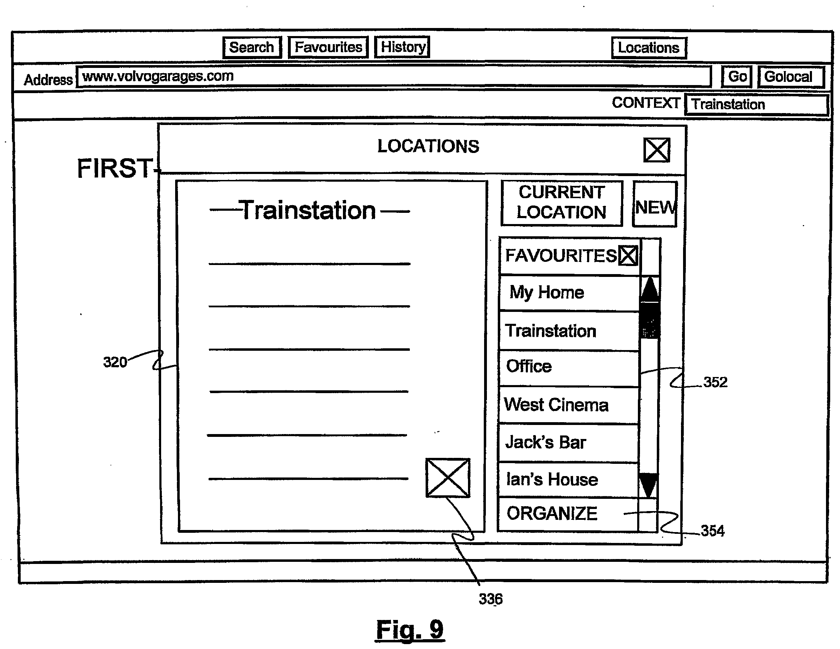

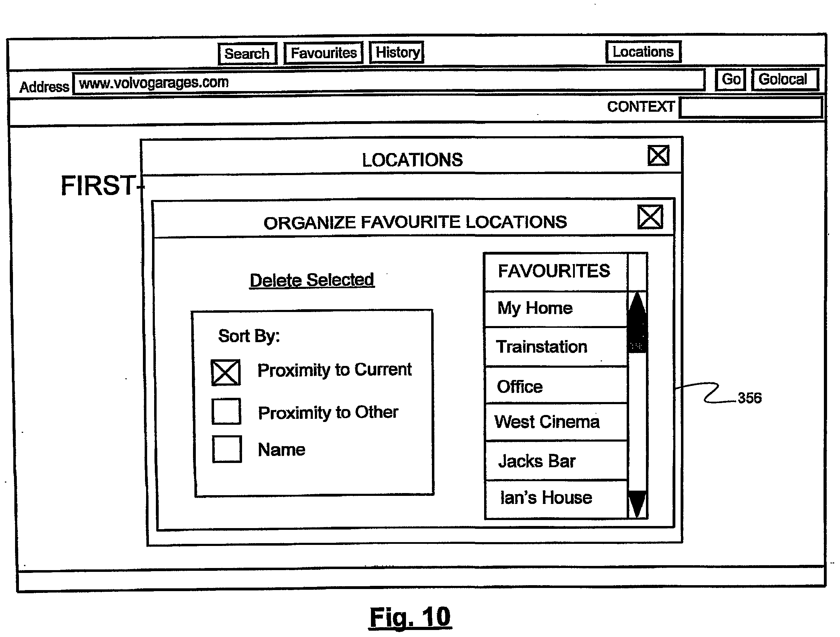

Favourite locations selection button 342 causes the browser application to display a list of favourite locations, as illustrated in Figure 9, favourite locations menu 352 includes a list of user-friendly names for previously-stored locations. The list of locations is preferably ordered in accordance with proximity to the current location of the user terminal. Thus, in the example illustrated in Figure 9, the user is most proximate to the location "my house", and the remaining favourite locations are ordered according to proximity. By means of this functionality, access to favourite locations becomes easier for favourite locations which are close to the user's current location, which will in general be the ones which the user is more interested in setting as a current locational context (although of course the user may be interested in a location completely remote from his locational context, which is also accessible via favourites list menu 352). The user can select any of the locations indicated in favourites list, by clicking on the listed name, as the current contextual location, causing the contextual indication box 318 to be updated, and causing data associated with the location and menu options specific to the location to be presented in location window 320. Location windows preferably formatted in the same manner as that indicated in Figure 8, except radio button 336 is checked. Favourite locations menu 352 also includes an "organise" menu option 354, whereby the user is presented with an "organise favourite locations" menu option as illustrated in Figure 10. This organisation menu allows a sorting selection of the favourite locations list to be set. For example, the favourite locations list may, in addition to sorting by proximity to the current location, be sorted by proximity to another selected stored location (for example a home location), or sorting by name. Items may also be deleted from the favourites list via organise favourites locations menu 356.

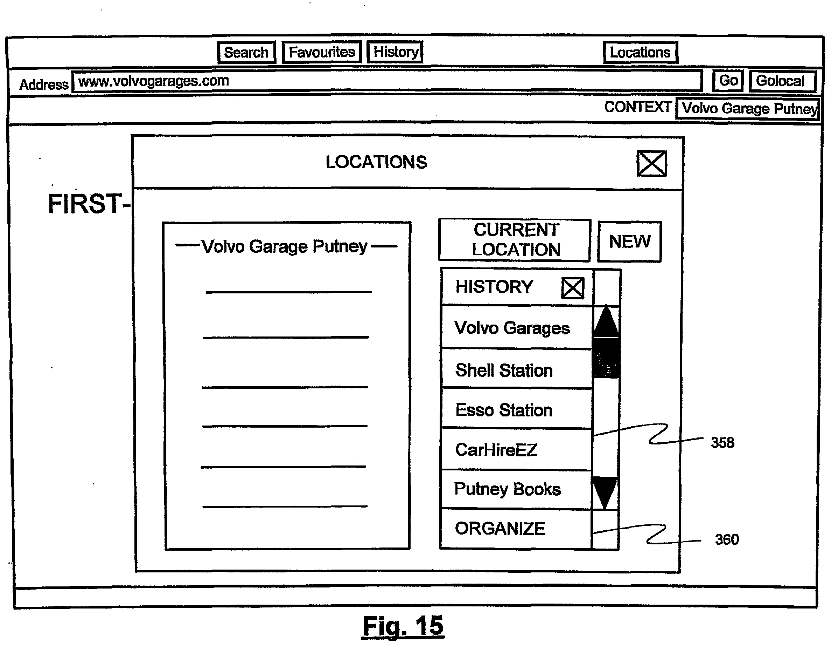

Referring again to Figure 8, a further general menu option provided in pop-up location menu 319 is a location history selection button 344, whereby a history list menu 358 as illustrated in Figure 15 is accessed. Location history list 358 functions in a similar manner to favourite locations list 352, and also includes an organise option 360, which provides a "organise location history" menu similar to "organise favourite locations" menu 356 described above. Location history list 358 includes a list of all recently-accessed items of locational content, identified by a user-friendly name associated with the locations in question.

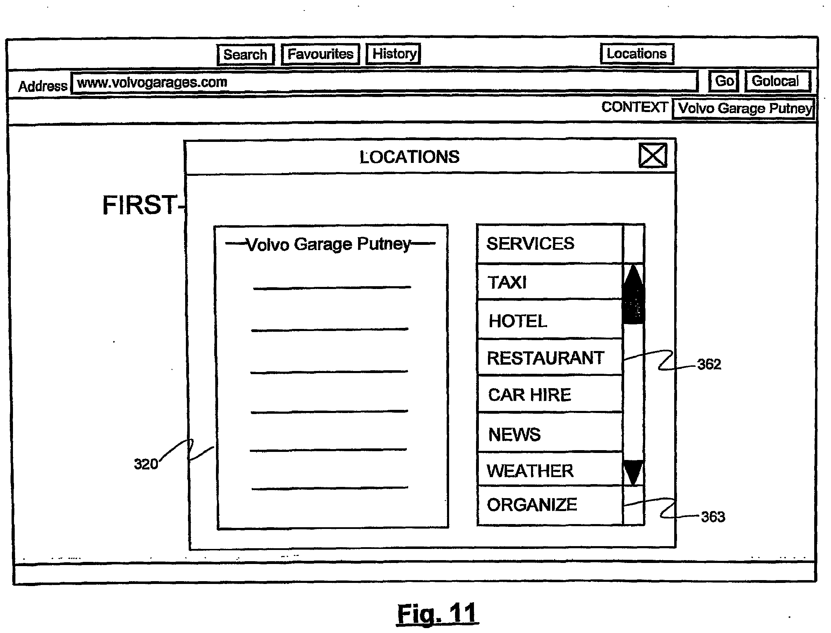

Referring again to Figure 8, favourite services selection button 346, on actuation, provides a favourite services list 362, as illustrated in Figure 11. The list consists of a set of service category names of services which may be pre-set in the terminal application, or added to by the user. The list of favourite services is stored in a data store of the user terminal. On selecting a favourite service from the list, by clicking on the service name, a service request message is generated by the browser application containing a service code for the selected service and geographical location data relating to the current contextual location. Thus, for example, if a "taxi" service is selected from the favourite services list 362, whilst "Volvo Garage Putney" is selected as the current locational context (indicated in location window 320) a service request message containing the following URL is automatically generated by the user terminal:
*www.golocal.to*/*?X=6192371&Y=6123241&N=VolvoGaragePutney&S=Taxi*

An exemplary location-based response generated by the "golocal.to" server is illustrated in Figure 12, containing links 364, 366 to resources specific to suppliers indicated within the location service directory as being local to the indicated geographical location in the service request message. Additional data, such as a telephone number, may accompany the links 364, 366. Of course, the suppliers may not have Web or WAP sites and the location-based response may simply provide contact details for the suppliers. In addition, geographical location data, as described in relation to Figure 7, may also embedded in the hypermedia resources and represented by the characteristic icons 368, 370. These icons, when clicked upon, actuate within the browser application the generation of location service menu 319, with a location window 320 containing geographical location data specific to each of the suppliers indicated in the hypermedia resources. Since the service request message also includes the current contextual location, the location-based server is capable of generating a map 372 containing indications 374, 376 of the geographical locations of each supplier and further containing an indicator 378 of the current contextual location. The hypermedia resources also include resources for changing the scale of the map, or panning the view in of four directions away from the initial map, which is preferably centred upon the current contextual location.

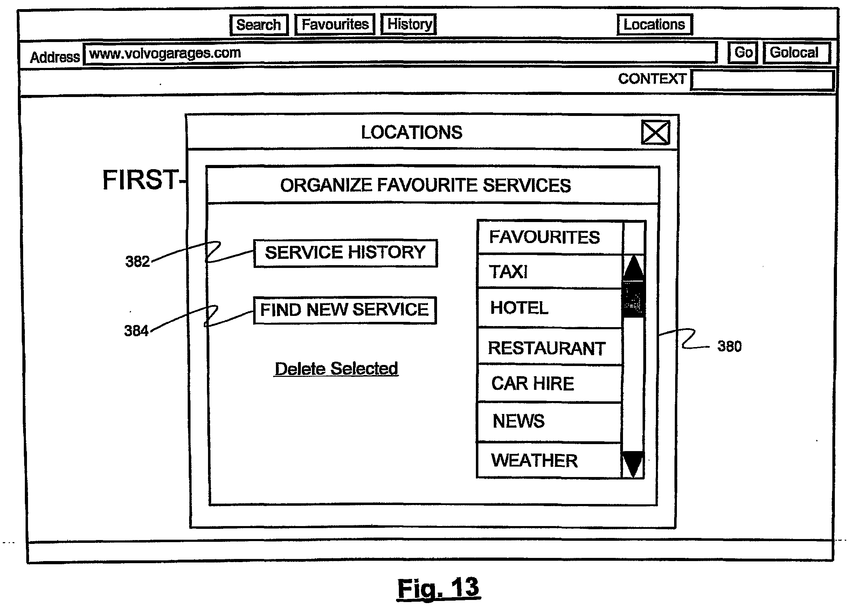

Favourite services menu 362 also includes an organised services menu option 363, whereby an "organise favourite services" menu window is generated on the user interface, as illustrated in Figure 13. This menu 380 includes a "service history" selection button 382, which when actuated presents a list of recently-accessed services, along with the locational context in which those services were accessed, for selection by a user to allow the user to place any new services identified therein within the favourite services list. The user can then access services which have been found in a certain contextual location to be readily accessed in other location contexts, by means of the favourite services list. In addition, menu 380 includes a "find new service" selection button 384, which allows entirely new services to be found by the generation of a service request message, containing an indication that entirely new services are being searched for, which is then transmitted to a predetermined location-based contents server, such as the "golocal.to" server described above.

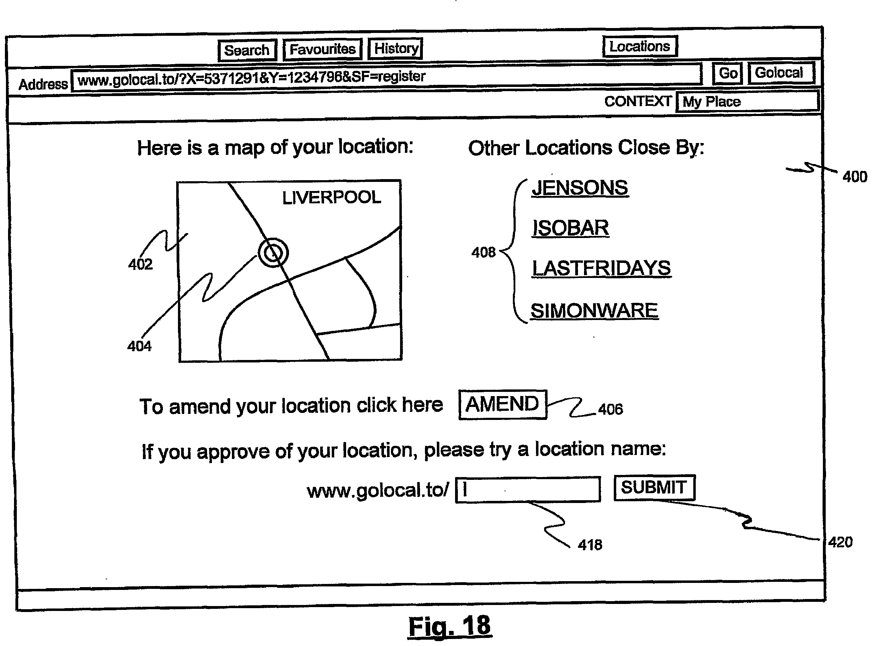

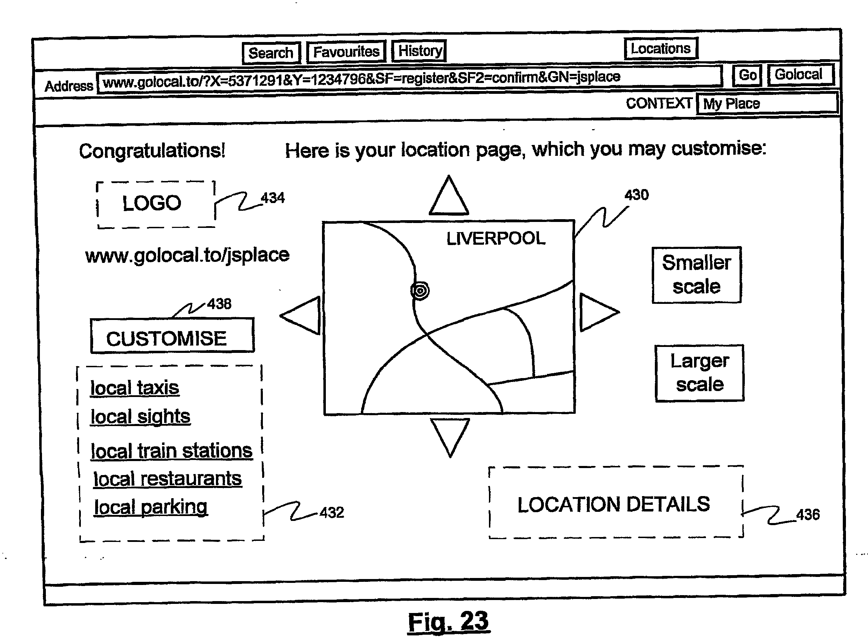

Referring again to Figure 8, pop-up menu 319 comprises a "register a location" selection button 348, whereby the user is able to generate a service request message containing the current contextual location and an indicator that the current contextual location is a location in which the user wishes to register by means of a process to be described below in relation to Figures 18 to 23. The generated service request message contains the following type of URL:
*www.golocal.to*/*?X=5371291&Y=1234796&SF=register*

Thus, it is by means of a server function code that the intention of the user to register a particular location is indicated to the server. The request may be handled by a location-based contents server such as contents server 30 or 32 illustrated in Figure 1, or may be handled by an entirely separate server, identified by a different domain name, like the location registration server 50 illustrated in Figure 1. In the alternative, one or more location name "resellers" could be appointed, whereby location names may be registered at any of a number of servers connected to the Internet, on behalf of location registration server 50.

Referring again to Figure 8, locations menu 319 also includes a "general options" selection button 350, whereby various options relating to locational data generally may be set. One example of such an option is illustrated in Figure 14, namely a "privacy settings" options menu 380.

The privacy settings option menu 380 allows a user to set a maximum accuracy with which location data is specified in service request messages sent from the user terminal. By setting a higher accuracy, the user is able to obtain location-based services which are more specific to his location, and therefore potentially of more use to the user. However, at the same time, the location data which is sent also more accurately identifies the user's location, which some users may not be comfortable with for various reasons. Therefore, the privacy settings menu preferably includes an accuracy option list with different accuracy settings. For example, in the example shown in Figure 14, the accuracy settings include four possibilities, namely to within 10 metre accuracy, to within 100 metre accuracy, to within 1 kilometre accuracy, and to within 10 kilometres accuracy. Even with a relatively coarse accuracy setting (to within 10 kilometres) many location-based services (such as weather services, news services, etc) can be usefully provided, without giving away a great deal of information about the exact location of the user. On the other hand, with a finer accuracy setting, for example to within 10 metres, the user's location on a map, and other services which are more location-specific can be provided by a location-based content server.

In the above, a preferred modified decimal format, a Placecode format, for location data is described.

In this, and other (alpha)numerical modes of representing locations, the different accuracy settings may be implemented by the browser restricting each coordinate to a maximum number of characters, the number being incremented (e.g. by one) for each more accurate privacy setting.

In addition to the accuracy settings menu 382, the options menu box also includes general privacy settings for associated data. Namely, settings box 384 allows a user to specify which data, from all items of associated data, which the user does not wish to be automatically included in any service request messages. For example, the user may wish to hide phone number data and address data, and other personal identifiers. On the other hand, they may be happy for their username, location type, etc to be automatically included in any service request message. Again, by including more associated data, the user is able to obtain potentially more useful data. As mentioned above, similar privacy settings may be set on a per-location basis. Additionally, privacy may be set on a per-service basis, allowing privacy settings to be set for each service (preferably using a settable overridable default settings set for all services). Such settings also preferably specify a maximum accuracy to which location data is provided depending on the level of trust given to the service, or a level of accuracy appropriate to the service.

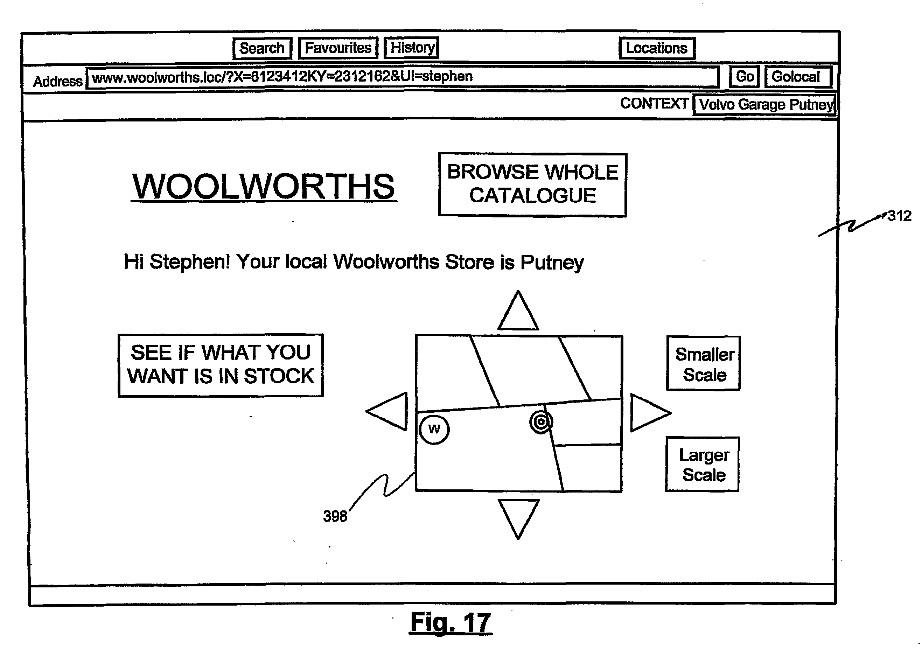

In the above, the performance of various functions, and the setting of various characteristics in relation to various functions, for contextual location data is achieved via interaction with a pop-up location menu box 319. Figures 16 and 17 illustrate further manners in which functions and characteristics of functions may be set via the user interface in relation to geographical data stored by or received by a "location-smart" hypermedia browser application. As mentioned above, the retrieval of information local to a location from a location-based server may be achieved merely by menu button 316. Figure 16 illustrates the response received from a location server when the "golocal" button is actuated.

As illustrated in Figure 16, the response received from the location-based server preferably includes service directory links, consisting of URLs containing the current location data and a service code specific to each of the indicated service categories. By clicking on one of the service codes, the user accesses a directory of services in the current location. The response may also include links to individual directory listings for suppliers, as indicated at 391, containing hyperlinks either to supplier content pages or directory listing content pages specific to the suppliers which are present in the locality of the contextual locations. Furthermore, the response may include a location-specific map portion 394 centred on an indication of the current contextual location 396. The response further includes a local search option, provided by form text entry box 392, whereby keywords may be entered by a user. On clicking the associated submit button 394, a service request message is sent to an appropriate location-based server containing the keywords and the current contextual location data.

Figure 17 illustrates a further user interface showing the result of a "location-smart" hypermedia browser application accessing a location-enabled server. As discussed above, the identification of the location-enabled server may be carried out by storing individual server, or resource, identifiers, such as domain names, in the terminal location, such as the case for the "golocal.to" service. Alternatively, the indication may take the form of a top level domain name such as a ".loc" part of the network resource identifier. In the example shown in Figure 17, the network resource accessed is identified by *www.woolworths.loc*, the ".loc" part of the identifier indicating that the resource is location-enabled. The "smart-terminal" recognises the resource as location-enabled, either when the resource identifier is manually typed into address entry box 302, or when a hyperlink is selected within hypermedia content window 312 containing the network resource identifier, and in response (preferably without user interaction, but possibly with one or more intervening user interactions) generates a service request message containing not only the network resource identifier but also data indicating the geographical location of the current contextual location, along with any suitable associated data stored in the user terminal. In the example shown in Figure 17, the terminal application has included this data in the URL of the network resource, to generate the following URL:
*www.woolworths.loc*/*?X=6123412&Y=31216&UI=stephen*

The additional data included in this case is a user identifier, such that the location-enabled resource may generate location-specific data which is also personalised with the user name of the user. An example of a personalised and location-specific response is illustrated in hypermedia content window 312. The content includes a location-specific map 398, which may indicate the current contextual location in relation to resources associated with the network resource, for example in this case a Woolworths store. This automatic inclusion of geographical location data, and associated data, provides a useful automatic personalisation mechanism where network resources are identified which are known to allow such personalisation. The network resource identifier is used to determine whether or not the additional data is included in a service request message, not only because this ensures that only location-enabled websites are provided with the information, but also because this ensures a degree of user privacy. Namely, if the user is able to identify characteristics of network resources to which his contextual location will be automatically identified, user privacy is maintained. Namely, users can select whether or not to transmit personal data such as personal location data.

While it has been described above how a user may generate a request for location-based services from a content server by first interacting with user interfaces presented by a terminal-side location application and/or an applet previously received from the content server thereby selecting locally stored location and any associated data and only then sending a service request message to the content server, it is also possible to first access the content server and, through interaction with user interfaces provided by the content server, to specify location data and any associated data stored locally to the user terminal for sending to content server to obtain the location-based service or for sending to any other server or user terminal.

Unlike the terminal-side application, the content server does not generally have access to location and associated data stored locally to the terminal and thus, cannot present meaningful labels representing specific locations such as the user-friendly names chosen by the user for an item of location data. However, through interaction with user interfaces specific to the service provided by the content server, the user may nevertheless specify one or more locations and any associated data. This may be achieved by means of a query language for location and associated data. For example, queries may be embedded, using for example in URLs or script functions as described, to hyperlinks contained in Web pages or WAP cards presented by the content server or, in alternative embodiments, contained in e-mail messages, text messages and so on. Upon activation of the hyperlink at a user terminal, the query is processed by the user terminal application, one or more items of location data and/or associated data are selected on the basis of the query, and a service request message generated and sent to the content server or another server or user terminal as a result.

The query language may specify one or more locations and associated data from the total set of locations and associated data stored in the user terminal by means of conventional database queries used with known simple or relational databases such as Microsoft™ Access. Specification may occur by setting parameters for one or more fields of the location database, such as any of the associated data fields or the location data itself. Specification may occur by a location data item being identified in the data store, in a field such as the "type of location" field described above, as being of a well-known or standardised type - for example, the current location of the user/terminal is a well-known standard type of location. Similarly other well-known types of location include the current contextual location, one or more locations identified as destinations or a route (destinations or waypoints contained in a route may be ordered and identified as the first, second, third destination and so on, also destinations may be associated with date/time information thus creating an itinerary); a departure point, the user's home or office location the user's car and so on. One or more locations may be identified in the data store as being of a particular well-known type. While it is impossible for more than one location to be the current location of the user/terminal, there may be more than one location of the type: static or dynamic, a country, a building, a train station, an airport, a restaurant, a night club, a department store, a hotel, a tourist attraction, a motorway junction, a car, a person (ie a locatable personal mobile device assumed to be co-located with the person) and so on.

Specification of location and associated data may also occur using parameters such as equivalence or boundary criteria (greater than, less than etc.) for location or associated data - for example, all locations within a certain distance of a specified location (which location may itself be specified from the data store rather than by the content server - for example all locations within 30 miles of the current location of the user/terminal), all locations where the associated data country name equals any one of UK, FI or US, all dynamic locations where the validity period is still current or where the date/time-stamp is within a specified period or periods, all locations where the associated fixed or mobile telephone number has a specified prefix and so on. Specification may also occur by record number - for example, favourite location records 3 to 7 or historical location records 1 to 5.

Where formats such as NVML, POIX, and GML may be used, specification of location may occur using parameters relating to any of the defined elements of those formats. Specification may also occur by combining two or more simple specifications with logical operators. For example, a combined specification may be formulated to identify all train stations within a thirty mile radius of the user's office but not having the name "Charing Cross".

Thus it can be seen that location and associated data may be specified by a content server using well-known criteria without any "specific knowledge" of the locations and associated data actually stored by the user. It should also be noted, that dynamic location data such as the current location of the user, the user's car or another person, may inherit associated data of static or other dynamic location data as a result of the terminal application detecting a proximity relationship between the two, as has been described above. Inherited associated data may be provided in response to a query from a content server as well as the specified location data. Furthermore, a query may simply "specify" that one or more locations are to be selected by the user from the total set of locations or from an otherwise specified subset by means of user interaction with a generated user interface after receipt of the query. For example, a query may enable user selection one location from all the locations within 5 miles of the specified location of a pizza delivery service, this being the coverage area of the service.

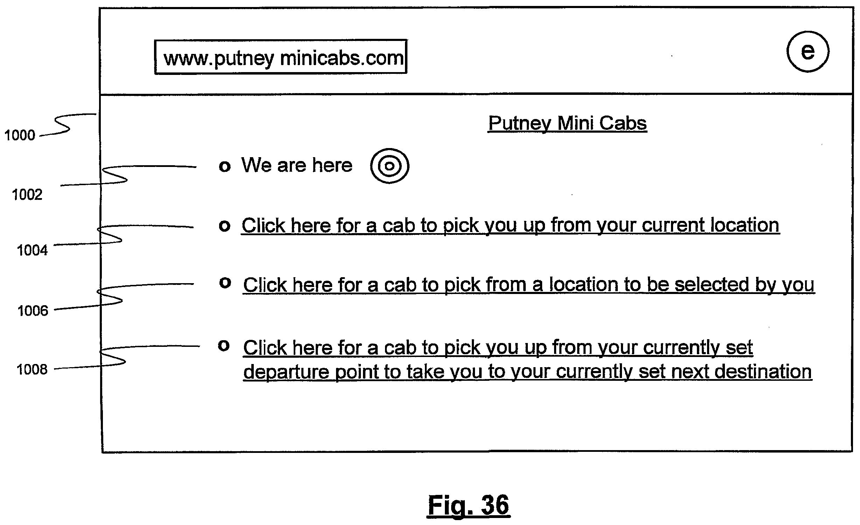

Figure 36 shows an exemplary Web page 1000 of a content server for a taxi company, Putney Mini Cabs, containing an item of location data 1002 representing the location of the company and three other hyperlinks for querying location and associated data stored locally to the user terminal.

Exemplary hyperlink 1004 contains an embedded URL of the form:
*"geo:*//*query={location type=current location&location format=standardlatlong&no associa ted data}&return address=http:*//*www.putneyminicabs.com*/*?<<query>>*"

On activation of this hyperlink, the query is passed the user terminal location application associated with the protocol prefix "geo:" and the current location of the user selected. Note, if the current location is not valid, the user terminal application may obtain a valid current location as described above before passing the result to the content server. The format of location data required by the content server is specified as "standardlatlong" and so the terminal application converts the location data into this format, if it is not already stored in that format. No associated data is required by the content server and this is indicated in the hyperlink. The URL of the content server is provided in the hyperlink as a return address to enable the terminal application to generate and send a service request message back to the content server. Note that the return address includes the protocol header "http:" indicating that the return communication is to take place using the hypertext transfer protocol. Other protocols and corresponding communication modes may be used. Also note that the return address includes the text "«query»". On generation of the service request message, this is replaced by the automatically selected location or locations, ie in this case a URL of the form:
*"http:*//*www*.*putneyminicabs*.*com*/*?{X=435*.*32542*&*Y=54542*.*432}"* which is passed by the terminal application to the browser client to retrieve a location-enabled booking form from the content server.

Exemplary hyperlink 1006 contains an embedded URL of the form:
*"geo:*//*query={{user selected location&number=1}&location format=standardlatlong&no as sociated data}&return address=http:*//*www.putneyminicabs.com*/*?<<query>>*"

On activation of this hyperlink, the query is passed the user terminal application associated with the protocol prefix "geo:" which generates an appropriate user interface for user selection of a single location. A service request message is generated and sent to the content server as before.

Exemplary hyperlink 1008 contains an embedded URL of the form:
*"geo:*//*query1={location type=departure_point&location_format=standardlatlong&no associ ated data}&query2={destination&location_format=standardlatlong&no_associated data}&return_ad dress=http:*//*www.putneyminicabs.com*/*?departure_point=<<query>>&destination=<<query2>>*"

On activation of this hyperlink, the query is passed the user terminal application associated with the protocol prefix "geo:" and the two location items identified in the location data store as the departure point and (first) destination point are selected. A URL is generated of the form:
*"http:*//*www.putneyminicabs.com*/*?departure_point={X=5432.654&Y=55.4534}&destination = {X=543.4251&Y=65.543}*"
which is passed by the terminal application to the browser client to retrieve a location-enabled booking form from the content server.

On receipt of the generated service request message, the content server may perform various functions such as querying a database of minicabs, selecting an appropriate cab (for example the closest free cab to the departure point of the user), sending an SMS message to the cab instructing the pick up, waiting for confirmation and generating an appropriate response for sending to the user terminal, such as a Web page confirming the booking.

It is also to be understood that the return address specified may not be that of the content server from which the hyperlink containing the query was received but may identify any server or terminal. Thus hyperlinks may be used in the Web site of one business to generate service request messages for sending to location-based content servers of other businesses, thus enabling partnering and "click through" navigation, or for sending location and associated data messages to users.

While it has been described above that on activation of a hyperlink containing an item of location and/or associated data, received by a user terminal from a Web page, e-mail, SMS message for example, the user may be presented with pop-up menus to select and perform certain functions in respect of that item, any one or any combination of these functions may also be specified within the URL containing the location and associated data. Thus on user activation of the hyperlink, the one or more functions are performed in response by the terminal application.

For example, hyperlink 1002 contains an embedded URL of the form:
*"geo:*//*FC=add&IV=Putney Minicabs{X=63474&Y=75497&PA={NS=19&SS=Putney Avenue &TC=London&PZ=W2TY&C=UK&FT=445649376}}"*

Activation of this hyperlink causes the location and associated data for Putney Minicabs to be automatically added to the user's favourites list of locations.

It has been described above how user interaction with Web pages or WAP cards received from a content server may enable the content server to query the location data store, send one or more locations up to the content server or another content server and thus a location-based service may be provided. Additionally, one "location smart" user terminal may generate a query for another "location smart" user terminal. Through interaction with user interfaces presented by the terminal application, a user may specify a query to be sent to a selected other user terminal. For example, the user may specify that he or she requires the next destination of the recipient user, and an email may be automatically generated by the user terminal application containing a hyperlink containing a query similar to the examples given above together with the return e-mail address of the sending user. The hyperlink URL generated may be of the form:
*"geo:*//*query={location type=destination}&return address=mailto:abbey@hotmail*.*com?subj ect=Here is my destination&body=<<query>>*"

The hyperlink may be embedded in text warning the user that a location will be sent if the link is activated so that informed consent may be given by the recipient since, unlike with the content server examples above, the recipient has not originated the interaction and therefore cannot be assumed to have consented. On activation of this hyperlink, the recipient user terminal passes the query to the user terminal application associated with the protocol prefix "geo:" and the home location of the user selected and substituted for "«query»" in the return address. An email for abbey@hotmail.com (the sender's email address) is automatically generated using the "mailto:" protocol header and includes "Here is my home location" as a subject header and the selected location ad associated data as a part of the body of the e-mail. The recipient user may then add further text to the email and send it in a conventional manner.

Again, it is to be understood that the specified return e-mail address need not be that of the sender of the query request, but any other user. Other protocol header may be also used so that the return communication may be sent in other communication modes. For example, a user of a mobile phone may send an email query to a user of a PC providing his or her telephone directory number (MSISDN) as a return address for sending an SMS message. The hyperlink URL may look like this:
*"geo:*//*query={location type=departure_point}&return address=SMSto:0777577775?body=H ere is my departure point <<query>>*"

Thus, it can be seen that "location smart" user terminals may query other "location smart" user terminals in a similar manner to content servers querying "location smart" user terminals as described above. More generally, any data processing device capable of communicating over a communications channel with a "location smart" user terminal may query the locations stored therein. Any communication mode may be used for the sending of the query and for the reply which may use a different communication mode. Such communications channels may use any transfer modes/protocols such as those described above. Thus "location smart" user terminals may be queried over SMS, MMS, email, and other messaging systems, HTTP, WAP, in call using DTMF or voice and so on.

Furthermore, as has been indicated above, location data stores and/or user location applications may be implemented network-side rather than terminal-side. Accordingly, in general, any data processing device capable of communicating over a communications channel with another data processing device running a location application of the present invention (whether network-side or terminal-side) may query that data processing device for one or more specified or user-selected locations and associated data (whether stored locally to the data processing device or remotely) using any communication mode for sending the query and any (possibly different) communication mode for sending the reply.

In further embodiments of the present invention, functions or commands specified by other data processing applications, such as content servers or other user terminals, may be performed by a network-side or terminal-side location application. While it has been described above how on receipt of an item of location data, for example in a Web page, e-mail or SMS, the user of a "location smart" user terminal may instruct the location application to add the location and any associated data to his or her favourites list, more varied tasks may be performed by the location application on the basis of commands or instructions contained in data associated with one or more items of location data. For example, a hyperlink on a Web page may contain a command to add two locations to the user's favourite locations list and identify those locations as a first and a second destination associated with specified date/times, thus forming an itinerary. The hyperlink URL may be of the following form:
*"geo:*//*command={add_location={N=Heathrow&X=123456&Y=9876543&H=53&HE=10&L T=airport&D=1*/*7*/*2000&T=09:30&set_as_destination1}}&command={add location={N=Helsinki_V antaa&x=1543.432&Y=543.4323&H=54&HE=143&LT=airport&D=11712000&T=12:15&set as_des tination2}}"*

Other commands may be specified using defined command types for performing any of the following functions: adding one or more items of location and associated data (including associated files as described above such as a photographic image or video file; a map file; an audio file; a text file; a diary or calendar event; a hypermedia file; an e-mail file; a program file; a contacts record, such as a vCard), amending one or more items of location or associated data, deleting locations, setting existing locations as certain well-known types (such as departure point, destination, home, office, car, restaurant, airport, tourist attraction, etc as above); sending locations to specified or user selected addresses, generating a service request message in respect of one or more items of location or associated data and so on.

Generally, any function that may be selected through user interaction with user interfaces presented by a terminal-side or network-side location application may equally be specified in a hyperlink so that the function may be performed by the user merely activating the link. Using specified commands can be seen as a more general case of the examples given above of adding a single location to the user's favourite list and of querying the locations application and data store to generate a service request message for sending back to a content server. In general, commands may be performed in respect of one or more items of location and associated data stored in a user' locations data store or items of location data provided along with the command. Specification of one or more stored location data items upon which to perform a function may occur using a query language as has been described above. Furthermore, commands may be combined to instruct the location application to perform multiple tasks. For example, a hyperlink contained in a Web page may contain a command to enter the two destinations in the user's favourite locations list as described above and also to generate a service request message for ordering a taxi to collect the user from his current location as described above. The hyperlink may be of the following form:
*"geo:*//*command={add location={N=Heathrow&X=123456&Y=9876543&H=53&HE=10&L T=airport&D=1*/*7*/*2000&T=09:30&set as destination1}}&command={add location={N=Helsinki_V antaa&X=1543.432&Y=543.4323&H=54&HE=143&LT=airport&D=11712000&T=12:15&set as des tination2}}&query={current location&location format=standardlatlong&no associated data}&return address=http:*//*www.airportcabs.co.ukl?destination={N=Heathrow&X=123456&Y=987654&LT=airp ort&D=1*/*7*/*2000&T=09:30}pick up=<<query>>"*

### Network-Side Applications for Utilising Location and Associated Data

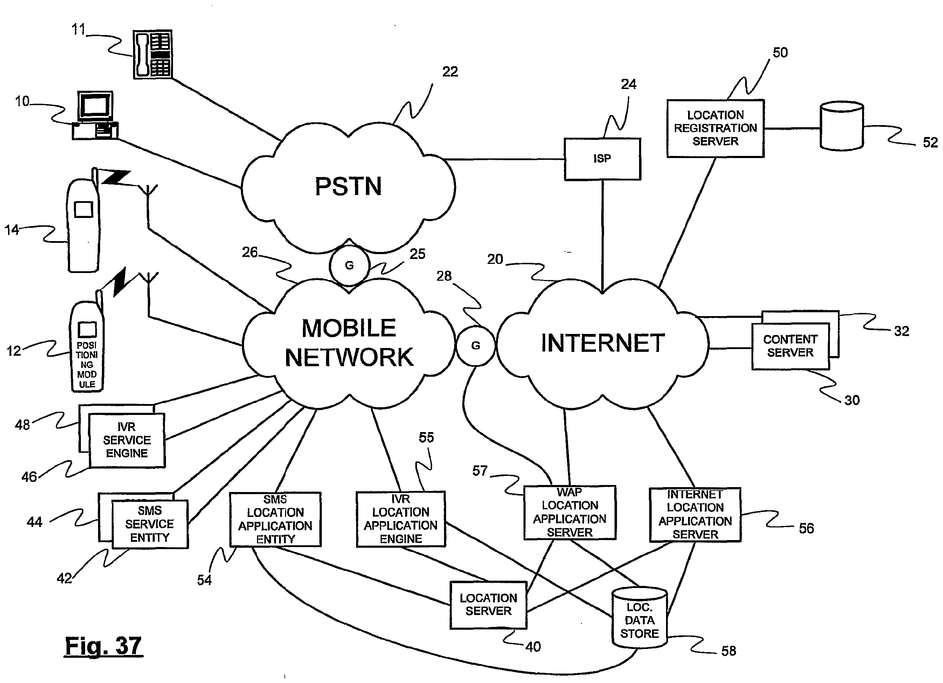

While terminal-side applications, data stores and user interfaces for storing and utilising location and associated data have been described above with respect to "location smart" terminals, and will be further described below, the same or similar functionality may be provided to users of "location dumb" or conventional user terminals running conventional communication applications such as Web or WAP browsers, SMS or text messaging applications, telephony applications and so on. This may be achieved by means of network-side applications and data stores as will now be described in detail. Generally similar functionality may provided by network-side location applications as by terminal-side location applications and it is to be understood that functionality specifically described in this document in respect of terminal-side embodiments is equally applicable to network-side embodiments and vice versa. Figure 37 schematically illustrates network arrangements which enable user terminals to access network-side applications for utilising location and associated data. Except where otherwise stated, elements of Figure 37 with reference numerals corresponding to elements of Figure 1 are as described above. However, user terminals 10, 11, 12 and 14, are not necessarily "location smart" in that they need not comprise any terminal-side applications for handling location or associated data. In other words, they may be conventional user terminals. For clarity, SMS positioning entity 36, IVR positioning engine 38, and Internet positioning server 35 have been omitted from Figure 1a, although they may be present in embodiments of the present invention and may be used to provide dynamically obtained location data to network-side location applications.

Additional elements are shown in Figure 37, namely an SMS location application entity 54, an IVR location application engine 55, an Internet location application server 56, a WAP location application server 57 and a data store 58 for storing location and associated data. SMS location application entity 54, IVR location application engine 55, Internet location application server 56, and WAP location application server 57 each comprise network-side applications for utilising location and associated data as will be described below.

SMS location application entity 54 is connected to mobile network 26 for access by any of user terminals 10, 12 and 14 in a similar manner as has been described above in relation to SMS positioning entity 36. IVR location application engine 55 is connected to mobile network 26 for access by any of the four user terminals 10, 11, 12 and 14 in a similar manner as has been described above in relation to IVR positioning engine 38. Internet location server 56 and WAP location server 57 are connected to Internet 20 for access by any of user terminals 10,12 and 14 in a similar manner as has been described above in relation to Internet positioning server 34. SMS location entity 42, IVR location engine 44, Internet location server 46, and WAP location server 48 are all also connected to location server 40 and data store 58, whereby dynamically obtained locations and previously stored locations and associated data may be accessed respectively.

In an alternative embodiment of the present invention, WAP location server 48 may also be connected directly to gateway 28, which performs the function of a WAP gateway, enabling subscribers of mobile network 26 with access directly from mobile network 26 without passing through Internet 20. In a further alternative embodiment, Internet location server 46 may be connected directly to ISP 24 whereby subscribers to ISP 24 may access Internet location server 46 directly without passing through Internet 20. Advantageously, direct access to WAP location server 48 and Internet location server 46 through direct connection to gateway 28 and ISP 24 enhances security and privacy of data exchange as well as reducing the need for repetitive and tedious manual user authentication. In a further alternative embodiment, IVR location engine 44 may be connected to PSTN 22 enabling direct access over voice connections by fixed terminals 10 and 11 to network-side applications for utilising location and associated data.

Various alternative network-side embodiments of the present invention are possible in which only one or more of SMS location entity 54, IVR location engine 55, Internet location server 56, and WAP location server 57 are present. Embodiments comprising only Internet location server 56 and/or WAP location server 57 are expected to be of particular utility in future.

An embodiment will now be described wherein only Internet location application server 56 is present and runs a network-side location application for providing users with functionality similar to that provided by terminal-side location applications as have been described above. Internet location application server 56 is a Web server connected to Internet 20. Internet location application server 56 is associated with a URL address such as "www.placebook.com" and may thus be accessed by a conventional Web browser running on any of user terminals 10, 12 and 14.

Internet location application server 56 generally provides services to a plurality of user terminals which may be of different types and is connected to location server 40 and location data store 58 which provide dynamic and stored location and associated data for a plurality of users. Thus, Internet location application server 56 must identify and, preferably, authenticate a given user before providing access to a user's stored data. This may be achieved by requiring the user to enter a registered user name and password to login to Internet location application server 56 upon a first and each subsequent access session. Alternatively, after first registering the username and password, Internet application server 56 may set a cookie at the user terminal which will then be sent along with the service request message upon subsequent access from the user terminal. Other authentication processes are possible.

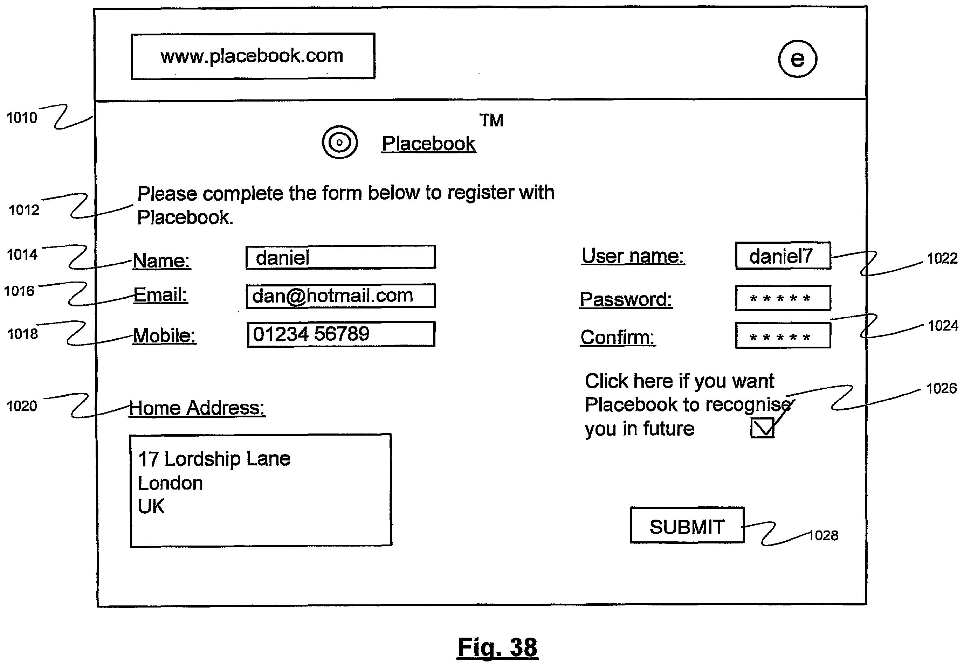

Figure 38 shows an exemplary Web page 1010 for first registering a user onto Internet location application server 56. An introductory statement is presented at 1012, and text entry items 1014, 1016, 1018, 1020, 1022 & 1024 provided for user entry of the user's name, an e-mail address, a mobile telephone number, the user's home address, username and password respectively. Tick box 1026 provides the user with an option for Internet location application server 56 to automatically recognise the user upon subsequent access by means of setting a cookie at the user terminal. The Microsoft™ Passport authentication system may be used to log in to the service. After having entered the required information, the user may submit the information for registration by clicking on button 1028.

In embodiments of the present invention where Internet location application server 56 is connected to ISP 24 and subscribers of ISP 24 access Internet location application server 56 via fixed terminal 10 and ISP 24 directly, and in other embodiments where WAP location application server 57 is present and connected to gateway 28 and where subscribers of mobile network 26 access Internet location application server 56 fire gateway 28 directly, some or all of text entry items 1014, 1016, 1018, and 1020 may be prefilled from records maintained by ISP 24 or mobile network 26 respectively. In such embodiments, tick box 1026 is omitted since ISP 24 and mobile network 26 are able to identify and authenticate their subscribers through conventional means such as the username and password entered upon access to ISP 24 by fixed terminal 10 and such as by means of the MS ISDN of mobile terminals 12 or 14 which is known to the mobile network.

Upon successful registration, Internet location application server 56 creates a record for the user in its subscriber database comprising the data provided by the user and other data. One of the unique items of data provided by the user may be used as user identification data. For example, the e-mail address, mobile telephone number, or user name, may each be used as user identification data. Alternatively, a unique data item may be generated and associated with the user's subscription record to serve as unique user identification data. For example, a unique subscription record number may be used. The user identification data may be subsequently sent automatically by the user terminal, for use by Internet location application server 56, by use of a cookie set at the user terminal. Moreover, the user identification data is used to identify location and associated data records in data store 58 as belonging to that particular user.

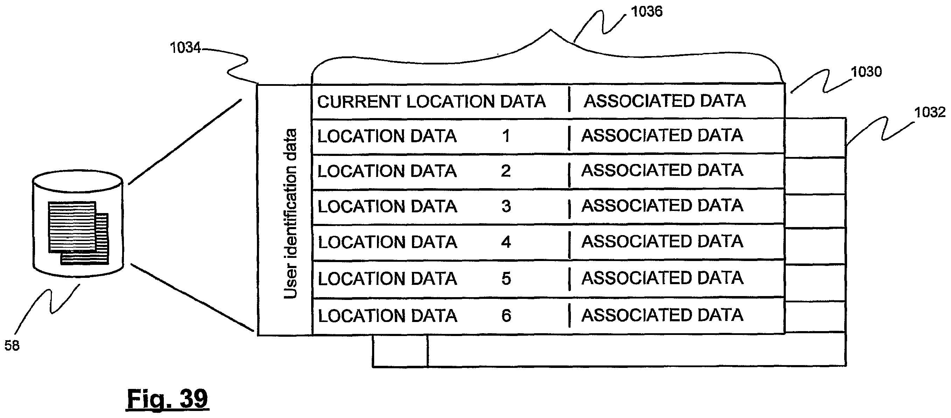

Figure 39 shows the structure of location and associated data records stored in data store 58. Two exemplary user location records 1030 and 1032 are shown. The location and associated data stored in these location records, such as location and associated data 1036 of record 130, is as described above, in particular with reference to Figure 6. However, also associated with location records 1030 and 1032 is user identification data such as user identification data 1034 of record 130. Thus, it can be seen that Internet location application server 56 provides security and privacy of data to users of its service. Location data may be stored and/or communicated in encrypted for. Preferably, public key infrastructure (PKI) is used. For example, hypertext communication may use the secure hypertext transfer protocol (HTTPS) over the secure sockets layer (SSL). Encryption techniques are generally known and will not be described further.

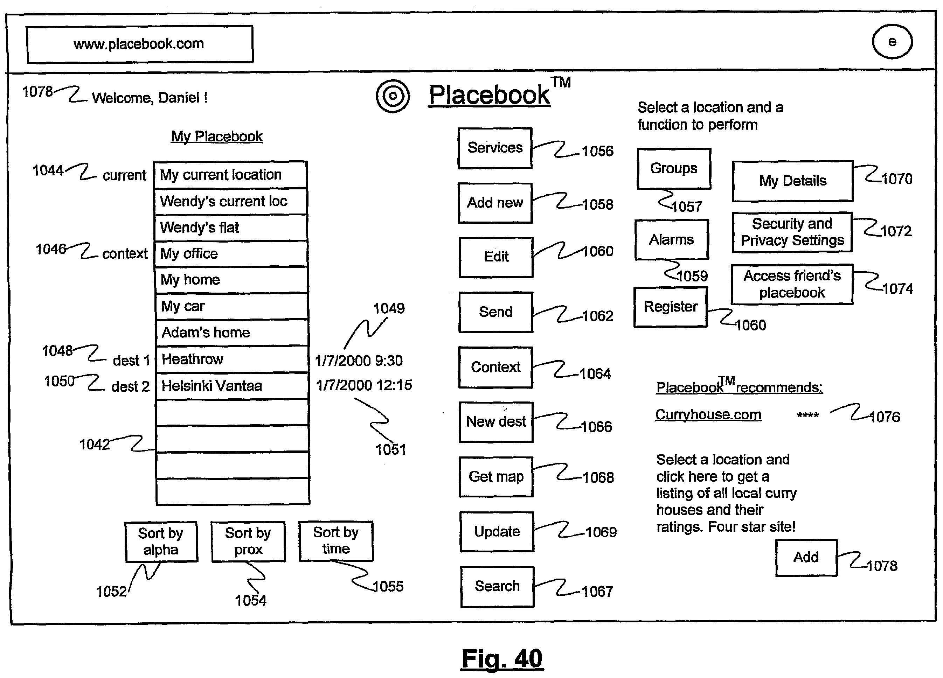

Figure 40 shows an exemplary Web Page 1040 presented to a registered user of Internet location application server 56 upon first accessing and after logging in, if required. List box 1042 displays the user's favourites list of locations identified by the user allotted name, such as "My Current Location", "Wendy's current location", "Wendy's flat", "My Office", "My Home", "My Car", "Adam's Home", "Heathrow", "Helsinki Vantaa". Alongside some of these locations are indicators 1044, 1046, 1048 and 1050 which indicate that the locations are of a predefined type such as the current, context, destination 1, and destination 2 type respectively. While indicator 1044 relates to a record "My Current Location" having no associated data, in other examples, where the current location has inherited associated data by proximity, the user allotted name may be different - for example, "My Local Pub", thus indicating that the user is currently in the pub. Time indicators 1049 and 1051 are presented alongside "Heathrow" and "Helsinki Vantaa" locations indicating that these locations have associated date/times. Thus, the user can easily see that he or she needs to be at his next destination Heathrow airport at 9:30 on 1/7/2000. Buttons 1052, 1054 and 1055 are provided for, respectively, sorting list box 1042 alphabetically, by proximity to a selected location, or by time associated with the location.

The user may select one or more locations from list box 1042 by clicking on them. Buttons 1056, 1057, 1059, 1060, 1062, 1064, 1066, 1067, 1068 and 1069 may then be used, by clicking on one of them, to perform functions in respect of the selected one or more locations and associated data. Button 1056 enables services to be selected from a user favourites list of services or entered manually, for generating service request messages to be sent to content servers in a similar manner as has been described above in relation to terminal-side location applications. Similarly, buttons 1060, 1062, 1064, 1067 and 1068 provide the user with, respectively, user interface means to edit, send to other users, set as a contextual location, search for network resources, obtain a map, and perform a registration function in respect of one or more selected locations in a similar manner as has been described above and will be further describe below in relation to terminal-side location applications. Button 1066 enables the user to set a selected location as a new destination. Button 1058 enables the user to add a new location to his or her favourites list by entering location and associated data as has been described above. The location data may be set by default to the current location data so that the user may easily save his or her current location. However, the user will be given the option to specify another location by means of manual text entry or pointing to a map as have been described above, or by other means. Button 1057 enables to user to create groups of locations arranged in flat or hierarchical structures. Button 1059 enables users to set location-based alarms based on proximity of two or more locations such as "Wendy's current location" and "My home".

When sending selected locations and associated data to other users, user interface means are displayed for selecting from a variety of communication modes, such as instant messaging, e-mail, text or SMS messaging, Web or WAP push and so on. Further user interface means are displayed for entering or selecting an e-mail address, mobile telephone number or other network address for the recipient, for entering a user message, and for sending the communication when it is finished. In embodiments of the present invention where location applications are only provided network-side, a hyperlink containing a URL, such as the following:
*"http:*//*www.placebook.coml?command=add location{N=MyHouse{X=23456&Y=9876543& H=53&HE=10&LT=house&PA={NS=19&SS=BurgessAvenue&TC=London&PZ=SE1 6TY&C=UK}}"*
is generated by the Internet Location Application Server 56. This hyperlink is included in the message, along with the user-generated message, generally comprising text. The hyperlink may be located within the message text, or contained in a separate attachment, such as a Web page attached to the message as a data file. The message is then sent by the server 56 to the recipient address specified by the user. Alternatively, the message may be passed to the user terminal in a format allowing the user terminal to forward the message in a selected terminal-to-terminal message format, such as e-mail, SMS or instant messaging.

In the above, the URL itself includes the geographical parameters, however this is not necessary. In an alternative embodiment, a hyperlink, containing the network resource identifier www.placebook.com, and the geographical location data are included as separate parts of the message in an associated manner. The geographical location data may for example be included in the form of a code such as the Placecode™ format described above, along with instructions for the user to type in the code once the network resource is accessed. On the entry Web page of placebook.com, an entry box is then provided for the input of the geographical location data by the user manually. In the above, the URL format containing the location data provides backwards compatibility, in that recipient terminals do not need to recognise the parameters accompanying the network resource identifier as geographical parameters; this is performed at the network resource end. Alternatively, the geographical location data may be included without a network resource identifier, but in a predetermined geographical data format, such as those described above, for recognition by a "location-smart" terminal. The data may for example be included in the message header or, for example as an XML file, in the message body.

Upon receipt of a message containing the hyperlink, the recipient may click on the link, thereby causing a Web browser application to be launched, or control to be passed to the Web browser application if already running, and Internet location application server 56 (which has the network resource identifier www.placebook.com) accessed by the recipient user terminal. The location and associated data following the domain name part is passed to Internet location application server 56 along with the identifier of the recipient's user terminal, if any. The recipient user may be required to login if he or she is a registered subscriber. The location and associated data may then be added automatically to the recipient users favourites list, or, preferably, the recipient user may be prompted to select whether he or she would like to add the location and associated data or edit it or perform any other function such as have been described above in relation to the received location and associated data. Where the recipient user has not registered with Internet location application server 56, he or she will first be presented with a registration Web page similar to Web page 1010 of Figure 38 and invited to register. Upon successful registration, the recipient user will then be able to add the location and associated data to his favourites list or perform another function as before.

Sending location associated data by communication modes such as e-mail, text messaging and so on, may be particularly useful for recipient users who are not registered with Internet location application server 56 or, in embodiments to be described below, where more than one Internet location application server exists and the recipient user is registered with a different one. Where, however, the recipient user is a registered subscriber of the same Internet location application server, and where the recipient user is recognised by Internet location application server 56, for example by e-mail address, mobile telephone number or other user identifier, the sending user may be given the option of storing the message containing the location and associated data at Internet location application server 56 for presentation to the recipient user when he or she next accesses the service, or for pushing to the recipient user's terminal if the user is currently logged in, using a push messaging protocol such as instant messaging, WAP push, etc. Similar messages and options will then be presented to the recipient user as have been described above. Button 1069 "Update" provides a similar function to the sending function described above, save that one or more preselected location and associated data items (i.e. a group of locations which may have been previously selected) are automatically sent, or locally stored, for one or more preselected recipient users (i.e. a group of user's network addresses which may have been previously selected). Thus, when, for example, the user has set a new destination or has moved home and changed his personal details contained in associated data of his home location record, a single click will ensure that a selected set of friends receive the updated information. Furthermore, different groups of recipient users may be preselected and associated with different sets of one or more location and associated data so that the user may easily select who to update and with what. Furthermore, automatic updates may be programmed by a user to trigger upon the occurrence of selected trigger events, such as the changing of location or associated data to specified values or upon the triggering of an alarm. For example, the user may select an option provided by Internet location application server 56 with an alarm to automatically send messages to one or more selected recipient users when a dynamic location is proximate to another dynamic location or a static location. For example, messages may be sent when the user's current location is proximate to the user's current destination, when another dynamic location, such as the user's friend Wendy, is proximate to the user's home. The messages may be sent to the user himself or herself via e-mail or text message so when the user is not logged into Internet location application server 56, he or she may still be alerted to events occurring. Thus, it can be seen that location-based alerts, and other alerts, may easily be programmed by a user of Internet location application server 56.

Buttons 1070, 1072, and 1074 respectively enable users to interact with user interface components for editing the user's personal details, changing security and privacy settings, and accessing friend's location and associated data, where authorised. The first two of these operate as described above in relation to terminal-side location applications, except via a Web browser or other hypermedia interface on the user terminal. The latter, however, has not been previously described. Registered users of Internet location application server 56 may authorise other registered users, or indeed users of other location applications whether network-side or terminal-side, to access their location and associated data. In other words, location and associated data may be shared between various users. This may be achieved by storing a list of authorised users in the subscriber database record for the registered subscriber. Authorised users may be identified by unique identification data as has been described above. On accessing another user's location and associated data, a web page may be displayed similar to web page 1040, but showing the other users location and associated data. Preferably, the ability to change the other user's location and associated data will be enabled, limited, or disabled according to access settings selected by the other user. For example, the user may select one or more locations from the "visited" user's favourites list and click on a "services" button to select a favourite service to access using the selected one or more locations. However, the user may not be allowed to edit the "visited" user's data. Preferably, the user is provided with a button for adding one or more selected locations to his or her own favourites list. Access to other user's location data stored locally to Internet location application server 56 is straightforward. However, access to user's location data stored remotely, for example on a data store connected to another Internet location application server or on a user terminal may also be achieved using query and command instructions as have been described above. This will be described in greater detail below in respect of embodiments of the present invention in which multiple Internet location application servers exist or in which hybrid network-side and terminal-side location applications or data stores are used.

Referring again to Figure 40, Internet location application server 56 may present information of potential interest to the user such as shown in item 1076. Item 1076 shows a recommended content server, with the website address curryhouse.com, together with a description of its service, and a button 1078 for adding the service to the users favourites list of services.

It has been described above how users may access content servers providing location-based services by first accessing Internet location application server 56 and then selecting a service to generate a service request message for sending to the content server. However, as with the terminal-side location applications described above, users may first access the content server, without having logged in to Internet location applications server 56. For example, a user may access the content server using a conventional browser application and subsequently make use of the location and associated data items accessible via Internet location application server 56.

Figure 36 shows a web page 1000 presented by the content server with the address "www.putneyminicabs.com" and has been described above in relation to terminal-side location applications. However, with minor amendments to the hyperlinks embedded in items 1004, 1006 and 1008, the web page may equally be suitable for embodiments of the present invention in which location applications are implemented network-side.

For network-side embodiments, hyperlink 1004 contains an embedded URL of the form:
*"http:*//*www.vlacebook.com*/*?command={query={current location&location format=standard latlong&no associated data}&return_address=http:*//*www.putneyminicabs.com*/*?<<query>>"*

On activation of this hyperlink, the browser accesses Internet location application server 56 and uploads the data appended to the domain part, which includes a specification of the data being queried. Note that this contains a command to query the current location of the user. If the user has subscribed to Internet location application server 56 and has selected to be recognised by allowing a cookie to be set, or if the user is known to ISP 24 or mobile network 26 as described above, then the users location and associated data store is queried and a service request message generated for sending to the content server as described above.

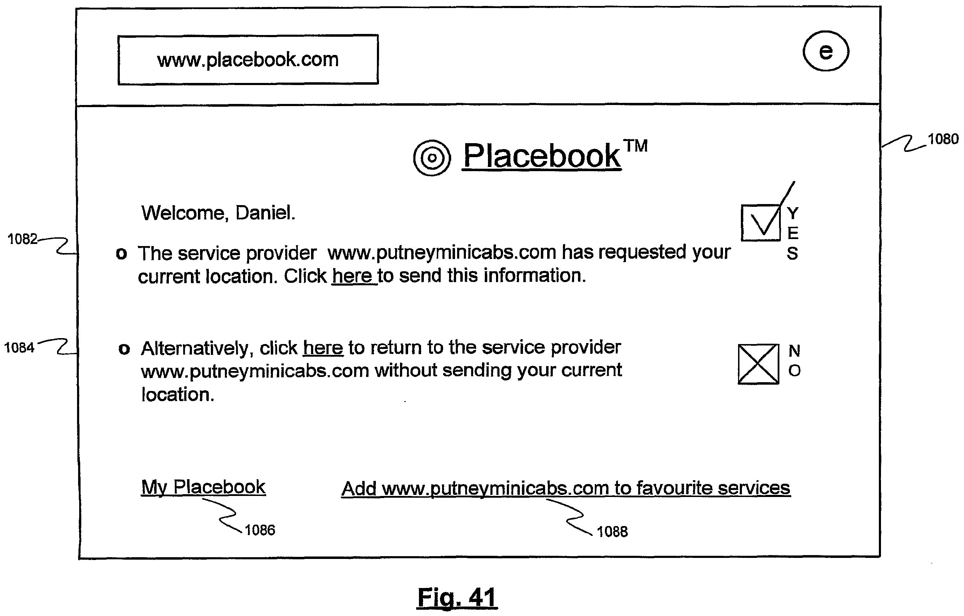

Note that the hyperlink includes a return address, the address of the content server, so that the Internet location application server may redirect the request automatically to the content server, with the query response data added to the redirect message. Alternatively, Internet location application server 56 may send a web page, such as web page 1080 of Figure 41, to the user terminal comprising the text "The service provider www.putneyminicabs.com has requested your current location. Click here to send this information." containing an embedded hyperlink 1082 containing the query response data. By clicking on this hyperlink, the user terminal sends the query response to the content server as described above. Web page 1080 also contains an option to refuse transmission of the location data, for example with a hyperlink containing the text "Alternatively, click here to return to the service provider www.putneyminicabs.com without sending your current location" containing an embedded hyperlink URL 1084 of the form:
*"http:*//*www.putneyminicabs.com*/*?request refused"*

Web page 1080 may also contain a hyperlink 1086 for accessing web page 1040 described above in relation to Figure 40 and a hyperlink 1088 for adding the service provider to the user's favourites list of services.

If the user has subscribed to Internet location application server 56 but has not selected to be recognised by means of a cookie or is not known to ISP 24 or mobile network 26, then upon sending the service request message to the content server, the user will first be required to log in before being presented with web page 1080. If the user has not subscribed to Internet location application server 56, then he or she will be invited to register first before being presented with web page 1080.

Referring again to figure 36 in relation to network-sided embodiments of the present invention, hyperlink 1006 similarly contains an embedded URL of the form:
*"http:*//*www.placebook.com*/*?command={query={{user_selected location&number=1}&locati on format=standardlatlong&no associated data}&return address=http:*//*www.putneyminicabs.com*/*? <<query>>}"*
and hyperlink 1008 contains an embedded URL of the form:
*"http:*/*www.*/*placebook.com*/*?command={query1={departure_point&location_format=standar dlatlong&no associated data}&query2={destination&location format=standardlatlong&no associate d_data}&return address=http:*//*www.putneyminicabs.com*/*?departure_point=<<query1>>&destinatio n=<<query2>>}"*

On activation of either of these hyperlinks a service request message containing the query parameters is sent to the Internet location application server 56, and in response Internet location application server 56 may send a web page similar to web page 1080 of Figure 41, informing the user of the queried location information and giving the user the option to consent or refuse by clicking an appropriate hyperlink. The consent option consists of a hyperlink directed to the content server, containing the results of the query such that a service request message containing the requested location data is sent by the user terminal to the content server. Alternatively, if the user has previously indicated consent for the content server to receive location data from his personal list, the queried location and associated data may be sent directly to the content server by the Internet location application server redirecting the request back to the content server with the results of the query added as response data in the redirect message.

Exemplary hyperlink 1002 contains an embedded URL of the form:
*"http:*//*placehook.com*/*?command={add location{N=Putney Minicabs{X=63474&Y=75497& PA={NS=19&SS=Putney Avenue&TC=London&PZ=W2TY&C=UK&FT=445649376}}"*

Activation of this hyperlink causes location and associated data for Putney Minicabs to be added to the user's favourites list of locations. Again, Internet location application server 56 may send a web page similar to web page 1080 of Figure 41, informing the user of the function to be performed and giving the user the option to consent or refuse.

It will be appreciated that Internet location application server 56 may be instructed to perform various other functions in respect of location and associated data by means of suitable commands contained in hyperlinks as has been described above.

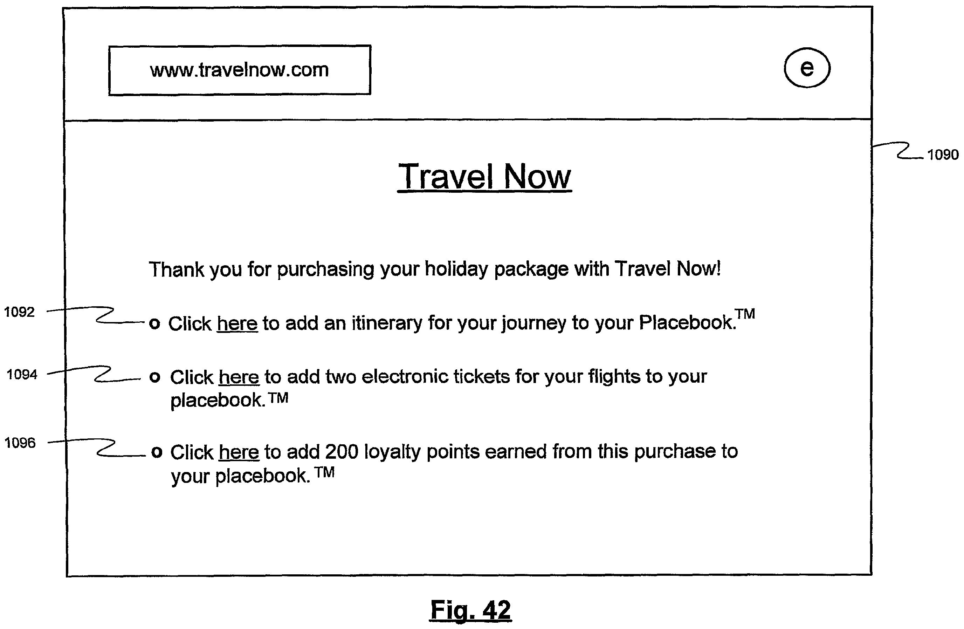

Figure 42 shows an exemplary web page 1090 presented by an Internet travel agency "Travel Now" after a user of a terminal, using a conventional browser application, has completed the booking and purchase of a holiday package. Web page 1090 contains a hyperlink 1092 for adding an itinerary to the location and associated data stored in data store 58 and accessible via Internet location application server 56. Hyperlink 1092 contains an embedded URL of the form:
*"http:*//*placebook.com*/*7command1={add_location={N=Heathrow&X=123456&Y=9876543& LT=airport&D=11*/*4*/*2001&T=09:30&set_as_destination1}}&command2={add_location={N=Ibiza& X=1543.432&Y=54343&LT=airport&D=11*/*4*/*2001&T=12:30&set_as_destination2n&command3={a dd_location={N=1biza&x=1543.432&Y=54343&LT=airport&D=18*/*4*/*2001&T=14:30&set_as_destin ation3}}&command4={add location={N=Heathrow&X=123456&Y=9876543&LT=airport&D=18*/*4*/*2 001&T=16:30&set_as_destination4}}&command5={set alarm={N=Heathrowc&D=11*/*4*/*2001&T=07: 30}}&command6={set_alarm={N=Ibiza&D=18*/*4*/*2001&T=12:30}}&return_address=http:*//*www.trav elnow.com*/*?<<itinerary_added%if_command1=success_and_command2=success_and_command3=su ccess_and_command4=success>>*"

On activation of this hyperlink, the browser accesses Internet location application server 56 and passes various commands to be performed in respect of location and associated data. The commands enable an itinerary, comprising four locations and associated data identified as four consecutive destinations, to be added to the user's favourite locations list. As described above, the user may first be required to log in or register with Internet location application server 56. Furthermore, as also described above, the commands may be automatically performed or a web page, similar to web page 1080 of the 41, presented to the user requesting confirmation before the commands are executed. Other commands are included for setting two alarms to remind the user to make their way to the airports in time. A return address for "Travel Now" is provided indicating that the itinerary was added if successful.

Web page 1090 also contains a hyperlink 1094 for adding two electronic tickets for the user's flights to data store 58 via Internet location application server 56. Hyperlink 1094 contains an embedded URL of the form:
*"http:*//*placebook.com*/*?command={add ticket={N=Outbound&flight_n=AZY_1234&D=11*/*4*/ *2001&T=09:30&certificate=AZY1234.certificate.tkt}}&command={add ticket={N=Return&flight n= AZY_1235&D=18*/*4*/*2001&T=14:30&certifcate=AZY1235.certificate.tkt}}"*

On activation of hyperlink, two electronic tickets are added to data store 58 by accessing Internet location application server 56. Two files, AZY1234.certificate.tkt and AZY1235.certificate.tkt, are also sent for storage in data store 58 in association with the two electronic tickets. The files containing digital certificates authenticating the electronic tickets which may be used on arrival at the airport check-in in place of conventional printed tickets. For example, the user may access the electronic tickets and associated digital certificates from a PDA or mobile phone on check-in, and sent them over a proximity bearer to the airport check-in computer. Electronic tickets and associated digital certificates may be stored in data store 58 and maybe accessed using Internet location application server 56 in a similar manner to location and associated data.

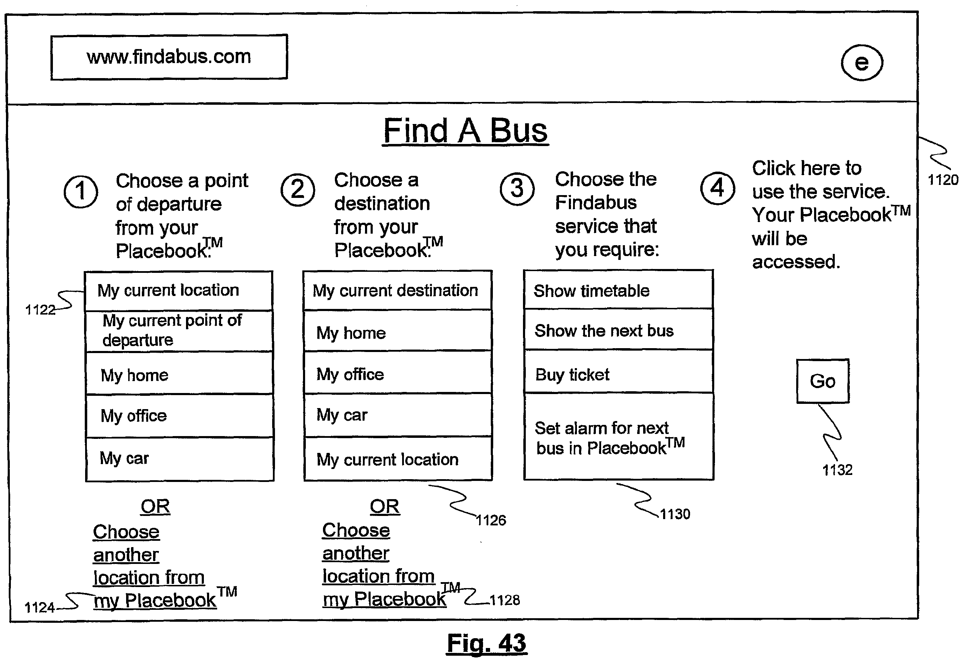

Figure 43 shows an exemplary web page 1120 presented by an Internet travel information service provider "Find A Bus" presented to a user of a terminal, using a conventional browser application. Find A Bus offers services to people travelling on public transport buses, particularly useful to those wanting to find a suitable bus or waiting for a bus to arrive. List box 1122 provides means for user selection of a point of departure from a list of different locations of well-known types. For example, the user may select from "My current location", "My current point of departure", "My home", "My office", and "My car". The user selection will later be used to query the user's location application to obtain the actual location data corresponding to the selection. Alternatively, the user may click on hyperlink 1124 to access his or her location application and select a point of departure directly. Similarly, list box 1126 provides means for user selection of the destination from a list of different locations of well-known types. For example, at these may select from "My current destination", "My home", "My office", "My car", and "My current location". Again, the user selection will later be used to query the user's location application to obtain the actual location data corresponding to the selection. Alternatively, the user may click on hyperlink 1128 to access his or her location application and select a destination directly.

List box 1130 provides means for user selection of a service required from the content server. The user may select from "Show timetable" (to obtain a timetable for a suitable bus to take him or her from his selected departure point to his selected destination), "Show the next bus" (to obtain information concerning the next bus that will take him from his selected departure point to his selected destination), "Buy ticket" (to buy an electronic ticket for his or her journey), and "Set alarm for next bus in Placebook ™" (to set a location-based alarm in the users location application to warn him or her when the next bus is arriving). When the user has finished selecting the point of departure, destination and required service, he was she may click on button 1132 to instruct the content server to provide the required service.

Assuming the user has selected a departure point and destination using list boxes 1122 and 1126, rather than accessing the location application using either hyperlink 1124 or 1128 (which will be described below), activation of button 1132 will cause a query to be sent to the user's location application to determine the actual location data specified as the point of departure and destination. This may occur in the background and transparently to the user. The content server then generates an appropriate response on the basis of the received location data and selected service requirements. This may be achieved by the user terminal generating a form-based service request message on the basis of the user selections, by means of run-time modules or other means downloaded with web page 1120 for example, which hyperlink is activated when the user clicks on button 1132.

For example, if the user selected "My current location" as the point of departure, "My office" as the destination and "Show timetable" as the required service, a form-based request may be generated to create a query URL, which contains the parameter data sent to the Internet Location Application Server, of the following form:
*http:*//*www.placebook.com*/*?command={query1={location type=current_location&location_fo rmat=standardlatlong&no_associated_data}&query2={location_type=office&location_format=standa rdlatlong&no_associated_data}&return_address=http:llwww.findabus.com*/*?service=show_timetable& departure_point=<<query*>>*&destination=<<query2>>}*

Note that this contains two queries for location data representing the current location of the user and the user's office. If the user has subscribed to Internet location application server 56 and has selected to be recognised by allowing a cookie to be set, or if the user is known to ISP 24 or mobile network 26 as described above, then the user's location and associated data store is queried and a service request message generated for sending to the contents server as described above.

The Internet location application server 56 may redirect the request, with the addition of the requested data elements as response data which is sent to the content server in the redirected service request message. The user can thus send the required location data to the content server without any direct interaction with the Internet location application server. Alternatively, Internet location application server 56 may send a web page, similar to web page 1080 of Figure 41, to the user terminal comprising the text "The service provider www.findabus.com has requested your current location and your office location. Click here to send this information." and containing an embedded hyperlink containing the service request message for the content server. By clicking on this hyperlink, the user terminal sends the service request message to the content server as described above. Further alternatively, the user may interact with the Internet location application server, for example to select locations not specified in the original query, so as to add additional data not directly specified in the query received from the content server, before the response is sent to the content server.

If the user has subscribed to Internet location application server 56 but has not selected to be recognised by means of a cookie or is not known to ISP 24 or mobile network 26, then upon sending the service request message to the content server, the user will first be required to log in before being presented. If the user has not subscribed to Internet location application server 56, then he or she will be invited to register first.

Upon receipt of the service request message containing the specified query responses, the content server generates an appropriate location-based response and sends it the user terminal.

The user may alternatively select "My car" as the point of departure, "My current destination" as the destination and "Set alarm for next bus in Placebook™" as the required service, a hyperlink may be generated of the following form:
*"http:*//*www.placebook.com*/*?command={query1={location_type=user_car&location_format= standardlatlong&no_associated_data}&query2={location_type=current_location&location_format=st andardlatlong&no_associated_data}&return_address=http:*//*www.findabus.com*/*?service=creat_alar m&departure_oint=<<query1>>&destination=<<query2>>}"*

The request is sent to Internet location application server 56 and a redirect message generated and sent to the content server as described above. The content server may then generate a second hyperlink similar to one of the following form:
*"http:*//*placebook.com*/*?command1={add_location={N=Bus_Number_532{SD=locationserver 3&S1=735.23.635.134&TD=MS&TI=44794876859&TS=467568&VP=360}}}&command2={set_proxi mity_alarm={N=Bus_Approaching&location1=Bus_Number_532&location2=current_location&proxi mity_distance=500m}}&return_address=http:*//*www.findabus.com*/*?<<alarm_added%if_command1=s uccess_and_command2=success>>*"

This hyperlink may be used to transmit data to Internet location application server 56. This hyperlink adds a dynamic location for the appropriate bus to the user's location data store and provides the details required for the location application to update it using an Internet positioning server. It also adds a location-based alarm to the user's locations data store to trigger when the bus is within 500 metres of the user's current location. A return URL to findabus.com is given to indicate success of failure of the commands. The content server may then generate a response for sending to the user terminal indicating success or failure in setting the alarm. As above, the user may be required to log in to Internet location application server 56 or register, and a web page requiring user consent to the setting of the alarm may be presented.

If the user clicks on either of hyperlinks 1124 or 1128 instead of specifying a departure point and destination using list boxes 1122 and 1126, then the user terminal may access Internet location application server 56 for user selection of a single location from the user's favourites list using an appropriately generated URL. Alternatively, the user terminal may be directed to access Internet location application server 56 to obtain all the user favourite locations (if permitted by the user privacy and security settings) and return them to the content server using an appropriate automatic redirect or embedding the response in a hyperlink directed to the content server. This may be done without additional user interaction, or may require log in, registration or consent as above. For instance, a Web page similar to Web page 1120 may be presented but comprising the user's actual favourite list of locations in list boxes 1122 and 1126. The process for specifying and obtaining the required service may then continue as described above.

While exemplary web pages, containing hyperlinks with particular examples of URLs with appended information embedded, have been described above as if they were static web pages, it will be appreciated that content servers may provide active server pages comprising programmed logic components for generating hyperlinks containing URLs on the basis of information provided by the user through interaction with user interface elements presented or on the basis of data stored or otherwise received by the content server.

While in the above embodiments the query-response interactions take place via the user terminal, with the user terminal transmitting the appropriate user-initiated and redirected service request messages both to the content server and the Internet location application server, alternatively interaction with the Internet location server 56 may be, at least in some instances, conducted in the background by a content server. The content server, with appropriate consent from the user validated by the use of a password or the like, may access Internet location application server directly, with a server-to-server request-response interaction. Such transactions may for example be conducted using the Simple Object Access Protocol (SOAP), a text-formatted http transaction, with the content server including in the request a specification of the location items being requested. This allows a content server to access one or more items, selected according to a specification sent by the content server, or all of the items in the personal store of the user. One of the locations, or a list of user favourite locations, may then be presented to the user, or used to generate content, by the content server in subsequent content sent to the user terminal.

In the above, where location data is being queried, the content server provides a specification of one or more locations being queried. This specification may include one or more of a location type for a requested location, a location area in which a requested location, or plurality of locations, may lie, a location to which a requested location, or plurality of locations, is or are proximate, a specified dynamic location and/or a period in which a requested location, or plurality of locations, was or were current. Other specifications of location are also possible.

In the above, whilst location-related functions are performed using network resource identifiers, i.e. in this embodiment, URLs, alternatively other methods of triggering such functions may be used in data send to a terminal. For example, the functions may be triggered using scripting resources, for example a Javascript™ elements, or by means of applets.

It is to be understood that while embodiments of network-side location applications and data stores have been largely described in relation to the Internet and Internet location application server 56 in particular, other embodiments providing the same or similar functionality are envisaged over other communications modes such as over WAP via WAP location application server 57, over SMS via SMS location application entity 54, and over voice circuit connections using IVR location application engine 55 and so on.

While embodiments of network-side location applications according to the present invention have been described above with the underlying assumption that only one location application server, such as Internet location application server 56, exists in each communication mode, and only one location data store 58, in the general case there will be a plurality of Internet location application servers, WAP location application servers, IVR location application engines, and SMS location application entities as well as a plurality of location data stores operated by different undertakings. For example, many different mobile network operators may each provide an Internet location application server and/or a WAP location application server and/or an IVR location application engine and an SMS location application entity each connected to a location data store and a location server. Similarly, PSTN operators and ISPs as well as software application providers and content providers, such as portals, may each provide one or more forms of network-side location applications capable of accessing a location data store and/or a location server.

Thus, in further embodiments of the invention, a plurality of location application servers are provided and the particular location application with which a user is a registered subscriber may be accessed in circumstances where he or she has not first accessed the particular location application. In other words, where a user has accessed a content server and received a web page or has received an e-mail, an SMS message, an instant text message or other form of communication containing data for accessing or performing a function in respect of his or her location and associated data, the data having been created without any knowledge of which particular location application a user is registered with. These embodiments allow query or command data to be passed to the appropriate location application for processing.

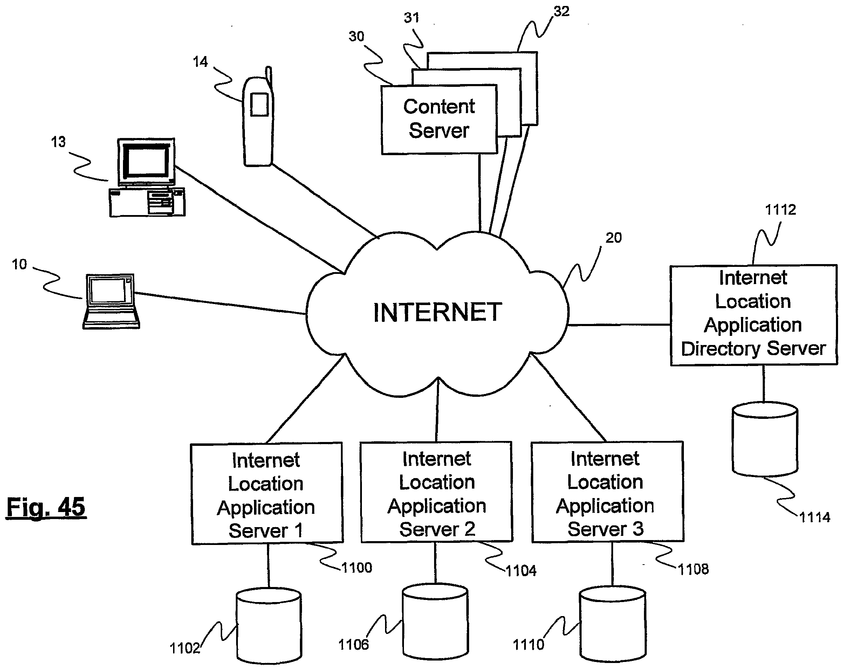

Figure 45 shows a network arrangement used in connection with embodiments of the present invention employing a plurality of Internet location application servers. Again, it should be understood that similar network arrangements will provide a solution to the same problem in respect of location applications provided over other communications modes - e.g. SMS, IVR and WAP. Three user terminals, a mobile cellular telephone 10, a network-enabled personal digital assistant 13 and fixed line computer terminal 14, are connected to Internet 20. For clarity, access arrangements for connecting these user terminals to Internet 20 via a PSTN or mobile network are omitted. Three Internet location application servers 1100, 1104 and 1108 are each connected to Internet 20 and to location data stores 1102, 1106, and 1110 respectively for accessing location and associated data. Internet location application servers 1100, 1104, and 1108 may also be connected to a location server (not shown) or an Internet positioning server (not shown) for obtaining dynamic location data as described above.

Through terminal-to-terminal messaging, or through access to content servers 30, 31 and 32, user terminals 10, at 13 and 14 may receive data which requires interaction with the particular Internet location application server to which each respective user has subscribed. For illustrative purposes, let us suppose that the user of terminal 10 is a subscriber of Internet location application server 1100, the user of terminal 13 is a subscriber of Internet location application server 1104, and the user of terminal 14 is a subscriber of Internet location application server 1108. Whilst Figure 45 only includes the respective location application servers, it should be appreciated that the other components described above in relation to the arrangement of Figure 37 are also included in the system including a number of different location application servers.

Upon activation of the data for accessing and performing a function in respect of the user's location and associated data, for example upon the user activating a hyperlink containing a URL such as any of the URLs described above in relation to network-side location applications, the browser application of user terminal 10, 13, or 14 accesses the server associated with the web site address "www.placebook.com". However, this domain name does not identify any of Internet location application servers 1100, 1104, or 1108, but identifies a central Internet location application directory server 1112. This server is connected to Internet location application subscriber database 1114 which stores the unique user identifiers for the users of all Internet location application servers (at least unique within the context of the particular Internet location application server) and associates these unique user identifiers with unique Internet location application server identifiers, such as the domain names or IP addresses of the Internet location application servers. For example, Internet location application servers 1100, 1104 and 1106 may have the following domain names: "placebookA.co.uk", "placebookB.co.uk" and "placebookC.co.uk" respectively. After successful registration with any of Internet location application servers 1100, 1104, or 1108, the unique user identifier assigned to the registering user must be provided to Internet location application directory server 111 together with the appropriate unique Internet location application server identifier. For example, a user, of user terminal 10 subscribes to the service provided by Internet location application server 1100 and is assigned his e-mail address, "abc@placebookA.co.uk" as his unique identifier. This will be supplied, together with an identifier of the location application server 1100 to Internet location application directory server 1112 for registration in Internet location application subscriber database 1114.

Internet location application server 1100 may also set a cookie on behalf of Internet location application directory server 1112 such that upon accessing Internet location application directory server 1112, for example by activating a hyperlink directed to "placebook.com", the cookie is sent up to Internet location application directory server 1112 and the user authenticated. Furthermore, by querying the Internet location application subscriber database 1114, Internet location application directory server 1112 is able to redirect the user access request to Internet location application server 1100. Alternatively, upon first accessing Internet location application directory server 1112, the user may be required to login using his unique identifier. Then Internet location application directory server 1112 may then itself set a cookie at user terminal 10.

Thus, it can be seen that upon activation of any of the hyperlinks containing embedded URLs as described above in relation to network-side location applications, the user terminal may be redirected to the appropriate Internet location applications server to which its user has subscribed. Furthermore, upon redirection, any cookie set by the user's own Internet location applications server will be sent up, thus authenticating the user as described above. Thus, for example, the users of terminals 10, 13, and 14 may each activate the very same hyperlink, obtained in the very same Web page from the very same content server, and will each be directed to Internet location application servers 1100, 1104, and 1108 respectively. The users of terminals 10, 13, and 14 may also access their respective Internet location application servers directly using their domain names "placebookA.co.uk", "placebookB.co.uk" and "placebookC.co.uk" and then perform functions in relation to their location and associated data as have been described above.

In alternative embodiments of the present invention, URLs containing location and associated data may be "branded" by using an alias of the domain name of the central directory server, such as "A.placebook.com", in place of the domain name of the Internet location application directory server "placebook.com". Thus, on activating the location and associated data, for example by activating a hyperlink containing an embedded URL, the user terminal is directed to the specified Internet location application server, as identified by the alias part of the URL, preceding the top level part of the domain name, where, if the user has not already subscribed to this server he was she is invited to do so. Thus, location and associated data provided by a Internet location application server and sent to users, for example in e-mail messages, may be "branded" to encourage the recipient users to register with and use the resources of that particular Internet location application server. Similarly, location and associated data provided by the content server, partnered with a particular Internet location application server, may be "branded" for a similar purpose. An advantage of using such aliasing is that, when a recipient user is already a subscriber of a different Internet location application server, the branding effect may be overridden by the central directory server, which redirects the request to the registered location application server, thus avoiding redirection to a different Internet location application servers.

In an alternative embodiment, the functionality of the central directory server is embodied in a wireless network gateway, such as the gateway 28 shown in Fig. 37. The gateway is set to filter out all messages addressed to a predetermined network resource identifier (such as placebook.com), and pass these to a directory application which resolves the identity of the user's registered location application server. The gateway may then redirect or proxy the request to the appropriate location application server depending on the identity of the user, or their user terminal identifier.

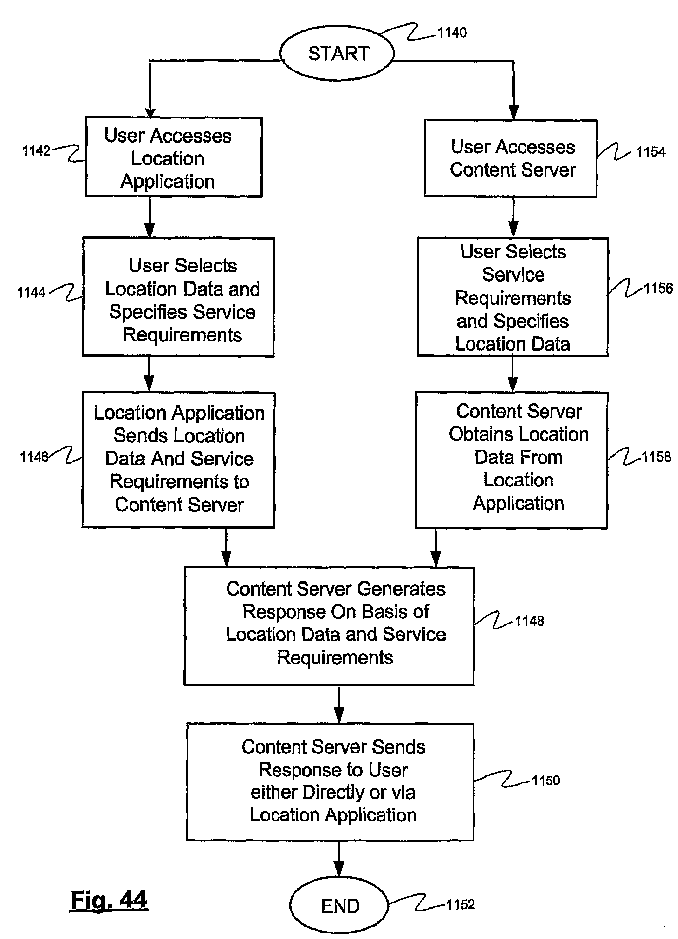

It has been described above how a user of a terminal-side or network-side location application may obtain location-based services from a content server by either first accessing the location application and subsequently accessing the content server or by first accessing the content server and instructing the content server to query the location application. Figure 44 is a flow diagram showing the process of obtaining a location-based service in general. The process starts at step 1140. If the user first access is the location application at step 1142, he or she is provided with user interface means for selecting one more items of location data and specifying one or more service requirements by the location application at step 144. Then at step, for six the location application sends the selected location data and specified service requirements to an appropriate content server identified as result of the specification of service requirements. Then, at step 1148 the content server generates the response, such as a Web page, on the basis of the location data and service requirements received from the location application. At step 1150, the content server sends the generated response to the user either directly or proxied via the location application. The process then terminates at step 1152.

Alternatively, if the user first accesses a content server at step 1154, the user is presented with user interface means by the content server at step 1156 for selecting one or more service requirements and specifying location data. The process and continues to step 1158 where the content server obtains the location data from the location application using a query language such as described above. The user may be required to log in, subscribe, and/or give consent to the provision of location data by the location application. The process then continues to step 1148 as described above.

Whether the user accesses the location application or the content server first, he or she is presented with a user interface to specify or select both location data and service requirements and the content server is provided with the location data and service requirement data, thus enabling it to generate the location-based response for sending to the user terminal. In alternative embodiments of the present invention, steps 1144 and 1156 may involve the user accessing the location application and/or the content server on multiple occasions to select and/or specify the location data and/or service requirements. It is also to be understood that the present invention is not limited to the user selecting and/or specifying the location data and service requirements through user interaction with only the location application or only the content server.

Furthermore, it is to be understood that alternative embodiments of the present invention are possible in which one or more of the location application and data store components of the present invention, or one or more parts thereof, are implemented network-side and the other components or parts thereof are implemented terminal-side. For example, the location application may be implemented terminal-side, whereas the locations and associated data stored network-side.

### Registration of User-Friendly names for Geographical Location Data

Embodiments of the invention include ones in which user-friendly names may be registered along with geographical location data which the name is to represent in a location registration system is now to be explained with reference to Figures 18 to 23. A location name in these embodiments of the invention is intended to uniquely identify one or more locations. A "top level" location name may be used for one or more locations. If the "top level" location name is to be used only for one location, no sub-classing of the name is required. On the other hand, if more than one location is to be represented by the registered "top level" location name, two or more sub-class names are registered for each of the locations. The location names take the form of:
[top level location name] / [sub-class name (optional)].

In addition, the location names are intended to be used in a network resource identifier containing a predetermined domain name, corresponding to a location-based server capable of querying a registered location data store with the location name, and obtaining geographical location data from the registered location data store. With the registered location name geographical data, the server resource is able to provide a location-specific set of resources. In a preferred embodiment, the resources provided are preferably in a format similar to that illustrated in Figure 16 resulting from a single "golocal" button press, namely resources indicating local service directory information, local search facilities, a local map, and individual service suppliers. The links and search facilities may be in the form described and illustrated in relation to Figure 16. Thus, the intention is to allow a specific global geographical location to be represented by a readily memorable registered location name suitable to the location for which the location name is registered. It is further the intention that the location names which are to be registered may be chosen, with a few exceptions, by the registrant, in much the same manner that domain names may be chosen. Namely, generally, a location name may be registered unless the location name is on a list of reserved location names and/or if an identical location name has already been registered. The list of reserved location names includes location names for well-known geographical regions, which are reserved for purposes other than association with a location which the registrant chooses. If the registrant were able to choose a location for a well-known geographical region, such as a state, county, city or village, which did not correspond to that of the state or village, the usage of the name may cause confusion amongst the general public, which is preferably to be avoided. On the other hand, it would be useful to allow potential registrants to register sub-class names in respect of "top level" location names corresponding to such well-known regions. Therefore, individual sub-class names for well-known geographical region names appearing on the reserved list may be individually registered by potential registrants.

Furthermore, some names will inevitably have a greater demand than others. The names in which greater demand is expected may be predetermined. For example, names consisting of small numbers of characters are generally more valuable than longer names. Therefore, names consisting of less than a predetermined number, for example three, of characters, preferably appear on the reserved list, whilst sub-classes of these names may be registered by individuals. Preferably, the sub-class names correspond directly to a well-known geographical region in which the location to be registered occurs. The reason for this is to avoid confusion between different sub-classed variants of the same name. Therefore, for example the name "eat" could be registered in the sub-classes "UK", "US", "China", etc, each corresponding to different geographical locations. Whilst in one embodiment these different geographical locations are mutually exclusive, in another embodiment such a restriction is not made. However, the restriction that the location to be registered should appear in the well-known geographical name used as a sub-class is preferably maintained. Therefore, in this alternative embodiment the top level location name "eat" may be registered in the sub-classes "Liverpool" and/or "UK", where the geographic location of the location to be registered is in Liverpool, UK.

Other examples of names which are preferably reserved due to expected demand, and which are preferably made available in sub-class versions thereof, the sub-classing preferably being in the form of well-known geographical regional names in which the locations to be registered occur, include common surnames (e.g. "Smith"), common services (e.g. "taxi"), and various words of common use which appear in dictionaries. All of these may be placed on a reserve list, and allowed to be registered only in sub-class formats.

In accordance with the invention, location names to be registered may consist of any of a number of different characters. In one embodiment, the characters allowed in a name are restrictive in a similar manner to the way in which Internet domain names are restricted, namely that they may consist only of alphanumeric characters and a hyphen. In another embodiment, more characters to be found on a conventional keyboard, such as "!", etc may be included in the location names. However, even in this case at least the "slash" character is preferably reserved against use in registered location names, since this character is used to signify sub-classing. Therefore, any character used to signify sub-classing is preferably reserved against use in a registered location name.

Figure 18 shows a "location-smart" browser application user interface which contains hypermedia content generated as a result of a user selecting the option "register a location" from pop-up locations menu 319 illustrated in Figure 8. However, it is to be appreciated that the registration of a location name need not occur via a "location-smart" user terminal. Indeed, whilst the registration is preferably carried out via a hypermedia interaction, it is possible that registration of a location name may be carried out over other ways of communication, for example by telephone interaction, or even in person. However, even in these alternative modes, at least one user or operator receives information like that presented in Figure 18, and undergoes a name selection process similar to that described below.

Figure 18 illustrates the response received from the "golocal.to" server when a service request message containing the following URL was generated by the user terminal:
*www.golocal.to*/*?X=5371291&Y=1234796&SF=register*

Whilst this URL format was generated by the user terminal, a similar resource page, and network resource identifier, may be generated purely by means of client-server interactions similar to that described in relation to Figures 2 and 3. Namely, a user can specify a location to be registered by interaction with the server via hypermedia resources alone. For example, a location to be registered may be indicated to the server via clicking on one or more representations of maps, entering grid reference data manually, etc.

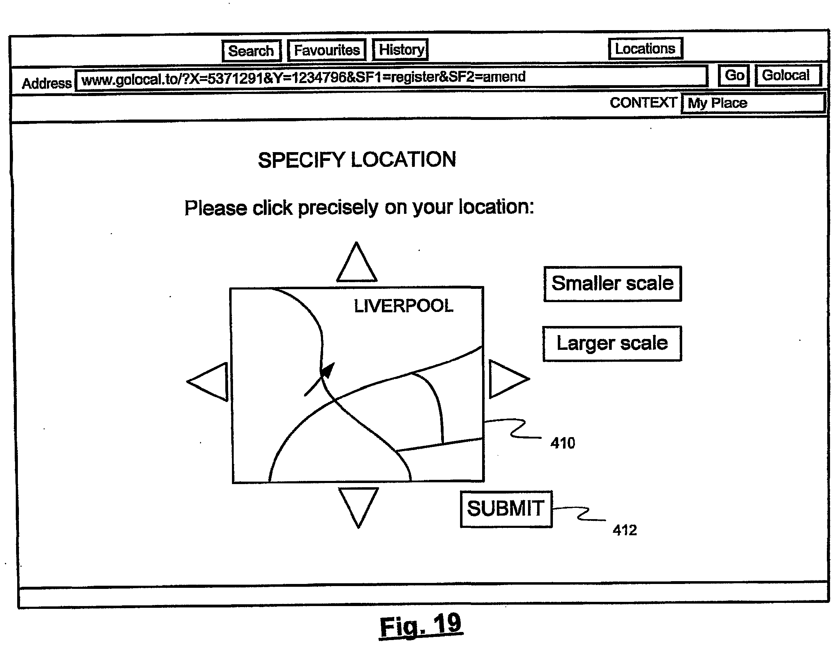

Once the server has received the location data and an indication that the user wishes to register the location, the hypermedia contents indicated in Figure 18 are generated. The hypermedia contents 400 include a local map 402 of the area surrounding the location to be registered, and containing an indication of the exact location to be registered, 404. The contents also include an "amend" selection button 406, whereby the user can amend the location data if it appears to the user that the location is incorrectly represented on map 402. If "amend" button 406 is actuated, the server is sent a service request message containing the geographic location data, the register service code and an "amend" service code. In response, the server transmits the hypermedia resources illustrated in Figure 19, consisting of a map which is actuable in any part of the map 410 to select a desired location to be registered. Once the desired location has been accurately selected, the user is able to return to the first stage registration page illustrated in Figure 18 by means of submit button 412.

Also appearing on the hypermedia content page 400 is a list 408 of other location names already registered in respect of locations in the proximity of the location to be registered. This is useful for the user may attempt to ensure that his name is quite distinct.

Once the user is satisfied that the location which is to be registered is accurately specified, may then propose one or more potential names for registration in relation to the location. In order to do this, the registration page shown in Figure 18 includes a potential name entry box 418, along with an associated "submit" button 420. The user may type in text into entry box 418, and on actuating "submit", the user transmits a message to the location registration server (which is in one embodiment location registration server 50 illustrated in Figure 1).

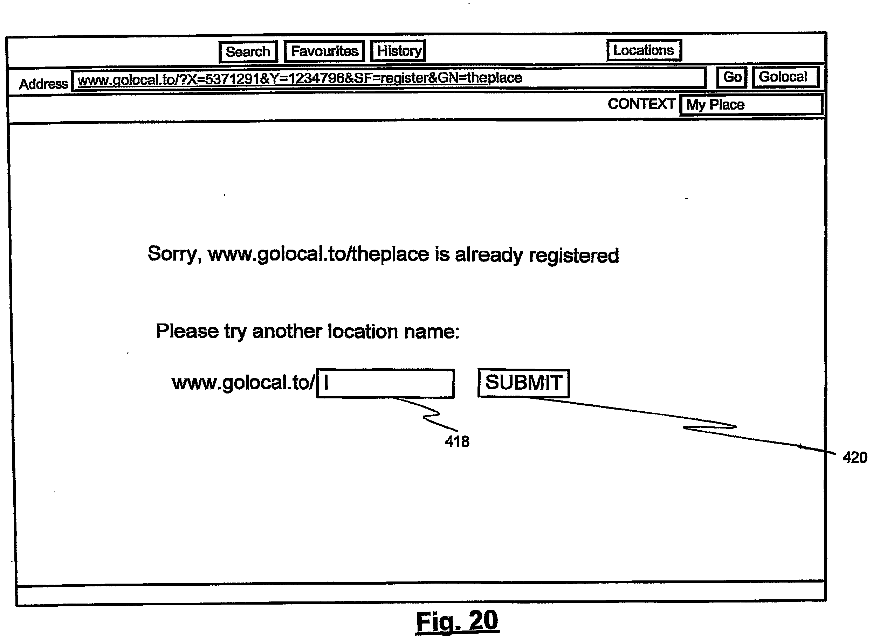

On submitting the potential name or names to the location registration server, the registration server accesses registered location name data store 52 in order to determine whether the potential name proposed by the user is available. If the name is already registered by another user as a "top level" domain, the user is informed that the name is no longer available for registration. An example is shown in Figure 20, in which the user has attempted to register the name "theplace", which happens to be already registered. In this case, the user is prompted with a further text entry box 418 and associated submit button to try a further potential name.

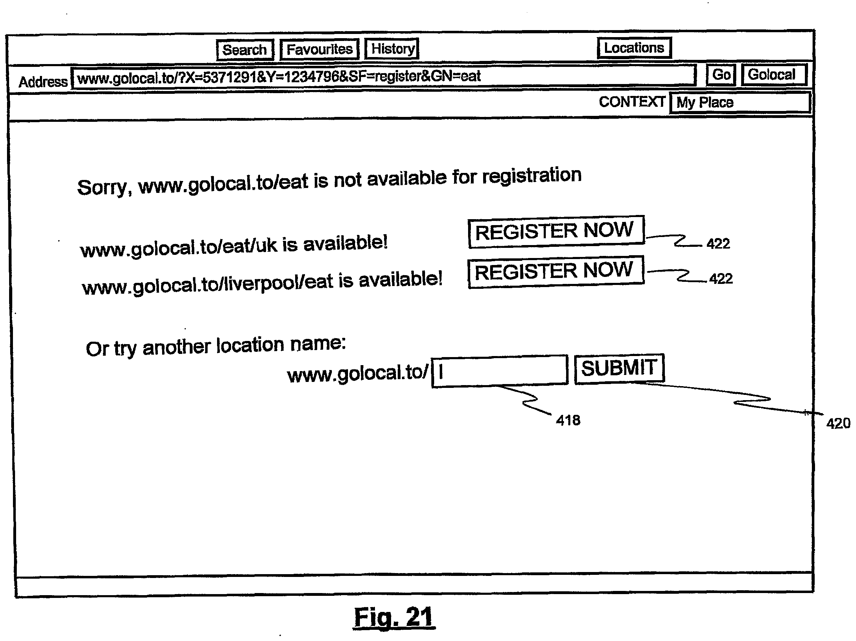

If a potential name proposed by a user appears on a reserved list, the location registration server 50 generates sub-classings of the name appropriate to the geographical location in relation to which the name is to be registered. In one embodiment, the name itself is treated as a "top level" location name, and sub-classed with a well-named geographical location name. In another embodiment, the name is treated as a sub-class of a well-known geographical regional name. The location registration server preferably generates these two variants and, providing that they are not yet registered to another user, prompts the user with an indication that these names are available for registration. An example of this is shown in Figure 21, in which the user has proposed the name "eat" in relation to a location in Liverpool, UK. Two proposed formats of unique name are generated by the registration server, namely "eat/UK" and "Liverpool/eat" are prompted to the user along with "register now" selection buttons 422. Of course, it may be that the user does not wish to register the name proposed by the location registration server, and therefore preferably a further proposal entry box 418, along with an associated submit 420, is also provided.

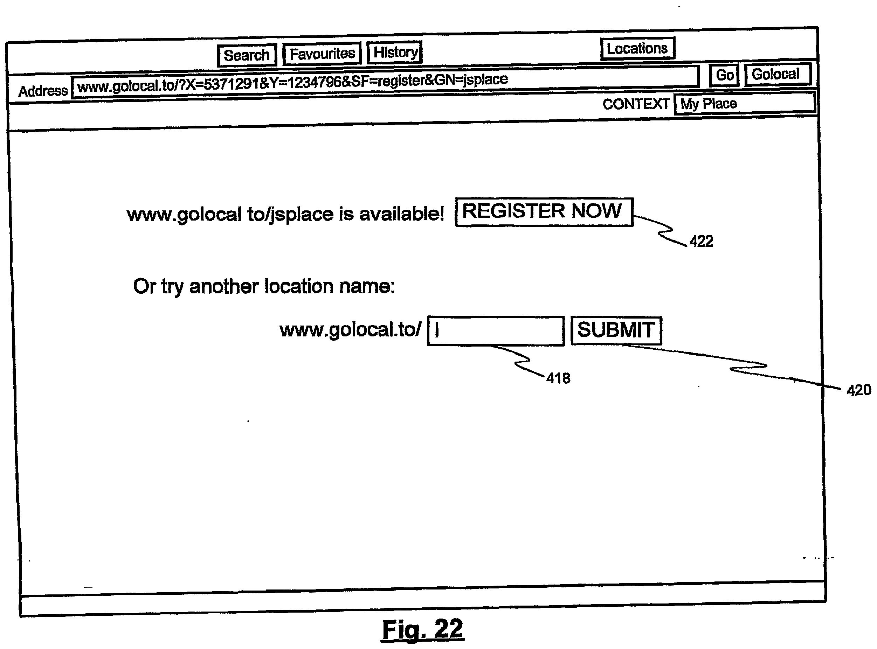

The final alternative is that the name is not currently registered as a "top level" domain, and not reserved. An example of this is illustrated in Figure 22, in which case the response from location registration server indicates that the requested name is available for registration, along with a "register now" select button. Again, the user is still able to propose further names by means of entry box 418 and associated submit button 420.

On selection of the "register now" option, such as that illustrated in Figure 21 or 22, the user is lead through a registration procedure during which the user provides contact details, registered owner details, and note of payment to the location registration server administrator in order to secure registration of the name in relation to the location. On confirmation of the registration procedure having been completed, the location registration server saves the name, and the corresponding exact location coordinates of the geographical location which it is to represent, into registered location data store 52. The registration server furthermore presents a user interface similar to that illustrated in Figure 3, in which a pro-forma customisable "homepage" for the registered location name is illustrated. The "homepage" for the location name preferably includes a local map 430, a number of selectable service identifiers which are hyperlinks to the local services directory containing relevant geographical location data. The user may also add their own logo in a reserved location 434 of the "homepage", and location details in a further reserved region 436, including address details, phone number details, etc.

By clicking on "customise" selection button 438, the user is able to add a logo, location details, etc to the "homepage". In addition, the user is able to select, from a predefined set of local services, those services which the registrant wishes to have appearing on the "homepage". For example, if the registrant is the proprietor of a restaurant in a certain area, the proprietor may wish certain services associated with restaurants, for example taxi services, local sites, etc to appear on the "homepage", whereas the registrant may not wish other local restaurants to appear on the same page. On customisation, the location registration server places all the customisation details into registered location data store 52.

Following registration of the location name, the registrant is able to make local information available, via the "homepage" functionality, widely to any interested parties merely by way of the registered location name. For example, the registrant may disseminate the network resource identifier www.golocal.to/jsplace as desired. Meanwhile, people interested in the location may access the locational homepage merely by way of that network resource identifier, which does not itself contain self-sufficient location data. The location data is in the form of the registered name, which refers to self-sufficient geographic location data stored in the registered location data store 52. By self-sufficient, we mean that the location represented by the data can be determined by the data alone, or in combination with a predetermined system of understanding such data. In the case of location names, such self-sufficiency does not exist, since the location names themselves are generally random from a geographical data point of view. Instead, the location names are readily memorable and appropriate to the registrant's purposes.

One advantage of the system described in relation to Figures 18 to 24 is that the local information associated with a registered location name may be provided from a centralised system capable of providing local information on a large scale in relation to various different registered location names. Thus, the need for individualised "homepages" containing such information is obviated, and a more effective location-based information system is provided. Furthermore, users can almost immediately access a wide range of local information on accessing the network resource identified by the registered location name in combination with the registered location name server.

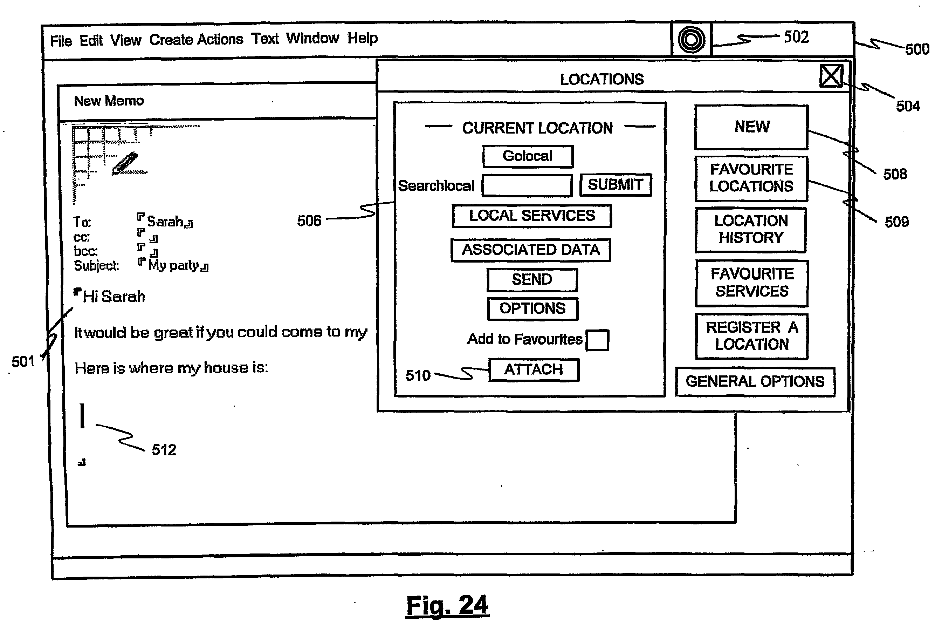

Figure 24 illustrates a graphical user interface 500 provided by a terminal e-mail application 72 in accordance with the present invention. The graphical user interface illustrated is a graphical user interface for constructing and editing a new e-mail message 501. In addition to the usual menu options provided in an e-mail application, a locations button 502 is provided which, when selected during the editing process, for example after some natural-language text has already been created by the user in the message, causes a locations menu 504, similar to the locations menu described above in relation to Figure 8, to appear on the graphical user interface. A current contextual location, which is by default the current location of the user terminal, is indicated, along with any associated data, in location window 506. Location window 506 contains similar functionality to location window 320 described above. In addition, there is an "attach" selection button 510 provided for inserting data corresponding to the current contextual location to the e-mail message. The current contextual location may be altered via favourite locations access via favourite location button 508, or location history list access via location history button 509. Thus, various locations previously captured in the user terminal may be inserted in an e-mail message, along with any associated data designed to be included by the user. On selection of the attach function via attach button 510, geographical location data is inserted in the e-mail message at the location of the text cursor 512, as illustrated in Figure 25. The preferred format of location data is in the form of a URL hyperlink 514 which is marked up within the body 516 of the e-mail message, as illustrated in Figure 25. The data may be, alternatively or in addition, inserted in other forms, as described above, such as in the form of programming script to be parsed by the receiving application, as header data in the message or as an attached file. Although shown in full in Figure 25, the inserted data may be displayed with a user-friendly tag, for example the user-allotted location name highlighted as a hyperlink, with the additional parameter data embedded in the message as non-displayed mark-up. An icon may be added to indicated the presence of location data in the message. In the case of the current contextual location selected to be attached being the current location of the user terminal (which is as yet not named), an option is first automatically given to the user to add associated data in the form of at least a user-allotted name. In the example given, the user-allotted name is "JeromesHouse". Once the location data is inserted, the user may return to the text editing function to continue creating natural-language text using the word processing function of the email editor.

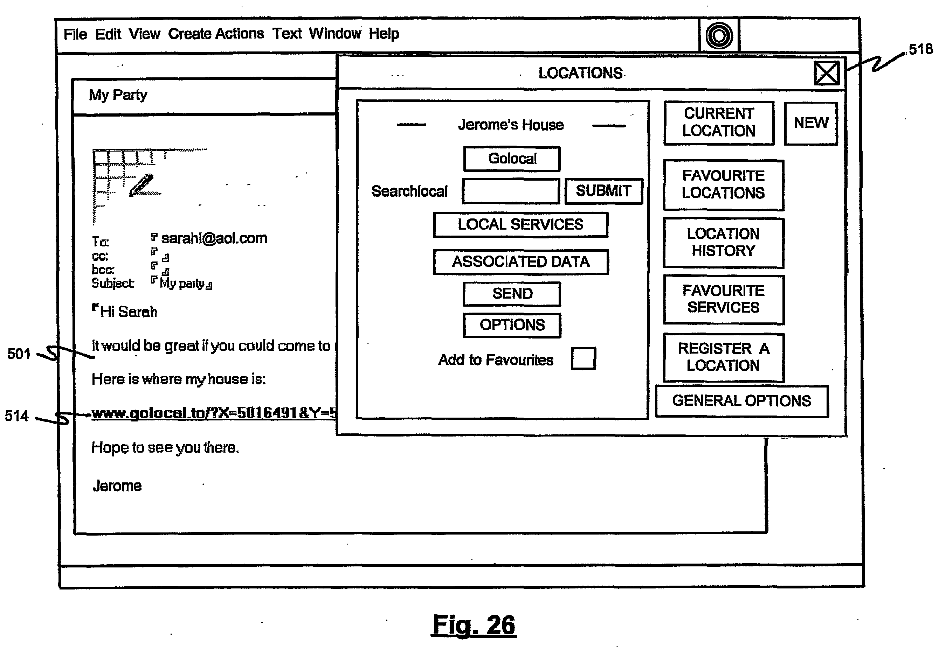

On the receiving side, if the user terminal is "location-smart" as shown in Figure 26, when the receiver selects the geographical location data, the e-mail application generates a pop-up locations menu 518, similarly to that previously described, allowing the geographical location data to be manipulated and used in various manners previously described. Namely, the location data may be saved to a favourite locations list, sent to further user terminals, and/or used to generate service request messages, sent by the terminal's browser application to a selected network resource to find information specific to the location itself. Notably, in the case of non-"location-smart" user terminals, the user can still readily access location-specific information by actuating the hyperlink, since the geographic information is presented in the form of a network resource identifier for a network resource which is location-enabled and includes the location data itself.

If, on the receiving side, the user terminal is not "location-smart", the recipient may actuate the hyperlink 514, which initiates the transmission of a service request message to the location-enabled network resource indicated in the URL, and containing the geographic location parameters also included in the URL, so that the user may access content generated in relation to the indicated location.

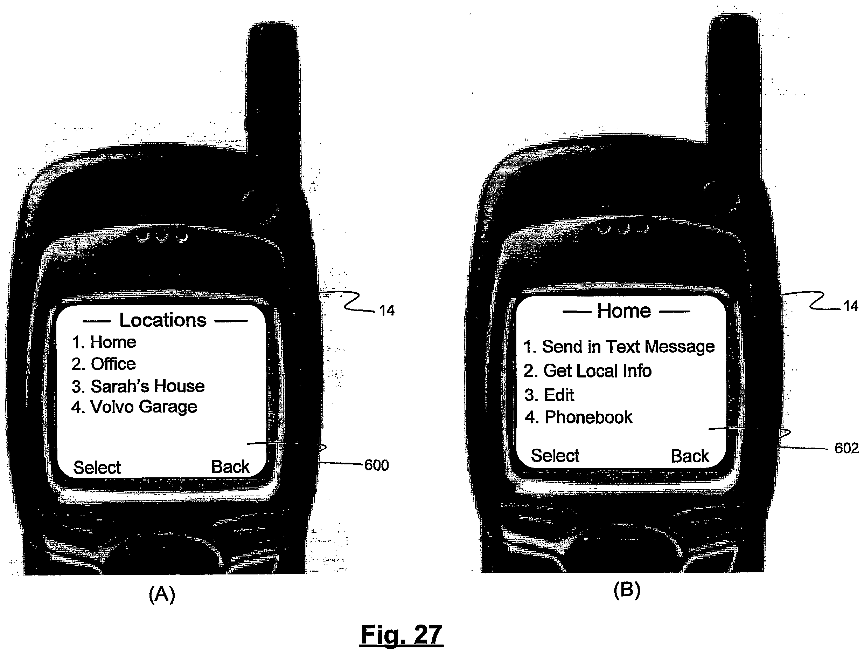

Figures 27 to 31 illustrate a further embodiment of the invention, in which the user interface is one of a WAP-enabled cellular mobile radio station, the example given being that of the mobile terminal 14 which is able, via network interactions, to obtain positioning data for its own location. In addition to currently-known main native menu options, such as "phonebook", "settings", "messages", etc, the terminal has a main native menu option entitled "locations", illustrated in Figure 27(A). Locations menu includes a list of user-allotted names for locations stored in location records in the mobile terminal, preferably ordered by proximity to the current location of the mobile terminal. The user may navigate through the stored locations by keypad interactions, and select one of the locations from the list, in this case the location called "home". On selection of a location from the location list menu 600, a native menu in the form of location function menu 602 is presented to the user, allowing the user to select one or more functions to be applied in relation to the selected location. One function is to send the location in a text message, which if selected presents the user with a list of possible text message recipients, from which the user may choose. On selecting a recipient, the terminal automatically generates the text of the text message, or otherwise includes the geographical location in the message (for example, in header fields if appropriate). As in the case of the e-mail application shown above, the location data may be added to the message during the input and editing of natural-language text by the user, to which function the user may return after the insertion of a location item in the text. Furthermore, although illustrated as a textual item on the display, the inserted location may be indicated in a more user-friendly manner, with the location represented as a highlighted form of the user-allotted name and/or a selected icon representing the presence of usable location data. The location data parameters may be included in the message as non-displayed data, for example as a resource associated with the displayed location representation by mark-up or in the message header data or as an attached file.

In the above descriptions of the "sending" function in an e-mail and an SMS application, the URL itself includes the geographical parameters, however this is not necessary. In an alternative embodiment, a hyperlink, containing the network resource identifier www.golocal.to, and the geographical location data are included as separate parts of the message in an associated manner. The geographical location data may for example be included in the form of a code such as the Placecode™ format described above, along with instructions for the user to type in the code once the network resource is accessed. On the entry Web page of golocal.to, an entry box is then provided for the input of the geographical location data by the user manually. In the above, the URL format containing the location data provides backwards compatibility, in that recipient terminals do not need to recognise the parameters accompanying the network resource identifier as geographical parameters; this is performed at the network resource end. Alternatively, the geographical location data may be included without a network resource identifier, but in a predetermined geographical data format, such as those described above, for recognition by a "location-smart" terminal. The data may for example be included in the message header or, for example as an XML file, in the message body.

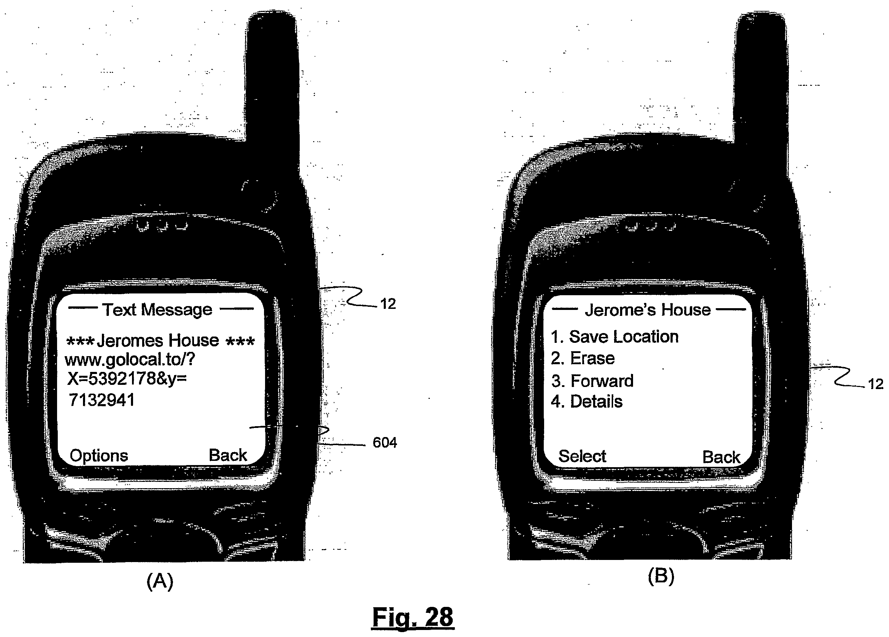

Figure 28 illustrates the receipt of the generated text message at a different mobile terminal, for example mobile terminal 12. The location-related contents of the text message 604 are illustrated in Figure 28(A). As shown, the text message preferably includes marked-up additional data, preferably including at least user-allotted name "JeromesHouse", within a specified mark-up format, and a URL containing a network resource identifier for a location-enabled network resource (in this case "golocal.to"), along with the location data. The user can actuate the hyperlink, or even type it in to a browser application, and receive location-specific data relating to the indicated location. Furthermore, if the receiving terminal is "location-smart", as in the case of terminal 12, a further menu option is provided in the form of a location-specific menu option as shown in Figure 28(B), including for example "save location", which enables the received location to be saved direct to the mobile terminal's location storage directory, and then to perform the other location-related functions provided on the terminal.

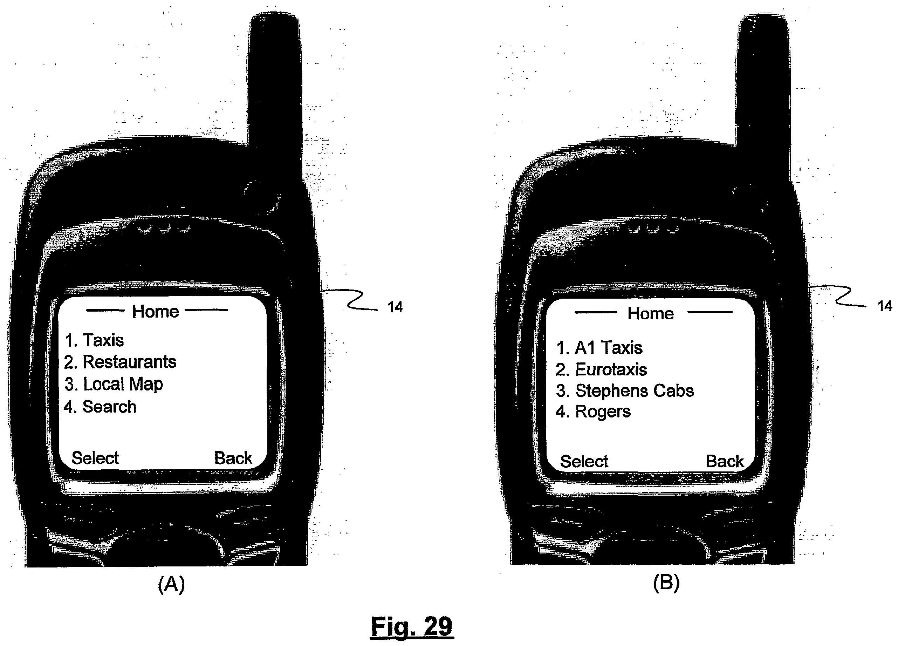

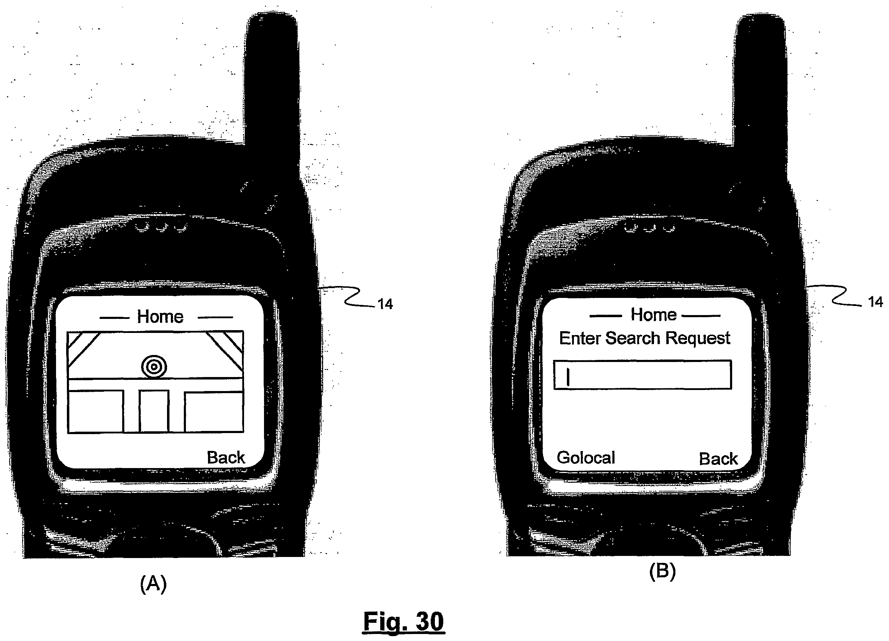

Referring again to Figure 27(B), another option provided in relation to an item of locational data is an option to select a "Get Local Info" function. On selection of this function, the user terminal offers a further native menu option in the form of a service menu, relating to informational services which may be obtained in the context of the current location. On selection of at least some of these service options, the user terminal generates a service request message to request information local to the selected location. The service request message contains the geographical location data as text, a service code identifying the requested service and possibly further functional data, for example the user-allotted location name. The service request message may be an SMS request message in a format similar to that illustrated in Figure 28 (A). The service request message is addressed to an SMS service entity, which provides local information by return SMS. Preferably, however, the service request message generated is a hypermedia browser request message, such as WAP Transfer Protocol (WTP) Get message, containing the location data, addressed to a WAP- and location-enabled server. For example, if a "taxi" informational service is requested, the server may provide a list of local taxi names and associated telephone number data, as exemplified in Fig. 29 (B). If a "local map" informational service is requested, the server may provide a response similar to that illustrated in Fig. 30 (A), namely one containing a local map. A further native menu option provided via location menu 602 is a "local search" option. On selection of this option, the response received is a local search form, similar to that shown in Fig. 30 (B) (however, preferably, the search function is provided in a native text entry box, also as illustrated in Figure 230 (B), for entering one or more search parameters. The selection of "Golocal" option then causes the generation of a service request message, a WTP Get request, containing the locational data and the search parameters, addressed to a local search engine, which provides an appropriate location-based search response.

A further embodiment of a native menu option, accessed through location options menu 602 illustrated in Figure 27(B), namely an edit option, whereby associated data, either already present on mobile terminal, or to be added by the user via user interface interactions, may be added to the location record as associated data. The same applies for example to native "phonebook" option, whereby phone number data pertinent to the location, which may be either received with the locational data or associated with it by reference to the main phonebook of the terminal, may be accessed specifically in the context of the current location.

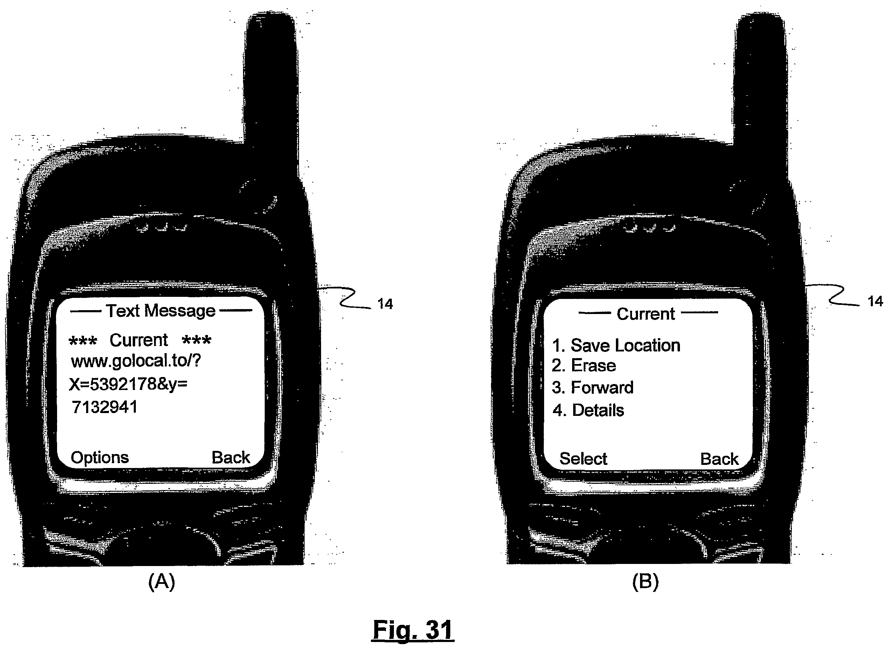

Figure 31 provides an illustration of an embodiment of the invention, showing a possible form of response with which a "location-smart" mobile terminal 12 may receive its current location from an SMS positioning entity as described above. Namely, the locational data may be received in substantially the same format (Fig. 31 (A)) as the data received from another user terminal (Fig. 28 (A)), and similar functions, including a "save" option may be provided in response to receipt of the data (Fig. 31 (B).

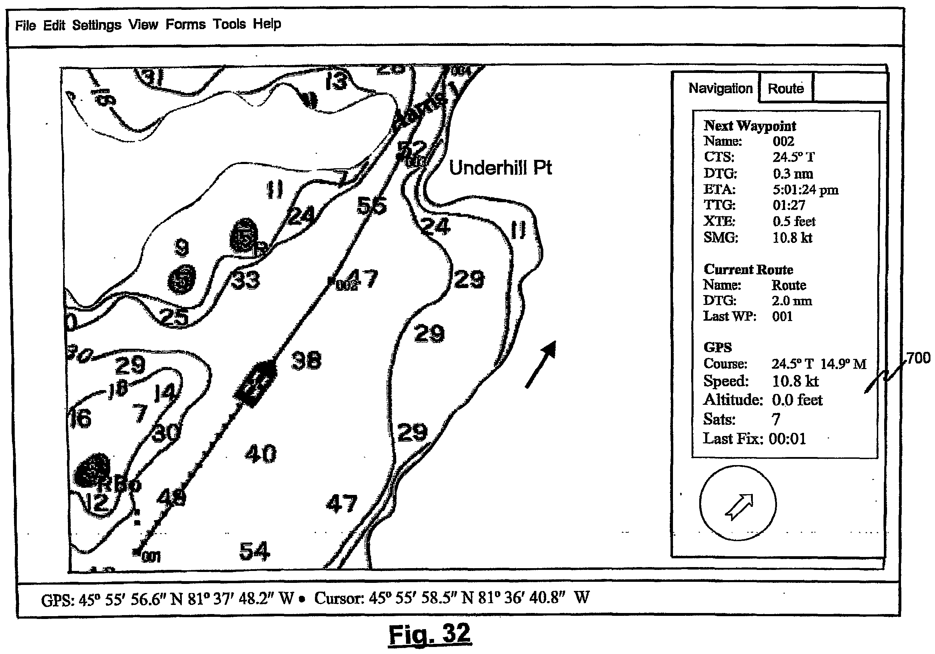

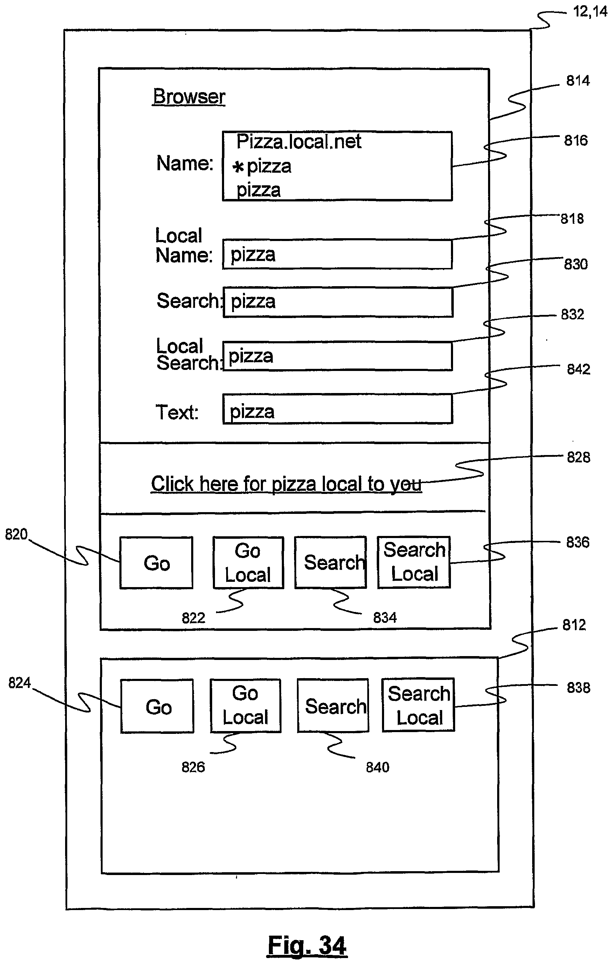

Figures 32 and 34 illustrate an embodiment of the invention in which a "location-smart" navigational application 76 (Fig. 2) is provided with the ability to allow the user to specify or select a location a mapping function provided by the application, as shown in Figure 32, for example by means of a cursor click. In response to the cursor click, a pop-up locations menu is generated having substantially the same functionality as that described in relation to pop-up locations menu 319 illustrated in Figure 8. Namely, the user can select to access resources, via a co working hypermedia browser application sending service request messages relating to the location, and/or to save the location into the favourites list (i.e. to save the location into one of the location storage records), etc.

### Location-Dependent Names, Locational Search Criteria

Figure 34 schematically illustrates an exemplary user interface provided by a further embodiment of "location-smart" client browser application which may be provided on either fixed or mobile devices in accordance with the present invention. For instance, a user of a mobile device 12, 14, wishes to access an Internet site or server named "pizza". Unlike a conventional IP address or domain name, this name is a specially assigned identifier which does not itself unambiguously specify a unique IP address corresponding to the Internet site or server. However, with further information, such as the current geographical location of the mobile device, the ambiguity may be resolved by a name resolver system and a unique IP address determined, as will be described in detail below. For ease of reference, hereafter we shall denote such names as location-dependent names, although it is to be understood that the current geographical location of the mobile device is just one example of further information that might be used to resolve the ambiguity in the name.

To access a site for the location-dependent name "pizza", the user enters information into mobile device 12, 14 using a client browser application running on the mobile device. The user may enter the name of the site via a keypad 812 of the mobile device, a touch screen 814 or via a voice recognition system using data entry techniques known in the art. The client browser application presents the site name entered to the user in name-entry boxes 816 and 818. As we shall see, name-entry box 816 is for use with both conventional and location-dependent names whereas name-entry box 818 is specifically for use with location-dependent names. It is not expected that name-entry boxes 816 and 818 will be displayed simultaneously, but, for ease of presentation in this document, we include both boxes on the same screen in Figure 1. The user may instruct the client browser to access the named site by pressing a "Go" button 20 or "Go local" button 822 on the screen, a "Go" button 824 or "Go local" button 826 on the keypad or by issuing a "Go" or "Go local" voice command. Again, it is not expected that "Go" or "Go local" buttons will be available on both screen and keypad simultaneously, but, for ease of presentation in this document, we include both types of data entry item in Figure 34.

When accessing sites with location-dependent names, the user may indicate that the name entered is a location-dependent name rather than a conventional domain name or IP address. This may be done in a number of different ways. Firstly, the user may enter a conventional URL incorporating the location-dependent name as a domain name alias into name-entry box 816. For instance, the URL may be "*www.pizza*.*local*.*net"*. The suffix ".local.net" is the domain part of the URL which indicates that "pizza" is a location-dependent name and is used to access the corresponding name resolver server for resolving the ambiguity in the location-dependent name. On pressing "Go" button 20 on the screen, "Go" button 824 on the keypad or by issuing a "Go" voice command, the client browser accesses the name resolver server in a conventional manner. Typically, a DNS query is used to obtain the IP address for "local.net" and a Hypertext Transfer Protocol (HTTP) GET instruction sent to that IP address using Transmission Control Protocol (TCP)/IP protocol software running on the mobile device.

A second method of indicating that a name is local rather than conventional is as follows. The user enters a shortened version of the conventional domain name such as "*pizza" into name-entry box 816 which is translated into the conventional URL *"www.pizza.local.net"* by the browser application and used to access the name resolver server as above. Thirdly, the user enters the location-dependent name "pizza" into name-entry box 816 and presses "Go local" button 822 on the screen, "Go local" button 826 on the keypad or issues a "Go local" voice command. The location-dependent name is then translated into the conventional domain name by the browser application and used to access the name resolver server as above. Fourthly, the user enters the location-dependent name "pizza" into name-entry box 818 which is specifically for use with location-dependent names. On pressing "Go" button 20 or "Go local" button 822 on the screen, "Go" button 824 or "Go local" button 826 on the keypad or by issuing a "Go" or "Go local" voice command, the browser application translates the location-dependent name into the conventional name and accesses the name resolver server as above.

Alternatively, the user enters a location-dependent name into name-entry box 816 and presses "Go" button 820 on the screen, "Go" button 824 on the keypad or issues a "Go" voice command. In this case the browser application has not been specifically instructed that this particular name is a location-dependent name as opposed to a conventional domain name. However, the user has previously set an option in the browser application so that names entered are treated as location-dependent names by default and are accordingly translated into conventional domain names for accessing the name resolver server as above.

In a further alternative, the user enters a location-dependent name into name-entry box 16 and presses "Go" button 820 on the screen, "Go" button 824 on the keypad or issues a "Go" voice command. Not having been instructed that the name is a location-dependent name, the browser application first attempts to access the name as a conventional domain name and if unsuccessful, because the name is not recognised by the DNS for example, assumes that the name is a location-dependent name and translates it into a conventional domain name for accessing the name resolver server as described above.

In many cases, the user is provided with the name of an Internet site electronically and may instruct the browser application to access it without entering the name himself. For instance, web pages accessed often include hyperlinks to other web pages. For example, a hyperlink 828 is displayed on the hypermedia content part of screen 812 as text which reads "Press here for pizza local to you". Hyperlink may also be presented in other formats, for example by means of an icon which is characteristic of location-dependent names. Note that the hypermedia content presentation part of the screen is illustrated in reduced format. Generally, the hypermedia content part may also includes other resources, such as conventional hypertext links, image resources, audio resources, etc. The exemplified hyperlink contains an embedded location-dependent name and when the user presses the hyperlink or otherwise instructs the browser application to access the hyperlink, the browser application accesses the name resolver server as described above. Also, browser applications often include options for accessing preset sites such as "Home", "Backwards" and "Forwards" buttons, as well as lists of stored site names such as favourite lists, history lists and bookmarks.

Generally, names, whether provided electronically or entered by the user, may be 1) conventional domain names, 2) conventional domain names incorporating location-dependent names, 3) shortened versions of conventional domain names incorporating location-dependent names, or 4) location-dependent names. When the user instructs the browser application to access the named site, but has not been given the opportunity to specify whether the name is a location-dependent name or a conventional domain name, such as when the name is embedded in an electronically provided hyperlink, the browser may treat the name as a location-dependent name if the user has set an option in the browser application so that names are treated as location-dependent names by default as above. Alternatively, the browser application may first attempt to access the name as a conventional domain name and, if unsuccessful, treat the name as a location-dependent name as above. Alternatively, the browser may query the user to specify whether the name is a location-dependent name or conventional domain name. For example, the user may instruct the browser application that the name is a location-dependent name by pressing the "Go local" button 822 on the screen, the "Go local" button 826 on the keypad or issuing a "Go local" voice command.

Sometimes the user does not know the name of a site or even whether one exists but wants to find a site or page of a site matching certain criteria. Search engines and methods of defining and performing searches are well known in the art. The user does not know the name of a site, but, according to the present invention, may wish to search for sites and pages, but for only those sites with location-dependent names, only those sites with conventional domain names, or both. The various methods described above in respect of accessing named sites, whether using location-dependent names or conventional domain names, apply equally to searching for sites or pages of sites using searching techniques such as search engines. More specifically, the methods described above by which the user may instruct the browser application to access a local or conventionally named site and the methods by which the browser application may determine to treat the name as a local or conventional name in the absence of specific instruction, may equally be applied to searching for sites or pages of sites using searching techniques such as search engines.

Although these various methods have been described fully above, we will briefly describe them in respect of performing searches. The user enters the search criteria, for example "pizza", via keypad 812 of the mobile device, touch screen 814 or via the voice recognition system using data entry techniques known in the art. The client browser application presents the search criteria entered to the user in search-entry boxes 830 or 832 and the user instructs the browser application to submit the search criteria to a search engine by pressing a "Search" button 834 or a "Search local" button 836 on the screen, or a "Search" button 840 or "Search" local button 838 on the keypad or by issuing a "Search" or "Search local" voice command. The browser application then submits the search criteria to a search engine together with an instruction to the search engine whether to provide only locally-named sites, only conventionally-named sites or both depending on the user instructions and/or default setting of the browser application. For instance, the user may start a search using "Search" buttons 834 or 840 or using a "Search" voice command. The browser application would then instruct the search engine to return sites or pages for both locally-named sites and conventionally-named sites. However, the user may start a search using "Search local" buttons 836 or 838 or using a "Search local" voice command. The browser application would then instruct the search engine to return only locally-named sites or pages thereof.

When processing a search request, a search engine, according to the present invention, will take into account the instructions of the browser application as to whether to provide search results for sites and pages for locally-named sites, conventionally-named sites or both. To achieve this, the search engine server maintains an additional field in its database of sites and pages indicating whether the site or page is or belongs to a locally-named site or a conventionally-named site.

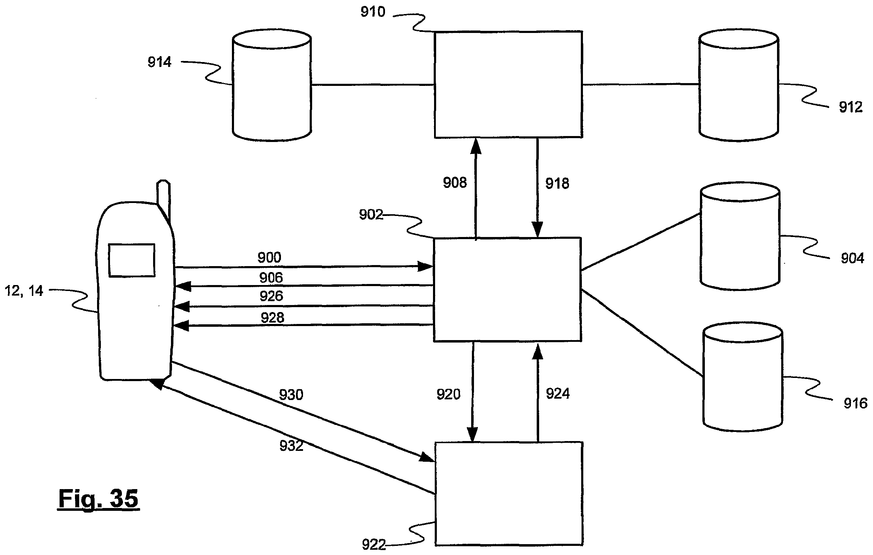

Figure 35 shows an arrangement of data processing devices for implementing the present invention. Mobile device 12, 14 runs a browser application as described above. To access a site with a location-dependent name, at step 900, the browser application, acting as a client, accesses a name resolver system 902, acting as a server, in a conventional manner as described above. Name resolver system 902 receives from the browser application a location-dependent name such as "pizza" and an identifier of mobile device 12, 14, such as an MSISDN, an IP address or Mobile IP (MIP) address. This location-dependent name does not uniquely identify a server for the browser application to access. To fully or partially resolve this ambiguity, name resolver system 902 will access a location server 910 provided by the network responsible for mobile device 12, 14. First, however, name resolver system 902 checks whether it has any records for the location-dependent name in a location-dependent name database 904. If it has no records, it passes a message back to mobile device 12, 14 indicating that the location-dependent name has not been recognised at step 906. If, however, it does have one or more records for the location-dependent name, name resolver system 902, acting as a client, accesses location server 910 as follows.

For embodiments of the present invention using GSM or UMTS networks, interactions between name resolver system 902 and location server 910 shall conform to the specifications set out in ETSI TS 122 071. Name resolver system 902 has a location service (LCS) client subscription with the network responsible for providing access to mobile device 12, 14. At step 908, name resolver system 902 passes a location service request message of the request type "immediate" to location server 910. This message identifies the target mobile station (MS), i.e. mobile device 12, 14, using the MSISDN, IP address or MIP address of mobile device 12, 14 and may specify quality of service (QoS) parameters for the request - for example, the accuracy of location or the speed of response. QoS parameters for a particular request may depend on the identity of the user (ascertained from the MSISDN, IP or MIP address). For instance, users may subscribe to different levels of service from the name resolver system and this information, together with corresponding QoS parameters may be stored in user profile database 916. Also, QoS parameters for a particular request may depend on the location-dependent name to be accessed, and these parameters may be stored in location-dependent name database 904. For example, a pizza restaurant may require different QoS parameters to an airport - in particular, different degrees of accuracy of location information and speeds of response time.

Upon receiving a request, location server 910 then checks that name resolver system 902 is an authorised LCS client by consulting the LCS client subscription database 112 and then checks the subscription profile of the target MS, i.e. mobile device 12, 14 by consulting the target MS subscription database 914. Location information is generally treated as private and, in the absence of information to the contrary in the Target MS subscription profile, access is denied to value added service providers. However, name resolver 902 has been granted access to location information in respect of mobile device 12, 14 in the privacy exception list held in the subscription profile for mobile device 12, 14. This may be achieved by having entries in the user's privacy exception list, a universal class exception (allowing access to all LCS clients), a call-related class exception (allowing access to LCS clients having a temporary association with the target MS in the form of a voice or data call, which will be the case in respect of name resolver 902) or a call-unrelated class exception specifying name resolver 902 as an allowed LCS client. Preferably, the user is required to grant name resolver 902 a call-unrelated class exception either upon 1) first setting up the browser application or 2) first enabling the location-dependent names features of the browser application by installing a plug-in or 3) on first attempting to use name resolver 902 to access a location-dependent named site. The user may be required to enter the privacy exception with the network himself, or may grant permission to the operators of name resolver 902 to enter the privacy exception with the network on his behalf by performing one of the actions listed above.

Optionally, name resolver 902 may handle privacy control on behalf of the user in addition to the network. A privacy profile, such as the privacy exception list held by the network for each subscriber, is stored in user database 916 for each user. Thus, despite name resolver 902 being an allowed LCS client of location server 910, the user may retain control over the release of potentially sensitive personal data such as location information.

Assuming that location information is available to name resolver 902, location server 910 obtains the location of the mobile device from the mobile network using one or more of the location techniques outlined above as are available for that particular network and mobile device, and, at step 918, passes a LCS request response back to name resolver 902. This response includes a time stamped location of mobile device 12, 14 within a specified level of accuracy expressed in a standard format such as longitude, latitude coordinates and height above or below ground or sea level. This information is stored in user database 916 for possible future use, for instance if the user accesses further location-dependent named sites within a short time period such that the location of the mobile device need not be updated. This time period may depend on the type of service offered by the subsequently accessed sites. Next, using the location information obtained, name resolver checks the entries in location-dependent name database 904 to resolve the ambiguity in the location-dependent name. For each entry, location-dependent name database 904 maintains a record of a geographical location of coverage expressed in the standard format as well as a conventional domain name or IP address. As we shall see, these geographical locations may be static or dynamic. Comparing the current location information for the mobile device with the current geographical location of coverage for those entries in location-dependent name database 904 with the required location-dependent name, e.g. "pizza", name resolver 902 ascertains whether any sites match the user's requirements. It may be that no sites match or that one or more sites match. If no sites match, name resolver 902 sends a message to mobile device 12, 14 indicating the fact.

If exactly one site matches, then, according to the proxy server model, name resolver 902, acting as a proxy client for the browser application, accesses the server 922 for the site at step 920 in a conventional manner using the domain name or IP address obtained from the location-dependent name database 904. For instance, with an HTTP GET request sent from mobile device 12, 14, name resolver 902 sends a corresponding HTTP GET request to content server 922. At step 924, content server 922 responds in a conventional manner by passing data back to name resolver 902. For instance, in response an HTTP GET request, content server 922 sends a web page back to name resolver 902. At step 926, name resolver 902, now acting as a proxy server, sends the data received from content server 922 back to mobile device 12, 14 where it is presented to the user by the browser application. For instance, if the original request was an HTTP GET request, the web page is presented to the user.

Alternatively, according to a redirect server model, name resolver 902 does not access content server 922 itself, but, at step 928, sends to mobile device 12, 14 a redirect message specifying the conventional domain name of content server 922. At step 930, the browser application running on mobile device 12, 14 accesses content server 922 in a conventional manner and at step 932, content server 922 sends the required data to mobile device 12, 14, such as a web page, for presentation to the user by the browser application.

In alternative embodiments of the present invention, name resolver 902 does not perform the selection process itself but passes the further information for resolving the ambiguity of the name, such as the current location of mobile device 12, 14, to a further data processing device (not shown) belonging to a third party. For instance, the location-dependent name "pizza" may be registered worldwide to a third party who would like to perform the process of selecting an appropriate site itself. This selection process may still depend on the current location of the mobile device, and the third party will thus wish to receive location information relating to the mobile device. In this case, name resolver 902 may proxy the user's request to the data processing device of the third party together with the further information for resolving the ambiguity of the name, or it may redirect mobile device 12, 14 to make a request, together with the further information, to the data processing device of the third party. On receiving the proxied or redirected request, the data processing device resolves the ambiguity in the name by selecting an appropriate site as described above and either proxies or redirects the request to the selected content server as above.

Security is important when handling potentially sensitive data such as location information or other data personal to the user. ETSI TS 122 071 requires that communications between location servers and location clients are secure and reliable. This applies equally to communicating potentially sensitive data from name resolver 902 to the data processing device of the third party which is likely to be implemented using public data networks such as the Internet. Preferably, communications between location 910, name resolver 902 and the data processing device of the third party are encrypted using known techniques such as secret key encryption or public key infrastructure (PKI). One such approach would be to create a virtual private data network (VPDN or VPN) by encrypting and tunnelling packets between the communication end points. VPDNs are known in the art.

If more than one entry in location-dependent name database 904 match the user's requirements - i.e. if the location-dependent name and geographic region of coverage of more than one entry match the location-dependent name specified by the user and the current location of the mobile device - then further criteria must be taken into account in selecting the entry to access. One such criterion is proximity. The geographical locations of coverage for the entries may be defined as a polygons or ellipses with identified centres and the entry with the closest centre to the location of the mobile device is selected in preference to the others. Other criteria may be applied such as a level of service provided to the site owner and recorded in location-dependent name database 904. In the alternative, the user may be presented with a range of site options to select from, by sending mobile device 12, 14 a page, rather like a search engine results page, with hyperlinks to access the matching sites directly. The user may then select one such site and access it in a conventional manner.

According to a further embodiment of the present invention, part or all of the further information required to resolve the ambiguity in a location-dependent name is sent directly by mobile device 12, 14 to name resolver 902. For example, mobile device 12, 14 may have a GPS receiver or may be configured to perform location calculation itself using signal strength or time of arrival measurements from a number of BTSs. In this case, mobile device 12, 14 may provide its current location to name resolver 902 within the request to access a site or page corresponding to a location-dependent name. Other information stored on mobile device 12, 14 may also be sent to name resolver 902 for resolving the ambiguity, such as current setting of the mobile device or data entered by the user. A user profile may be stored in the mobile device and provided to name resolver 902 for resolving the ambiguity. For example, the user profile may include information relevant to the user such as age, sex, and preferences or interests.

We shall now describe in greater detail the system of so-called location-dependent names of the present invention. As stated above, the term "location-dependent name" has been used in this document to denote specially assigned name which does not itself unambiguously specify a unique IP address corresponding to an Internet site. An aspect of the present invention is that this ambiguity may be resolved with further information. This further information may be the current geographical location of a mobile device wishing to access a site corresponding the name, but this is just one example of the kind of further information that may be used to fully or partially resolve the ambiguity inherent in the name. Other examples of further information which may be used to fully or partially resolve ambiguity in a name include, the current time of day or date, the age or sex of the user, preferences of the user, current setting of the user's mobile device, a current location or setting of a mobile device associated with a site or sites to be accessed, and a level of service associated with the user or with the service offered by the site. In general, there are at least four types of further information which may be used to fully or partially resolve ambiguity in a name: 1) data relevant to the user or client; 2) data relevant to the site or service offered by the site; 3) data relevant to one or more third parties; and 4) other objective data. Further more, such further information may be dynamically obtained, such as with current location information, or preset, such as with user preferences.

According to the present invention, location-dependent names may be registered in respect of sites or servers with a registration body in much the same way that conventional domain names are registered today. However, location-dependent names are different to conventional domain names in that they do not unambiguously specify a particular site or server. As a corollary of this, it will be immediately apparent that the same location-dependent name may be registered in respect of a plurality of different sites or servers. For example, "pizza" may be registered by a plurality of independent pizza restaurants in respect of mutually exclusive geographical locations. When a user accesses a site using the location-dependent name "pizza", he will be connected to the site of a pizza restaurant according to his current location. In a further example, "pizza" may be registered in respect of both geographic region and in respect of particular opening times and dates. Thus, a day-time only restaurant and a night-time only restaurant which happen to be next door to each other may both register "pizza" and a user in the geographic region of coverage of the restaurants will be connected to restaurant which is open according to the time of day. In general, location-dependent names may be registered in respect of particular ranges or instances of the further information required to resolve the ambiguity inherent in the name or in respect of logical combinations of a plurality of particular ranges or instances of the further information required to resolve the ambiguity inherent in the name. The ranges or instances of the further information may be static or dynamic. For example, an individual taxicab may register "taxi" in respect of a dynamic geographic region which moves with the taxicab. Dynamic information such as the current location of a taxicab is obtained by having a mobile device in the taxicab for which name resolver 902 is authorised to and periodically does obtain location information from a location server. The dynamic geographical location may be defined as a circle of a predetermined radius from the current location of the taxicab. Alternatively, the dynamic geographical location may vary in dependence on further information such as the speed of the taxicab (which may be obtained from repeated historical location information), the current or estimated traffic congestion around the taxicab, speed restrictions and types of road in the area and other factors relevant to the area in which the taxicab may be available for hire. When a user accesses a site using the location-dependent name "taxi", he will be connected to the nearest taxicab to him from a population of taxicabs registered under the location-dependent name "taxi". and a dynamic availability state which depends on the whether the taxicab is available for hire or is currently hired by a passenger

It is to be understood that, while the term "location-dependent name" has been employed above, resolution of ambiguity inherent in such names may depend on any type of further information or any combination thereof.

### General Remarks

Various embodiments of "location-smart" terminal, terminal applications and service processing nodes have been described above. It is to be appreciated that any of the features which have been described in relation to one embodiment may also be used in other of the described embodiments. In particular, different embodiments of "location-smart" applications have been described, and it is envisaged that any features described in relation to one embodiment are interchangeable with, or combinable with any features described in relation to another embodiment.

It is to be understood that the present invention is not limited to the described terminals and terminal applications and that in alternate embodiments of the present invention any type or combination of user terminal types, such as those listed above, running any type or combination of terminal application types, such as those listed above, may be used. The present invention may be implemented by a software module which interoperates with one or more terminal applications, such as a hypermedia browser, a text messaging application, an e-mail application and so on, running on a given terminal type. Features of the present invention relating to browser applications may be implemented by means of software plug-ins to conventional browsers or by means of adaptations to conventional browsers. The present invention may also be implemented by a software module which interoperates with a browser, but is not itself a "plug-in".

In the above description it should be appreciated that the term "SMS" is intended to include reference to similar, and more developed, non-realtime communications modes capable of transmitting terminal to terminal messages from one mobile station to another. Such modes typically allow terminal-to-terminal messages to be addressed using mobile telephone directory numbers (MSISDNs). An example of one such similar communication mode is the proposed Multimedia Messaging Service (MMS), as defined in the WAP MMS Architecture Overview Specification WAP-205-MMSArchOverview-20010425-a available from http:www.wapforum.org, and all references to SMS in the above should be understood to include reference to MMS in the alternative.

In the above description, where network resource identifiers are used to address service request messages, or included in terminal-to-terminal messages for use in generating service request messages at another terminal, it is to be understood that the terminal contains data representing the network resource identifier (generally an Internet domain name, possibly with additional resource parameters, such as a directory name). The network resource identifier data may include more than one such network resource identifier, and the user terminal may automatically, for example based on geographic coverage, select between the two depending on a contextual factor, such as by the user, for example by an alterable default setting in the user terminal. the location being operated upon. Alternatively, the network identifier used may be contained in a single field which is overwritable, so that the actual network resource accessed or identified in a transmission can be set by a party in control of the terminal at a given time. For example, the network resource identifier may be set by the manufacturer of the user terminal, or the operator of a network with which the user terminal is registered, and subsequently reset by the user if desired.

In general, in so far as the present invention relates to sending, receiving or otherwise processing peer to peer messages comprising or identifying geographical location data, whether generated or sent by "location smart" terminals or other data processing devices (such as network-side data processing devices running location applications, to be described below), such messages will be understood to include any kind of peer to peer message, whether real-time (such as in-call data messages), or non-real time (such as store and forward type messages) and whether comprising text, graphics, audio, and/or other media or combinations of media.

Storage of location data at the user terminal, and its management on the user terminal, is an aspect of embodiments of the invention which leads to a number of significant advantages. Namely, privacy is believed to be a real concern to many potential users of location-based services. Storage of the location data, including the current location, or the user terminal keeps the data under the direct control of the user, allowing the user to directly set privacy settings, select who is to receive the information, and allowing the user terminal to display, for example via pop-up boxes, a warning to the user whenever sensitive location data is to be sent, and to allow a user to prevent the transmission if desired. Furthermore, in the embodiments in which the geographical location data is sent as part of a URL, the user may be informed of when, and in what form, geographical location data is sent, for example by display of the URL in an address entry box of the graphical user interface.

On the other hand, storage of location data in a network-side store has other advantages, which can be achieved without reducing user privacy by also allowing a user to be warned, by a trusted party holding the location data, whenever sensitive location data is to be sent, and to prevent the transmission if desired. Performing the location-related functions in a network-side store allows the same stored data and functionality to be accessed from a number of different user terminals (for example a desktop computer, a car navigation system and a mobile telephone), and the user terminals themselves do not require inbuilt intelligence to deal with the location-based functionality.

In the above embodiments, various different ways of receiving and transmitting geographical location data, via different modes of communication, have been described. In a preferred embodiment, a user terminal includes two or more of the different terminal applications described and the locational data is shared between the different. Preferably, the same location records are accessible from each of the different terminal applications. So, for example, where an item of geographical location has been received via SMS, and saved in an SMS menu interaction, that same item of information appears in the favourite locations list presented in conjunction with the other terminal applications, for example the hypermedia browser application such that service request messages containing the data may be readily generated in the browser application.

Note finally that the above embodiments are to be understood as illustrative examples of the invention. Furthermore, equivalents and modifications not described above may also be employed without departing from the scope of the invention, which is defined in the accompanying claims.

Various aspects of the present invention are set out in the following clauses:
1. A user terminal capable of processing geographical location data and of transmitting terminal-to-terminal messages, the terminal comprising:
   storage means for storing a network resource identifier identifying a network resource capable of processing geographical location data;
   user interface means for selecting a function to prepare an item of geographical location data for transmission to a recipient user terminal;
   message element formatting means for, in response to selection of said function, formatting one or more parameters, including said geographic location data, in a message element of a predetermined format whereby the geographic location data is made suitable for processing by said network resource, said message element including the stored network resource identifier;
   message transmission means for transmitting a terminal-to-terminal message, comprising the formatted message element, to the recipient terminal.
2. A user terminal according to clause 1, wherein a user interaction with the user interface means determines a structure or contents of the message element.
3. A user terminal according to clause 1 or clause 2, wherein said storage means is adapted to store a plurality of network resource identifiers from which the network resource identifier included in the message element is selected.
4. A user terminal according to clause 3, wherein the network resource identifier is selected in dependence on a user interaction with the user terminal.
5. A user terminal according to any of clauses 1 to 4, further comprising means for detecting the current location of the user terminal, the user terminal being capable of transmitting the detected current location as said item of geographic location data.
6. A user terminal according to any of clauses 1 to 5, wherein the user terminal comprises user interface means for selecting the item of geographical location data from a plurality of items of geographical location data stored in the user terminal.
7. A user terminal according to any of clauses 1 to 6, wherein the one or more parameters comprise one or more of the following: a user identifier; a user-allotted geographical location name; a location type.
8. A user terminal according to any of clauses 1 to 7, wherein the user interface means comprises a text editor allowing the user to create a natural language text message and to include said message element in a selected part of the natural language text.
9. A user terminal according to any preceding clause, wherein said message element comprises a hyperlink including said network resource identifier.
10. A user terminal according to any preceding clause, wherein said message element comprises a uniform resource locator including said one or more parameters.
11. A user terminal according to clause 10, wherein said one or more parameters are appended to said network resource parameters as query data.
12. A user terminal capable of processing geographical location data and of generating a terminal-to-terminal message, the terminal comprising:
   means for accessing an item of geographical location data indicating the current location of the terminal
   user interface means for selecting a function to associate a network resource identifier, identifying a network resource capable of processing geographical location data, with one or more parameters comprising said item of geographical location data;
   message generation means for generating a terminal-to-terminal message for transmission to the recipient user terminal, the message comprising the network resource identifier in association with the one or more parameters.
13. A data processing system comprising a user terminal according to any preceding clause, said data processing system further comprising a server providing said network resource.
14. A method of generating a data message including an item of geographical location data, the method comprising:
   storing a network resource identifier identifying a network resource capable of processing geographical location data;
   receiving a command from a user of a user terminal;
   accessing an item of geographical location data in response to the received command;
   formatting one or more parameters, including said geographic location data, in a message element of a predetermined format whereby the geographic location data is made suitable for processing by said network resource, said message element including the stored network resource identifier;
   transmitting a data message, comprising the formatted message element, to the recipient terminal.
15. A method according to clause 14, wherein the item of geographical location data is stored in the user terminal.
16. A method according to clause 14, wherein the item of geographical location data is stored in a data store remote to the user terminal.
17. A method according to any of clauses 14 to 16, wherein the item of geographical location data represents a current location of the user terminal.
18. A method according to any of clauses 14 to 17, comprising providing the user with user interface means for selecting the item of geographical location data from a plurality of items of geographical location data.
19. A method according to any of clauses 14 to 18, wherein the one or more parameters comprise one or more of the following: a user identifier; a user-allotted geographical location name; a location type.
20. A method according to any of clauses 14 to 19, further comprising allowing the user to create a natural language text message and to include said message element in said message in a selected part of the natural language text.
21. A method of generating a data message including an item of geographical location data, the method comprising:
   receiving a command from a user of a user terminal;
   accessing an item of geographical location data indicating the current location of the terminal in response to the received command;
   associating a network resource identifier with one or more parameters comprising the accessed item of geographical location data;
   generating the data message comprising the network resource identifier in association with the one or more parameters.
22. A user terminal comprising a user interface, the terminal being capable of processing geographical location data and of receiving data from and transmitting data to remote data processing devices, the terminal including:
   geographical location data recognition means for recognising an item of geographical location data in data received from a first remote data processing device;
   data generation means for generating service request data in dependence on a recognised item of geographical location data; and
   data transmission means for transmitting the service request data to a second remote data processing device.
23. A user terminal according to clause 22, wherein the recognition of an item of geographical location data is indicated to a user by the presentation of a characteristic representation of said data via a user interface means of the user terminal.
24. A user terminal according to clause 22 or 23, comprising user interface means for presenting a service menu, and for initiating the generation of said service request data via the service menu.
25. A user terminal according to clause 24, wherein said service menu comprises selection means for selecting one of a set of stored services to be provided by said second data processing device.
26. A user terminal according to clause 25, wherein said services include a plurality of services provided by different remote data processing devices, the selection of a service determining the remote data processing device to which the service request data is transmitted.
27. A user terminal according to any of clauses 24 to 26, wherein the user interface means is adapted to present the service menu in response to a user selecting a representation of the geographical location data.
28. A user terminal according to any of clauses 22 to 27, wherein the geographical location data recognition means is capable of recognising the content and/or structure of received data associated with received items of geographical location data.
29. A user terminal according to any of clauses 24 to 28, wherein the user interface means is adapted to present information to the user in dependence on the content and/or structure of data associated with the geographical location data.
30. A user terminal according to any of clauses 22 to 29, wherein the geographical location data recognition means recognises the item of geographical location data as a result of recognizing one of the following in the data received from the remote data processing device: a domain name part of a network resource identifier, a protocol header, or a MIME type.
31. A user terminal according to any of clauses 22 to 30, wherein the data received from the first data processing device is received in the form of a terminal-to-terminal message.
32. A user terminal according to any of clauses 22 to 30, wherein the data received from the first data processing device is received in the form of hypermedia content.
33. A data processing system comprising a user terminal according to any of clauses 22 to 32 and said second data processing device, said second data processing device consisting of a server capable of processing geographic location data.
34. A user terminal capable of processing geographical location data and of transmitting messages to remote data processing devices, the terminal comprising:
   first user interface means for selecting an item of geographical location data for storage on the user terminal, said item comprising spatial coordinate data;
   a data store for storing a plurality of items selected using the first user interface means;
   second user interface means for selecting, from said plurality of stored items, one or more items of geographical location data for transmitting to a remote data processing device;
   data generation means for generating data in dependence on at least the spatial coordinate data of the selected one or more items of geographical location data; and
   data transmission means for transmitting the generated data to the remote data processing device.
35. A user terminal according to clause 34, wherein the generated data comprises a service request.
36. A user terminal according to clause 35, wherein the service request is a client-server transfer protocol request, such as an HTTP Get request or a WTP Get request.
37. A user terminal according to clause 34, wherein the generated data comprises a peer-to-peer transfer protocol message, such as an SMS message, an MMS message, an e-mail message an internet chat message, a DTMF message.
38. A user terminal according to clause 35 or clause 36, comprising a third user interface means for determining one or more characteristics of a function capable of being performed in relation to an item of geographical location data, wherein the data generation means generates the generated data in dependence on the determined one or more characteristics.
39. A user terminal according to clause 38, wherein said one or more determined characteristics include one or more of the following: a search string; a service category identifier; a supplier identifier; a user identifier; a user-allotted location name; a privacy setting; a location type identifier; a recipient identifier for said message.
40. A user terminal according to any of clauses 34 to 39, wherein the user terminal comprises means for determining a proximity relationship between the items of geographical location coordinate data and a contextual item of geographical location data, and wherein the second user interface means is adapted to present items of geographical location coordinate data in accordance with the determined proximity relationship.
41. A user terminal according to any of clauses 34 to 40, wherein the terminal includes means for associating an item of geographical location data with one or more items of additional data, stored in the user terminal, and for presenting the associated items in an associated manner via a user interface.
42. A user terminal according to clause 41, wherein the one or more items of additional data are one or more of the following: postal address data; telephone number data; e-mail address data; network resource identifier data; user-allotted geographical location name data; temporal data; geographical location type data, a photographic image or video file; a map file; an audio file; a text file; a diary or calendar event; a hypermedia file; an e-mail file; a program file; a service identifier; a supplier identity.
43. A user terminal, comprising a browser client application capable of processing geographical location data and of transmitting a service request to a remote server, the terminal comprising a data store for storing items of geographical location data, the browser client application comprising:
   user interface means for selecting an item from the data store;
   data generation means for generating service request data for sending to a remote server comprising the selected item of geographical location data; and
   data transmission means for transmitting the generated service request data to the remote server.
44. A user terminal according to clause 43, wherein the user interface means comprises a menu function native to the browser client application.
45. A user terminal according to clause 43 or 44, wherein a user interaction with the user interface determines the structure or contents of the service request data.
46. A user terminal according to any of clauses 43 to 45, wherein the service request data comprises one of one or more predetermined domain parts stored in the user terminal.
47. A user terminal according to clause 46, wherein predetermined domain part is selected in dependence on a user interaction with the user interface.
48. A user terminal according to any of clauses 43 to 47, wherein the item of geographical location data represents a current location of the user terminal.
49. A user terminal according to any of clauses 43 to 48, wherein the service request data comprises one or more of the following: a search string; a service category identifier; a supplier identifier; a user identifier; a user-allotted geographical location name; a location type, or a network resource identifier.
50. A method of a providing one or more specified items of geographical location data from a first data processing device to a remote second data processing device, the first data processing device being capable of accessing a data store for storing a plurality of items of geographical location data selected by a user, the method comprising:
   the first data processing device receiving a specification relating to geographical location data;
   the first data processing device selecting one or more items of geographical location data from the plurality in dependence on the specification;
   the first data processing device sending the selected one or more items of geographical location data to the second data processing device.
51. A method according to clause 50, wherein first data processing device determines the specification in dependence on user input via a user interface.
52. A method according to clause 50 or clause 51, wherein the plurality of items of geographical location data are associated with items of additional data and the specification identifies items of geographical location data for selection by specifying data relating to the additional data.
53. A method according to clause 52, wherein the specification defines a type of geographical location data.
54. A method according to any of clauses 50 to 53, wherein the specification includes data representing a geographical location and the selection is performed in dependence on proximity relationships between the specified geographical location and the geographical locations corresponding to the plurality of items of geographical location data stored in the data store.
55. A method according to any of clauses 50 to 54, wherein the second data processing device provides a location-based service to a user in respect of the selected one or more items of geographic location data.
56. A method according to any of clauses 50 to 55, wherein the first data processing device is a user terminal.
57. A method according to any of clauses 50 to 56, wherein the data received by the first data processing device includes a network address for the second data processing device.
58. A method of instructing the performance at a data processing device of a function in relation to one or more items of geographical location data on behalf of a user, the method comprising:
   providing at a content server data including instructions for performing a function at a remote first data processing device on behalf of an unspecified user, the function to be performed in relation to one or more items of geographical location data;
   the content server transmitting the data to a user terminal, the user terminal having access to a data item indicating an identity of a user, thereby enabling the user terminal to instruct the performance of the function in relation to one or more items of geographical location data at the first data processing device on behalf of the user.
59. A method according to clause 58, wherein the first data processing device is the user terminal.
60. A method according to clause 58, wherein the first data processing device is located in a different administrative domain to the content server.
61. A method according to any of clauses 58 to 60, wherein the data item is a cookie stored at the user terminal.
62. A method according to any of clauses 58 to 61, wherein the instructions include a network address of a second data processing device and the function is to transmit data including one or more items of geographical location data stored at the first data processing device to the second data processing device.
63. A method according to clause 62, wherein the second data processing device is a server and the transmitted data including one or more items of geographical location data is included in a service request.
64. A method according to clause 62 or 63, wherein the second data processing device is the content server.
65. A method according to any of clauses 58 to 61, wherein the data provided at the content server includes one or more items of geographical location data and the function is to store said items at the first data processing device.
66. A method according to clause 65, wherein the data provided at the content server includes additional data for storage at the first data processing device in association with the one or more items of geographical location data.
67. A method according to clause 66, wherein the additional data includes one or more of the following: postal address data; telephone number data; e-mail address data; network resource identifier data; user-allotted location name data; temporal data; geographical location type data, a photographic image or video file; a map file; an audio file; a text file; a diary or calendar event; a hypermedia file; an e-mail file; a program file; a service identifier; a supplier identity.
68. A method of providing an item of geographical location data from a first data processing device to a remote server, the server being capable of storing in a data store a plurality of items of geographical location data selected by a user, the method comprising:
   the user instructing the storage in the data store of a selected item of geographical location data, the item having initially been stored at a second data processing device;
   the server receiving the selected item of geographical location data and storing the same in the data store.
69. A method according to clause 68, wherein the first data processing device is a user terminal.
70. A method according to clause 69, wherein the item of geographical location data represents the current location of the user terminal.
71. A method according to any of clauses 68 to 70, wherein the server stores one or more items of additional data in association with the item of geographical location data.
72. A method according to clause 71, wherein the one or more items of additional data define a type of location.
73. A method according to clause 71, wherein the one or more items of additional data comprise a user-allotted location name.
74. A method according to any of clauses 68 to 73, wherein the method comprises the first data processing device sending the item of geographical location data to the server.
75. A method according to any of clauses 68 to 73, wherein the method comprises the second data processing device sending the item of geographical location data to the server.
76. A user terminal, comprising a local application capable of processing geographical location data and of transmitting a service request to a remote server, the local application comprising:
   user interface means for selecting a function to be performed in relation to an item of geographical location data to be transmitted to a remote server, the function being to associate one or more characteristics with the item of geographical location data;
   data generation means for generating service request data for sending to the remote server in dependence on the item of geographical location data and the one or more characteristics; and
   data transmission means for transmitting the generated service request data to the remote server.
77. A user terminal according to clause 76, wherein the one or more characteristics comprise a validity period for the item of geographical location data.
78. A user terminal according to clause 76 or clause 77, wherein the one or more characteristics comprise a privacy setting for the item of geographical location data.
79. A user terminal according to any of clauses 76 to 78, wherein the one or more characteristics comprise an accuracy with which the item of geographic location data is to be represented in the service request data.
80. A user terminal according to any of clauses 76 to 79, wherein the one or more characteristics comprise a user-allotted geographical location name.
81. A user terminal according to any of clauses 76 to 80, wherein the one or more characteristics comprise a location type.
82. A user terminal according to any of clauses 76 to 81, wherein the function is performed in dependence on an identity of a network resource to which the service request data is addressed.
83. A user terminal according to any of clauses 76 to 82, wherein the function is performed in dependence a characteristic of the item of geographical location data.
84. A user terminal according to any of clauses 76 to 83, wherein the one or more characteristics include an identifier of a positioning server capable of providing an item of geographical location data indicating the current position of the user terminal.
85. A user terminal, comprising a browser client application capable of processing geographical location data and of transmitting service request data to remote servers, the terminal including:
   user interface means for selecting or inputting a network resource identifier corresponding to a resource available at a remote server;
   data generation means for generating service request data to be transmitted to the remote server;
   geographical location data inclusion means for recognising a characteristic of the network resource indicating that the network resource is capable of processing geographical location data, and in response to said recognition initiating a function for including an item of geographical location data stored in the user terminal in the service request data;
   means for transmitting the service request data to the remote server.
86. A user terminal according to clause 85, wherein the service request data comprises a client-server transfer protocol request, such as an HTTP request or an WTP request.
87. A user terminal according to clause 85 or clause 86, wherein a user interaction with the user interface means determines the structure or contents of the service request data.
88. A user terminal according to any of clauses 85 to 87, wherein said recognised characteristic is a characteristic indicating that the network resource is capable of processing geographic location data of a predetermined format.
89. A user terminal according to any of clauses 85 to 88, wherein the inclusion of the geographical location data is performed in dependence on the identity of a domain part of the network resource identifier.
90. A user terminal according to clause 89, wherein the inclusion of the geographical location data is performed in dependence on the identity of a top level domain part of the network resource identifier.
91. A user terminal according to any of clauses 85 to 90, wherein the item of geographical location data represents a current location of the user terminal.
92. A user terminal according to any of clauses 85 to 91, wherein the network resource identifier is input textually by a user via the user interface means.
93. A user terminal according to any of clauses 85 to 91, wherein the network resource identifier is selected by a user via the user interface means as a hyperlink.
94. A user terminal according to any of clauses 85 to 93, wherein the service request data comprises one or more of the following: a search string; a service category identifier; a supplier identifier; a user identifier; a user-allotted geographical location name; or a network resource identifier.
95. A server arranged to process a service request received on behalf of a user of a user terminal, the server being arranged to select a remote server, to which service request data comprising data relating to one or more items of geographical location data is to be transmitted, from a plurality of remote servers in dependence on an identity associated with the user terminal or a user thereof.
96. A server according to clause 95, wherein the server is arranged to proxy or redirect the service request to the selected remote server.
97. A server according to clause 95, wherein the server is arranged to format a request containing said service request data and to transmit the request to the selected remote server.
98. A server according to any of clauses 95 to 97, wherein said server is arranged to receive said service request from a further remote server.
99. A server according to any of clauses 95 to 97, wherein said server is arranged to receive said service request from the user terminal.
100. A method of structuring a presentation of a plurality of data items to a user of a user terminal, the data items being presented via a user interface of the user terminal as a list, each of the data items being stored in the user terminal and having an associated geographical location stored in the user terminal, the presenting being performed in dependence on relationships between the associated geographical locations and a contextual geographical location.
101. A method according to clause 100, wherein the structuring changes dynamically as the contextual geographical location changes.
102. A method according to clause 100 or clause 101, wherein the contextual geographical location is selected by a user of the user terminal from a plurality of geographical location data items stored in the user terminal.
103. A method according to any of clauses 100 to 102, wherein the contextual geographical location is the current geographical location of the user terminal.
104. A method according to any of clauses 100 to 103, wherein the relationships between the associated geographical locations and the contextual geographical location are geographical proximity relationships.
105. A method according to clause 104, wherein at least part of the list is ordered in dependence on the geographical proximity relationships.
106. A method according to any of clauses 100 to 105, wherein the data items are representations of network resource identifiers.
107. A method according to clause 106, wherein the network resource identifiers are network resource identifiers for resources that have been historically accessed by the user terminal.
108. A method according to clause 106, wherein the network resource identifiers are network resource identifiers for resources that have been selected by a user as favourite resources for future access.
109. A user terminal arranged to perform the method of any of clauses 100 to 108.
110. A method of structuring a presentation of one or more representations of network resource identifiers to a user of a user terminal, the representations being presented via a user interface of the user terminal, each of the network resource identifiers being stored in the user terminal, wherein the structuring is performed on the basis of geographical location data associated with the network resource identifiers.
111. A method according to clause 110, wherein the structuring is performed in dependence on the results of parsing data elements following domain parts of the network resource identifiers.
112. A method according to clause 110 or 111, wherein the structuring is performed in dependence on the results of parsing query data elements of the network resource identifiers.
113. A method according to any of clauses 110 to 112, wherein the parsing is selectively performed in dependence on a part of the network resource identifiers.
114. A method according to clause 113, wherein the parsing is selectively performed in dependence on top level domain parts of the network resource identifiers.
115. A method according to any of clauses 110 to 114, wherein the network resource identifiers are presented as a list.
116. A method according to clause 115, wherein at least part of the list is hierarchically ordered according to the results of parsing.
117. A user terminal arranged to perform the method of any of clauses 110 to 116.
118. A method of selecting a data item for use as contextual data in a current geographical location of a user terminal when performing a data processing function at the user terminal, the user terminal selecting the data item from data items associated with a geographical location data item stored in the user terminal in response to detecting a proximity relationship between the current geographical location and the stored geographical location data item.
119. A method according to clause 118, wherein the data processing function is a function to generate a service request or a network resource identifier.
120. A method according to clause 119, wherein the generated service request or network resource identifier comprises the selected contextual data item.
121. A method according to clause 118, wherein the data processing function is a function to capture information from a user via a user interface of the user terminal.
122. A method according to clause 121, wherein the user is presented with the selected contextual data item as a suggested response to a query.
123. A method according to clause 118, wherein the data processing function is a function to present information to a user via a user interface of the user terminal.
124. A user terminal arranged to perform the method of any of clauses 118 to 123.
125. A client browser application for a user terminal, the browser being capable of recognising top level domain name parts of a network resource identifier, said browser being arranged to handle a network resource identifier in which a predetermined top level domain name part is recognised differently from a network resource identifier in which the top level domain name part is not recognised.
126. A client browser according to clause 125, wherein the browser application is adapted to selectively add data stored in the user terminal to a service request message addressed to the network resource.
127. A client browser according to clause 125, wherein the added data is an item of geographical location data.
128. A service processing node adapted to recognise geographical location data in the format generated by the user terminal of any preceding apparatus clause and to generate location-based responses to service request messages generated by the user terminal.
129. A service processing node according to clause 128, comprising an SMS service entity, an IVR service engine and/or an internet content server.
130. A user terminal comprising a user interface, said terminal being capable of processing geographical location data and of performing functions in relation to an item of geographical location data, said user terminal including:
   a data store for storing a plurality of items of geographical location data;
   means for selecting a first one of said items as a current contextual item and for performing a selected function in relation thereto;
   means for storing functional data indicating one or more characteristics of the function performed;
   means for selecting a different second one of said plurality of items as a current contextual item; and
   user interface means for presenting an identifier for said stored functional data in association with said first item, when said first item is subsequently selected as a current contextual item.
131. A method of recognising an item of geographical location data received by a data processing device, the method comprising the data processing device recognising one of one or more predetermined characteristics of a network resource identifier associated with the item of geographical location data.
132. A method according to clause 131, wherein the recognised characteristic comprises a domain name part of the network resource identifier.
133. A method according to clause 131, wherein the recognised characteristic is a top level domain name part of the network resource identifier.
134. A computer program module enabling a user terminal to perform any of the methods of any of the preceding method clauses or adapting a user terminal to provide a user terminal according to any preceding apparatus clause.
135. A location registration system for registering names representing geographical locations and geographical location data corresponding thereto, said system comprising means for accessing a geographical location name store holding registered names representing geographical locations, means for the input of potential names representing geographical locations from users, means for querying said geographical location name store for a conflict with a previously registered name, and means for selectively registering a new name representing a geographical location and geographical location data corresponding thereto if no conflict is found in said geographical location name store.
136. A content server for use with a location registration system according to clause 135, wherein said server is adapted to respond to geographical location queries containing a registered name received via a public data communications network.
137. A method of registering a name representing a geographical location and geographical location data corresponding thereto from a user terminal, said method comprising accessing a location registration system having access to a geographical location name store holding registered names representing geographical locations, inputting potential names representing geographical locations from the user terminal, receiving from said registration system an indication of whether or not there is a conflict with a previously registered name, and registering a new name representing a geographical location and geographical location data corresponding thereto if no conflict is found in said geographical location name store.
138. A method of accessing location-based content from a client terminal, the method comprising said terminal receiving a registered identifier for a location from a user by user input, said terminal generating a service request comprising said registered identifier, and said terminal receiving location-based content for a geographical location associated with said registered identifier by a remote server having access to a registered name location data store.
139. A server arranged to receive a service request from a user terminal, in response thereto to obtain geographical location data for the user terminal from a location server or positioning entity, and in response thereto to proxy or redirect the service request to a remote server for processing.
140. A server according to clause 139, arranged to add the geographical location data to the proxied or redirected service request.
141. A server according to clauses 139 and 140, wherein the service request comprises a user identifier or a user terminal identifier and the server sends a location request to the location server or positioning entity for obtaining the position of an identified user or user terminal.
142. A server according to any of clauses 139 to 141, wherein the service request is a client-server transfer protocol request, such as an HTTP Get request or a WTP Get request.
143. A method, apparatus or system according to any preceding clause, wherein the geographical location data is derived from a geographical positioning system in which the position of a user terminal is determined.
144. A method, apparatus or system according to any preceding clause, wherein the geographical location data comprises spatial coordinate data.
145. A method, apparatus or system according to any preceding clause, wherein the geographical location data includes a first item of geographical location data representing a journey start point and a second item of geographical location data representing a journey end point.
146. A method, apparatus or system according to any preceding clause, wherein the geographical location data includes a latitude and a longitude co-ordinate, one or both of which may be represented in a compacted format.
147. A method, apparatus or system according to any preceding clause, wherein data associated with an item of geographical location data includes a time-stamp corresponding to a time of measurement of the item of geographical location data.
148. A method, apparatus or system according to any preceding clause, wherein data associated with an item of geographical location data includes a validity period for the item of geographical location data.
149. A method, apparatus or system according to any preceding clause, wherein data associated with an item of geographical location data includes a user selected name for the item of geographical location data.
150. A method, apparatus or system according to any preceding clause, wherein data associated with an item of geographical location data includes any of the following data items corresponding to the geographical location: a postal address, a fixed or mobile telephone number, an e-mail address; or a website address.
151. A method, apparatus or system according to any preceding clause, wherein said geographical location data comprises a parameter indicating a spatial extent of a characteristic of a location identified in said geographical location data.
152. A method, apparatus or system according to any preceding clause, wherein said geographical location data is presented in a format specific to location data, such as a location list or a map.

## Claims

1. A user terminal, comprising a browser client application capable of processing geographical location data and of transmitting service request data to remote servers, the terminal including:
user interface means for selecting or inputting a network resource identifier corresponding to a network resource available at a remote server;
geographical location data inclusion means for recognising, within the network resource identifier, a code indicating that the network resource is capable of processing geographical location data, and in response to said recognition initiating a function for including an item of geographical location data stored in the user terminal in service request data;
data generation means arranged to generate said service request data that is to be transmitted to the remote server at which the network resource is available, wherein said service request data includes said item of geographical location data;
means for transmitting the service request data that includes said item of geographical location data to the remote server.

2. A user terminal according to claim 1, wherein the service request data comprises a client-server transfer protocol request, such as a Hypertext Transfer Protocol, HTTP, request or a Wireless Application Protocol Transfer Protocol, WTP, request.

3. A user terminal according to claim 1 or claim 2, wherein a user interaction with the user interface means determines the structure or contents of the service request data.

4. A user terminal according to claim 1 to 3, wherein the geographical location data inclusion means is arranged to recognise a top level domain part of the network resource identifier.

5. A user terminal according to any of claims 1 to 4, wherein the item of geographical location data represents a current location of the user terminal.

6. A user terminal according to any of claims 1 to 5, wherein the network resource identifier is input textually by a user via the user interface means.

7. A user terminal according to any of claims 1 to 5, wherein the network resource identifier is selected by a user via the user interface means as a hyperlink.

8. A user terminal according to any of claims 1 to 7, wherein the service request data comprises one or more of the following: a search string; a service category identifier; a supplier identifier; a user identifier; a user-allotted geographical location name; or a network resource identifier.

## Patentansprüche

1. Benutzerendgerät mit einer Browser-Client-Anwendung, die in der Lage ist, geografische Standortdaten zu verarbeiten und Dienstanforderungsdaten an entfernt angeordnete Server zu übertragen, wobei das Endgerät beinhaltet:
eine Benutzeroberflächeneinrichtung zum Auswählen oder Eingeben einer Netzwerkressourcenkennung, die einer auf einem entfernt angeordneten Server verfügbaren Netzwerkressource entspricht;
eine Einrichtung zum Aufnehmen von geografischen Standortdaten zum Erkennen eines Codes in der Netzwerkressourcenkennung, der angibt, dass die Netzwerkressource in der Lage ist, geografische Standortdaten zu verarbeiten, und zum Auslösen einer Funktion zum Aufnehmen eines Elements der in dem Benutzerendgerät gespeicherten geografischen Standortdaten in die Dienstanforderungsdaten in Reaktion auf die Erkennung;
eine Datenerzeugungseinrichtung, die dazu ausgebildet ist, die Dienstanforderungsdaten zu erzeugen, die an den entfernt angeordneten Server zu übertragen sind, auf dem die Netzwerkressource verfügbar ist, wobei die Dienstanforderungsdaten das Element der geografischen Standortdaten beinhalten;
eine Einrichtung zum Übertragen der Dienstanforderungsdaten, die das Element der geografischen Standortdaten beinhalten, an den entfernt angeordneten Server.

2. Benutzerendgerät nach Anspruch 1, wobei die Dienstanforderungsdaten eine Anforderung eines Client-Server-Übertragungsprotokolls wie zum Beispiel eine Anforderung eines Hypertext Transfer Protocol, HTTP, oder eine Anforderung eines Wireless Application Protocol Transfer Protocol, WTP, aufweisen.

3. Benutzerendgerät nach Anspruch 1 oder Anspruch 2, wobei eine Benutzerinteraktion mit der Benutzeroberflächeneinrichtung die Struktur oder den Inhalt der Dienstanforderungsdaten bestimmt.

4. Benutzerendgerät nach Anspruch 1 bis 3, wobei die Einrichtung zum Aufnehmen von geografischen Standortdaten dazu ausgebildet ist, einen Top-Level-Domain-Teil der Netzwerkressourcenkennung zu erkennen.

5. Benutzerendgerät nach einem beliebigen der Ansprüche 1 bis 4, wobei das Element der geografischen Standortdaten einen aktuellen Standort des Benutzerendgeräts darstellt.

6. Benutzerendgerät nach einem beliebigen der Ansprüche 1 bis 5, wobei die Netzwerkressourcenkennung durch einen Benutzer als Text über die Benutzeroberflächeneinrichtung eingegeben wird.

7. Benutzerendgerät nach einem beliebigen der Ansprüche 1 bis 5, wobei die Netzwerkressourcenkennung durch einen Benutzer über die Benutzeroberflächeneinrichtung als Hyperlink ausgewählt wird.

8. Benutzerendgerät nach einem beliebigen der Ansprüche 1 bis 7, wobei die Dienstanforderungsdaten eines oder mehreres des Folgenden aufweist: eine Suchzeichenfolge; eine Dienstkategoriekennung; eine Anbieterkennung; eine Benutzerkennung; einen durch den Benutzer zugewiesenen Namen des geografischen Standorts; oder eine Netzwerkressourcenkennung.

## Revendications

1. Terminal d'utilisateur, comprenant une application client de navigateur capable de traiter des données de localisation géographique et de transmettre des données de demande de service à des serveurs distants, le terminal incluant :
un moyen d'interface utilisateur pour sélectionner ou entrer un identifiant de ressource de réseau correspondant à une ressource de réseau disponible au niveau d'un serveur distant ;
un moyen d'inclusion de données de localisation géographique pour reconnaître, à l'intérieur de l'identifiant de ressource de réseau, un code indiquant que la ressource de réseau est capable de traiter des données de localisation géographique et, en réponse à ladite reconnaissance, lancer une fonction pour inclure un élément de données de localisation géographique, stocké dans le terminal d'utilisateur, dans des données de demande de service ;
un moyen de génération de données agencé pour générer lesdites données de demande de service qui doivent être transmises au serveur distant au niveau duquel la ressource de réseau est disponible, dans lequel lesdites données de demande de service incluent ledit élément de données de localisation géographique ;
un moyen pour transmettre les données de demande de service, qui incluent ledit élément de données de localisation géographique, au serveur distant.

2. Terminal d'utilisateur selon la revendication 1, dans lequel les données de demande de service comprennent une demande de protocole de transfert client-serveur, telle qu'une demande de protocole de transfert hypertexte, HTTP, ou une demande de protocole de transfert de protocole d'application sans fil, WTP.

3. Terminal d'utilisateur selon la revendication 1 ou la revendication 2, dans lequel une interaction d'utilisateur avec le moyen d'interface utilisateur détermine la structure ou des contenus des données de demande de service.

4. Terminal d'utilisateur selon les revendications 1 à 3, dans lequel le moyen d'inclusion de données de localisation géographique est agencé pour reconnaître une partie de domaine de niveau supérieur de l'identifiant de ressource de réseau.

5. Terminal d'utilisateur selon l'une quelconque des revendications 1 à 4, dans lequel l'élément de données de localisation géographique représente une localisation actuelle du terminal d'utilisateur.

6. Terminal d'utilisateur selon l'une quelconque des revendications 1 à 5, dans lequel l'identifiant de ressource de réseau est entré sous forme de texte par un utilisateur via le moyen d'interface utilisateur.

7. Terminal d'utilisateur selon l'une quelconque des revendications 1 à 5, dans lequel l'identifiant de ressource de réseau est sélectionné par un utilisateur via le moyen d'interface utilisateur en tant qu'hyperlien.

8. Terminal d'utilisateur selon l'une quelconque des revendications 1 à 7, dans lequel les données de demande de service comprennent un ou plusieurs de ce qui suit : une chaîne de recherche ; un identifiant de catégorie de services ; un identifiant de fournisseur ; un identifiant d'utilisateur ; un nom de localisation géographique attribué à un utilisateur ; ou un identifiant de ressource de réseau.
